# EUROPEAN PATENT APPLICATION

(11) **EP 4 559 985 A1**
(43) Date of publication of application: **28.05.2025**
(21) Application number: 23857244.0
(22) Date of filing: 14.08.2023
(51) Int. Cl.: C09D 133/00, C09D 5/02, C09D 7/40, C09D 7/63, C10M 129/26, C10M 129/40, C10M 129/44, F16L 15/04, C10N 10/02, C10N 10/04, C10N 20/06, C10N 30/06, C10N 40/00, C10N 50/02

(54) **CHEMICAL AGENT FOR FORMING SOLID LUBRICATION COATING, CHEMICAL AGENT PRODUCTION METHOD, CHEMICAL AGENT APPLICATION METHOD, OIL WELL PIPE, AND OIL WELL PIPE SCREW JOINT**

(30) Priority: 25.08.2022 JP 2022134375
(71) Applicant: JFE Steel Corporation, Tokyo 100-0011 (JP); Toyo Drilube Co., Ltd., Tokyo 155-0032 (JP)
(72) Inventor: ISHIGURO Yasuhide, Tokyo 100-0011 (JP); GOTO Seigo, Tokyo 100-0011 (JP); KOGA Takashi, Tokyo 100-0011 (JP); KAWAI Takamasa, Tokyo 100-0011 (JP); OZAKI Seiji, Tokyo 100-0011 (JP); SATO Hideo, Tokyo 100-0011 (JP); FUJIMOTO Sachiko, Tokyo 100-0011 (JP); TAKANO Jun, Tokyo 100-0011 (JP); OKUBO Akira, Tokyo 155-0032 (JP); SHODA Koichi, Tokyo 155-0032 (JP); KOBAYASHI Ryota, Tokyo 155-0032 (JP); KUBO Ryota, Tokyo 155-0032 (JP); TOYOSAWA Kota, Tokyo 155-0032 (JP)
(74) Representative: Haseltine Lake Kempner LLP
(86) International application number: PCT/JP2023/029433
(87) International publication number: WO 2024/043131

(57) **Abstract**

Provided are an environmentally friendly chemical agent and a solid lubrication coating film. The chemical agent is used to form a solid lubrication coating film on a metal surface. The chemical agent contains a solid lubricant, a binder resin, and a solvent, as main components. The solvent contains water as a main component and a lower alcohol having three or fewer carbon atoms which is added as an additive to the water, and the additive has a volume of 0.5 or more and 45 or less in terms of 100 set as a volume of the water. The water and the additive account for 95% or more of the volume of the solvent. As the solid lubricant, at least a metal soap is contained, and a metal soap component accounts for 95% or more of a sum of total weights of metal soap and alkaline soap components. A condition that a particle size of the metal soap does not exceed a film thickness of the solid lubrication coating film is set. The binder resin is composed of a water-soluble or water-dispersible polymer and a copolymer, and a polymer having an acrylate or methacrylate structure and the copolymer account for 90% or more of a total weight of the binder resin.

## Description

### Technical Field

This disclosure relates to a chemical agent for forming a solid lubrication coating film that imparts lubricity and corrosion resistance to a metal surface, and a technology using the chemical agent. In addition, this disclosure also relates to a chemical agent capable of simultaneously achieving improvement in lubrication and rust prevention of two sliding objects formed of metal surfaces, and a solid lubrication coating film which is realized by the chemical agent. This disclosure mainly relates to a solid lubrication coating film intended for lubrication and rust prevention of a connection for oil country tubular goods. In addition, this disclosure is intended to achieve sufficient lubrication and rust prevention in a use environment simultaneously even under make-up/break-out conditions in an actual well. In addition, this disclosure is also intended to enable early drying to be performed when a film is formed, including undisturbed drying in the atmosphere, air blower drying, hot-air blower drying, infrared irradiation, ultraviolet irradiation, and heat treatment.

At the same time, a case of a problem in a well or workover is considered. Accordingly, a case where actual length pins are taken out one by one or in units of 2 or 3 pins and collected near a well is considered. Further, in a land well, for example, the actual length pins are taken out one by one. In an offshore well, for example, the actual length pins are taken out in units of 2 or 3 pins. In that case, the oil country tubular goods are arranged side by side and cleaned. At that time, this disclosure is also intended to be utilized as a chemical agent which is applied to a thread surface for the purpose of protection for rust prevention and as a coating film which is formed thereby.

### Background Art

Examples of technologies close to this disclosure include technologies described in PTLs 1 to 3.

PTL 1 exemplifies an example of a threaded joint for a steel pipe having an acrylic silicone surface layer film on a surface layer, the surface layer film being mainly made of an ultraviolet curable resin film. PTL 1 exemplifies an epoxy acrylic resin as an ultraviolet curable resin and an example in which an oily resin or an aqueous resin may be used but clearly describes that an oily resin is preferable. That is, an aqueous resin is not actively employed. In addition, PTL 1 exemplifies a quick-drying lacquer-based film as an acrylic silicone surface layer film and a case of including a metal soap for solid lubrication.

PTL 2 describes an example of a threaded joint for oil country tubular goods further having a dry solid film which is formed on a viscous liquid or semi-solid lubrication coating film. PTL 2 exemplifies that either a water-soluble or water-dispersible polymer compound or an organic solvent-based composition is formed in a dry lubrication film. PTL 2 exemplifies an example in which a metal soap is used in a viscous liquid or semi-solid lubrication coating film. However, PTL 2 represents an example in which a metal soap is added as a thickener. Further, in PTL 2, the metal soap is not intended to function as a solid lubricant.

PTL 3 defines a lubrication coating film containing one or both of rosin and calcium fluoride, a metal soap, a wax, and a basic aromatic organic-acid metal salt. Among optional additive components, a thermoplastic resin is exemplified, and an acrylic resin is exemplified. An example of using a volatile organic solvent is included.

In addition, as technologies provided in consideration of a make-up in an actual well in the related art, there are, for example, PTLs 4 and 5, NPL 1, and the like.

PTL 4 describes that a test is performed at an angle of 6 degrees as an initial set using a short pin having a size of 7" using a vertical power tong by assuming misalignment.

PTL 5 represents an example in which misalignment was tested and evaluated at 5 degrees using a vertical power tong and a short pin having a size of 9-5/8".

NPL 1 is a paper in which lubrication is evaluated using a vertical power tong. Accordingly, NPL 1 describes that a weight of 5 kN is applied to a front end on an opposite side to a make-up side of a short pin, that is, an upper end portion of the pin when the pin is erected and made up.

### Citation List

### Patent Literature

PTL 1: JP 2016-028211 A
PTL 2: JP 2008-537062 A
PTL 3: JP 2009 057754 A
PTL 4: JP 2002-327874 A
PTL 5: WO 2017/110685

### Non Patent Literature

NPL 1: Tsuru et al., Journal of the Japanese Association for Petroleum Technology, Vol. 61, No. 6 (1996) pp. 527 to 536.
NPL 2: KAWAMURA KASEI INDUSTRY CO., LTD., Solubility of Metal Soap, on Internet <https://www.kawamura-kasei.co.jp/solubility_table.html>

### Summary of Invention

### Technical Problem

This disclosure relates to a chemical agent that simultaneously achieves improvement in lubrication of two sliding objects and rust prevention, and a solid lubrication coating film achieved by the chemical agent. This disclosure is mainly intended for a solid lubrication coating film intended for lubrication and rust prevention of a connection for oil country tubular goods. This disclosure is intended to achieve sufficient lubrication and rust prevention in a use environment simultaneously even under make-up/break-out conditions in an actual well. In order to achieve the lubrication and the rust prevention, this disclosure relates to a chemical agent in which a component based on a metal soap as a solid lubricant is contained in a water-soluble or water-dispersible polymer. This disclosure also relates to a solid lubrication coating film formed using the chemical agent. Further, the water-soluble or water-dispersible polymer is an aqueous polymer.

The aqueous polymer referred to herein refers to a polymer having hydrophilicity by containing a polar or charged functional group in a structure of the polymer. For example, the aqueous polymer refers to a polymer containing a carboxy group, an amine functional group, a sulfonic acid, or the like in a main chain or a side chain.

On the other hand, the related art has the following problems.
(1) There has been no idea of a technology of mixing a metal soap with a solvent composed of water in an aqueous polymer without using oil, ether, or a chemical agent group of volatile organic compounds (VOC) which are also called thinners.
   In the related art, there has been no idea of how to make a metal soap which is inherently considered to be insoluble in water and in alcohol and how to make the metal soap opacify when mixed into aqueous acryl.
(2) When an alkaline soap is added to the aqueous polymer, the soap is soluble in water. Therefore, when the alkaline soap is added to the aqueous polymer, conversely, water which is a solvent conversely tends to be in a gelated state with high viscosity. In the related art, no examination thereof related to oil country tubular goods has been performed.
(3) In a case of a chemical agent using an aqueous polymer and a solvent composed of water, there is a problem of great concern of a long time being taken for drying.

Here, regarding a solvent other than water, it is necessary to avoid volatile organic solvents of xylene, toluene, benzene, and the like. These substances cannot be used in a fire-prohibited environment, and at the same time, it is necessary to consider the safety and health of workers, including construction of drafts and the like. Therefore, it is preferable to avoid the use of a chemical agent group of volatile organic compounds (VOC) which are also called thinners. Method exemplified in PTLs 1 to 3 are technologies using a highly volatile VOC and do not reflect a fire-prohibited environment as used at a well site. In this respect, it is not possible to cope with oil country tubular goods.

In addition, for early drying or quick drying, it is conceivable to use a fluorine-based solvent or a fluorine-based binder resin that is highly volatile but nonflammable. However, the substances are substantially impossible to use. In the U.S. Toxic Substances Control Act (TSCA), since the revision of the rules at the end of April 2021, a set of chemical agents containing PFAS cannot be used retroactively even with past permissions. PFAS refers to a fluorine-containing acrylic group including PFOS, PFOA. In addition, in response to a recent increase in environmental awareness, there is a possibility that every country will follow this trend. Hence, although an aqueous polymer cannot be dried as quickly as it is applied, by a method using a substance other than fluorine-based chemicals or VOA, it is preferable to impart an ability to dry within 30 minutes in an environment where a drying target is left at room temperature. The early drying performance refers to a degree of drying preferably within 15 minutes, more preferably within 5 minutes. In addition, near an oil/gas drilling site, there is an extreme situation like a fire-prohibited environment. It is necessary to assume an environment in which a drying target is only left in the atmosphere without using either a heat treatment furnace or electricity. Therefore, it is not possible to assume performing a process of blowing off a solvent by heat treatment at about 50 to 300°C at a well site. This means that the ultraviolet curable resin described in PTL 1 also needs a device capable of radiating ultraviolet rays at a well site. Consequently, it is necessary to provide a device capable of performing the drying and equipment which is electrically connected, and thus PTL 1 is considered to have a low likelihood of realization.

A factory that produces a product with a solid lubrication coating film on a surface thereof is not a fire-prohibited environment like a well site. In this case, it is easy to prepare blowing equipment such as a large fan, a hot air drying device, a heat treatment, and drying enhancement equipment using infrared light, ultraviolet light, or the like. In a case of drying with such a device intended to promote drying, drying is performed preferably within 5 minutes, desirably within 3 minutes, and more desirably within 1 minute. In order to be able to cope with drying without loosening a line speed of the related art, it is necessary to dry within the takt time of a manufacturing line.

(4) In order to cope with a recent increase in environmental awareness, a problem arises in that it is necessary to perform design so as not to use a set of chemical agents including heavy metals and PFAS. However, it is considered that this is naturally solved when the above problem is solved.
(5) When the inventors have evaluated whether or not the lubrication performance is exhibited with the solid lubrication coating film and the chemical agent of this disclosure by an evaluation method suitable for an environment used in an actual well, it has been found that it is important to set upper and lower limits of parameters.

That is, in a laboratory evaluation using a short pin having a length of about 1 m in the related art, a problem arises in that an evaluation method does not conform to actual use conditions.

For example, as in the methods disclosed in PTLs 4 and 5, even in a make-up test using a short pin by setting misalignment by five degrees or six degrees, parameters at a fail level are likely to be erroneously determined as a pass. As a result, the methods disclosed in PTLs 4 and 5 have a problem that upper and lower limit definitions of parameters are not supported. In fact, a case where a make-up/break-out test is performed using a short pin by applying misalignment of five degrees or six degrees is considered. In this case, an inclination of a pin connection is defined mechanically at an imperfect thread portion of a box connection and a tapered part of a front end portion of the pin connection. Therefore, it is difficult to insert even by setting an inclination at five degrees or six degrees due to a structure of the threads. A connection for oil country tubular goods has a tapered threaded structure, and a taper angle is approximately formed at a level of such inclination. However, structurally, it is absolutely impossible for a pin to tilt at this angle with respect to a coupling.

However, the threads can be only placed without meshing. However, this is not related to lubrication behavior. The very initial set position is only different for a moment, and then the make-up is only performed along a thread taper.

In addition, the pin connection needs to be inserted and set along the taper of the thread. Accordingly, an inclination has to occur due to a backlash between the crests, which occurs during insertion. When the pin connection is inserted into the box connection, it is structurally difficult to continuously set an inclination at about 5 degrees. It is estimated that only an inclination of about 1 to 2 degrees can be set via the backlash between the crests. Practically, even from that state, when the threads mesh with each other, the pin connection immediately rises upright. Consequently, it is estimated that when the threads hardly mesh with each other, the damage of the solid lubrication coating film is small by the inclination of about 5 degrees, and the actual well condition cannot be simulated.

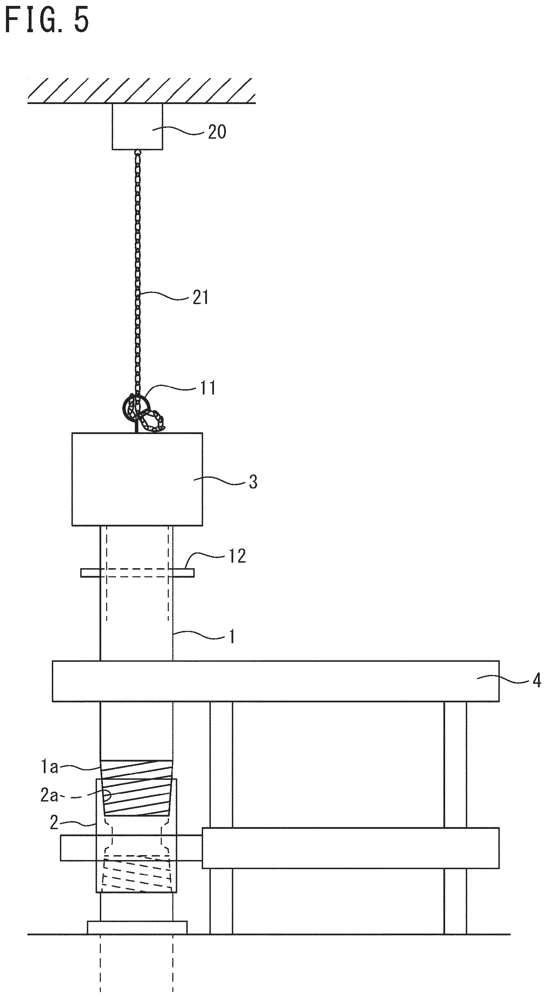

In addition, a method in which a weight of 500 kN is applied to a pin connection and a load equivalent to one actual pin is applied as described in NPL 1 also has a problem in evaluation. The initial set position, which will be described in detail in the following embodiments of the invention below, is important for imitating a simulation of the rattling of a pin connection of an actual well. In NPL 1, as supported from FIG. 5, when the pin is made up to a position where the pin can be made up by about a half turn by hand, conversely, the weight becomes a balancer, and the make-up is performed in an ideal pin state. Therefore, it is not possible to simulate a severe situation in which the pin connection is made up and broken out with rattling based on slight bending of a long pin in an elastic region at the actual well. The severe situation is, for example, a situation similar to an actual well.

Here, the inventors have found that unless the initial setting position of the pin connection is intentionally set as follows and make-up/break-out is performed, it is not possible to estimate a result suitable for the actual situation of the actual well or a simulated well. The setting is a setting in which the pin connection is located at a position at which the pin connection is exposed from the box connection, and a weight equivalent to one to three actual size pins is applied on a pin end portion.

Here, it is necessary to pay attention to the fact that the lubrication evaluation of the solid lubrication coating film tends to deviate from a result at an actual well in an evaluation result with a simple short pin, unlike lubrication using a viscous liquid-like conventional compound. Specifically, the evaluation result is too good. That is, even an evaluation of a pass in a test with a short pin does not mean a pass at an actual well. Therefore, it has been found that in a case of a solid lubrication coating film, unless lubrication is strictly evaluated, the definition of upper and lower limits of parameters does not support lubrication that can withstand the environment at a well.

This disclosure has been made focusing on the above-described problems. Accordingly, objects of this disclosure are to provide an environmentally friendly chemical agent, and a solid lubrication coating film having the lubrication performance that can withstand use at an actual well, even when the chemical agent contains a water-soluble or water-dispersible polymer as a binder resin, a solid lubricant containing a metal soap as a main component, and an aqueous solvent.

### Solution to Problem

In recent years, regarding lubrication of a connection for oil country tubular goods, there is a tendency that components of a chemical agent or a lubrication film usable as a chemical agent are limited due to an increase in environmental awareness.

In the related art, lubrication of connection for oil country tubular goods has been achieved by, for example, a combination of lubrication compounds containing harmful heavy metals and surface treatments on a box connection side. Further, the surface treatment is performed with an Mn phosphate base or an electroplating layer. However, API-mod compounds that are generally used, that is, wet lubricants, are already difficult to use in areas and regions where environmental awareness is high. Specifically, the API-mod compound contains harmful heavy metals such as Pb and Zn as a main component. Therefore, during a make-up, harmful heavy metals may be washed away or overflowed to outside, resulting in contamination of the sea.

In this disclosure, a solid lubrication coating film is employed instead of these lubrication compounds. Moreover, in this disclosure, a water-soluble or water-dispersible polymer is employed as the binder resin of the solid lubrication coating film. In this manner, this disclosure is intended to avoid a problem of outflow of harmful heavy metals.

In the first place, in the chemical agent for forming a solid lubrication coating film, which is the target of the present application, the solvent is water, and it is considered that water itself causes no problem in terms of environmental resistance. The binder resin and the solid lubricant may satisfy the international regulations and rules of the chemical agent system. Consequently, in order to simultaneously achieve the HSE and at the same time ensure safety and health of workers, replacing the conventional lubrication of the connection for oil country tubular goods with the solid lubrication coating film is also effective in solving the HSE problem. HSE stands for hygiene, safety, and environment.

Regarding a wet compound used in the conventional lubrication method, in many cases, a compound used during lubrication is different from a compound used during storage.

A technology of replacing a wet compound-based lubrication method with a solid lubrication coating film should be completed to be a dry-type film, that is, a dry film also for rust prevention during storage. In addition, it is not so preferable to use a conventional wet compound for rust prevention and protection of the pin connection except for an emergency.

That is, it is considered that the solid lubrication coating film is preferably designed as a coating film having rust prevention property during storage as well as a lubrication film.

Moreover, it should be noted that the technologies used in the related art are both a lubrication compound and a corrosion-resistant compound as viscous liquid compounds. Therefore, these compounds function in a wet state. That is, regarding the wet compound, there is no need to consider the drying time.

On the other hand, the solid lubrication coating film is a dry film and functions in a dry state. Hence, when the solid lubrication coating film is formed, it is necessary to design a chemical agent including the work of evaporating the solvent from the applied chemical agent to form a film and the time required for the work.

Here, a technology of designing a dry soft polymer-based resin film using a chemical agent containing a water-soluble or water-dispersible polymer as a matrix component, particularly a technology of using the film for surface lubrication of a threaded joint for oil country tubular goods has been known in the related art. In addition, regarding solid lubricants, a technology of using a metal soap as a main component to achieve high lubrication has been known in the related art.

However, a resin obtained by dispersing a metal soap as a main component of a solid lubricant in a dry soft polymer-based resin film formed using a simple water-soluble or water-dispersible polymer corresponding to a combination thereof is not known. Further, the polymer-based resin film is a matrix component.

On the premise that no oil or thinner is mixed, it has been considered that it is difficult to add a water-repellent and water-insoluble metal soap to an aqueous solvent as a simple substance in the related art. It cannot be reported that there is no idea of using a metal soap as a solid lubricant in an aqueous simple solvent, but it is difficult to achieve the idea under the conditions targeted by this disclosure. The metal soap has water repellency and just floats to a surface without being not dispersed and dissolved even when an attempt is made to mix the metal soap with water.

This disclosure relates to a design in which a water-soluble or water-dispersible polymer is used to form a dry soft polymer-based resin film, and a solid lubricant is dispersed and distributed in the film. Moreover, in this disclosure, a metal soap is positioned as a main component of the solid lubricant.

The metal soap itself has water repellency and is insoluble in water. At the same time, the metal soap itself is considered to be insoluble in an alcohol group. A substance in which the metal soap itself is considered to be slightly soluble is a chemical agent group of volatile organic compounds (VOC) which are also called thinners. However, these chemical agents are often considered to be harmful to health and are often widely referred to as a thinner. However, the chemical agents are chemical agents classified into toluene, xylene, benzene, a VOC group belonging to mineral spirits, an ether group, and oil that is widely referred to as mineral oil. These pieces of information are well-known information which is widely known.

However, in the related art, the metal soap itself has been considered not to be easily mixed directly with an aqueous polymer. Therefore, in the related art, the metal soap is dissolved in the VOC mentioned above and then opacified in a solvent composed of water as a main component. A method of using a thinner or the like is described in, for example, PTLs 1 to 3. However, as will be described below, there is a high possibility that the method cannot be used in consideration of workers' safety and environment, consideration of the environment, and further, in a fire-prohibited place as seen at an oil/gas drilling environment.

This disclosure also assumes a case where an alkaline soap is also dispersed. Here, the alkaline soap is a soap of any one or both of an Na salt and a K salt of a fatty acid. Hereinafter, the alkaline soap is also simply referred to as soap. In this disclosure, it is also assumed that a trace amount of alkaline soap is used to assist or reinforce lubrication. To reiterate, this disclosure provides a design of dispersing and distributing a solid lubricant in a film in a state where a water-soluble or water-dispersible polymer is a dry soft polymer-based resin film.

Unlike the metal soap, the soap is, conversely, soluble in water. Therefore, the alkaline soap has a disadvantage that it is difficult to use for the chemical agent and the solid lubrication coating film considered by this disclosure. In addition, few application examples have been found in the related art. When the aqueous polymer is designed by adding a certain amount of alkaline soap, the entire liquid is gelled and solidified. As a result, the fluidity peculiar to the water system increases. That is, characteristics that are easy to apply disappear, and early drying tends to be difficult.

On the other hand, in the world, many soap-based lubricants used in a water-wet state are commercially available even for industrial use. However, this is obtained by utilizing lubrication in a hard gelated state without drying. Hence, this is different from this disclosure in the system of technology.

As described above, in the related art, an aqueous polymer refers to a polymer in which a solvent is water, and in the case of forming a film, it is necessary to dry and remove the water component. The aqueous polymer is a water-soluble or water-dispersible polymer. The aqueous polymer heats an applied object because the solvent is water. Conversely, there is also a method in which a target position to be coated is warmed before coating. In any case, when there is no process of promoting volatilization and evaporation of water, the applied product is retained in the production factory until the product is dried. This significantly reduces production efficiency. That is, in a case of drying by being left in the atmosphere, a long drying time is taken, and there is need to secure a drying place. Consequently, unless a measure is taken to dry the aqueous polymer early, the production efficiency decreases, and as a result, the production costs increase. That is, a drying device and a heat treatment furnace are required in a case where early drying is performed by a device. However, this leads to an increase in installation cost and running cost.

On the other hand, in order to dry the aqueous polymer early, a technology is also known in which a volatile organic solvent is added, and a film is formed by good use of volatile heat of the volatile organic solvent, in the related art. PTL 1 describes that because an acrylic silicone surface layer film forms a dry coating film at a relatively low temperature in a short time, an oil-based surface layer film may be selected, and particularly preferably an ambient-temperature curing-type film may be used. That is, PTL 1 represents an example of attempting early drying by utilizing volatilization of an oily solvent without selecting an aqueous solvent.

In addition, PTL 2 exemplifies only water-based film, water- and volatile organic solvent-based film, and a film using an ultraviolet curable resin. Of the three films, the latter two films can be early dried. However, with the first only water-based polymer, water needs to be evaporated by a certain method. However, PTL 2 does not clearly describe the method.

In addition, PTL 3 discloses a measure for accelerating a drying time by using a volatile solvent and a chemical agent having a flash point of 30°C or higher. However, in a case where the flash point is about 30°C, if a risk factor such as a spark is present in a hot area such as a hot desert area, there is a high concern that ignition will occur at a well site. Additionally, even when processing is performed in a workshop slightly away from a well, a concern of ignition cannot be denied. In this respect, a material having a low flash point has a problem of a high risk of fire and other accidents unless the material is used in a sufficiently controlled environment. That is, how safely and early drying is performed is still an issue. The material having a low flash point is a material that is likely to catch fire.

On the other hand, this disclosure includes, as the solid lubrication coating film, a solid lubrication coating film based on a water-soluble or water-dispersible polymer.

In order to accelerate drying of the aqueous solvent, a method of utilizing the volatility of a chemical agent group of volatile organic compounds (VOC) which are also called thinners can be considered. However, in consideration of VOC emission control rules and in order to prevent workers from being placed in a dirty environment, the inventors have determined that an organic solvent such as toluene, xylene, or benzene should be avoided from being used even though the organic solvent has high volatility and is effective for early drying. Even though an exhaust device is prepared, there is a possibility that large-scale investment in equipment will be made. In addition, in forming a solid lubrication coating film, a volatile organic solvent harmful to the human body is not used in the chemical agent. Hence, the inventors have determined that a chemical agent group of volatile organic compounds (VOC) which are also called thinners, is harmful to health, and has too high volatility cannot be used for early drying.

In addition, recently, a fluorine-based solvent that originally has a quick-drying property and a fluorine-based resin that can be dissolved in the fluorine-based solvent to form a binder resin component of a coating material tends not to be used. The fluorine-based solvent is a chlorofluorocarbon alternative material or the like.

In the related art, the fluorine-based compound has a quick drying property to dry immediately after being applied and is good in lubrication and corrosion prevention, thus having been mainly used for the surface treatment. However, due to recent rule strengthening, fluorine-based compounds have become unusable. In the Toxic Substances Control Act (TSCA) of the United States and REACH including restrictions of chemicals of European Union, perfluorooctanesulfonic acid (PFOS) and perfluorooctanoic acid (PFOA) are only regulation targets (chemical species containing fluorine compounds having eight Cs) of the F-based alkyl compounds (F-(CF₂)ₙ-). The compounds having the number of Cs lower than eight were usable without causing any particular problem. However, in the revision of the TSCA of the United States in April 2021, carrying to the United States and using or production of a chemical agent of an organofluorine compound (PFAS: a perfluoroalkyl compound and a polyfluoroalkyl compound) are almost completely banned. Hence, a binder resin containing a fluorine compound (PFAS) cannot be used. That is, Teflon (registered trademark) (PTFE: polytetrafluoroethylene), and perfluoropolyether (PFPE) are now only excluded from the application of the TSCA for chemical agents and products that can be used with fluorine. Accordingly, an international trend of designing a solid lubrication coating film without using fluorine is also no longer negligible.

In view of the above, in this disclosure, a solid lubrication coating film is considered to be formed by using water as a solvent for environmental response, forming a binder resin into a chemical agent having a composition soluble in water, forming a chemical agent from an appropriate solid lubricant or other additives, and using the chemical agent.

However, water as the solvent is difficult to volatilize, and a problem arises in that it takes time to evaporate. In addition, many problems arise in that large-scale capital investment as a heat treatment furnace needs to be put in the drying.

In addition, when the solid lubrication coating film is applied to a thread portion of a connection for oil country tubular goods, the oil country tubular goods need to be produced away from an oil/gas well and transported. Consequently, when a solid lubrication coating film based on a water-soluble or water-dispersible polymer is produced at a production base, all problems related to quick drying and early drying may appear to be addressed. That is, since the aqueous polymer is difficult to dry, there is a possibility of taking measures such as making a facility for drying over time or production by contriving promotion or the like of drying by a heat treatment apparatus or the like. At this time, when a heat treatment apparatus is not used, it is also conceivable to add a volatile organic solvent to promote drying. In addition, it is often possible to secure an exhaust facility and take measures to prevent ignition.

However, when a chemical agent for forming a solid lubrication coating film, and a solid lubrication coating film formed using the chemical agent are used for a threaded joint for oil country tubular goods, and the threaded joint for oil country tubular goods is used in a well, there are the following problems. That is, the solid lubrication coating film is not necessarily manufactured or formed only in the production base away from the well.

When a problem or the like of a lubrication coating film formed on an oil country tubular goods is assumed, it is also necessary to assume that a chemical agent for forming a solid lubrication coating film is used at a well site. The well site is in a fire-prohibited environment, and there is also a situation where the scaffold is not firm. In addition, in a situation where a water-soluble or water-dispersible polymer is applied at a well site, there is a demand for quick drying.

This is because, when a problem occurs at a well, tubing connections are pulled up close to the well while being broken out by unit of about one to three pins. In this case, it is necessary to arrange the pulled-up pins (oil country tubular goods) side by side, clean surfaces of the pins with water, steam, or the like, and apply a coating material similar to a storing coating material for rust prevention. On the other hand, in a technique for a connection for oil country tubular goods of the methods in the related art, it is established that a wet lubricating compound containing Pb and Zn, such as an API-mod compound, is not applied, but a compound called a wet storage compound is applied to cope with the problem.

On the other hand, in a case of a solid lubrication coating film, unlike a wet compound, it is necessary to form a solid coating film base that can be quickly dried at a well site to complete the coating only by a technology of the solid lubrication coating film. However, fire is strictly prohibited at the well site. It is not possible to use an organic solvent having low flash point and good volatility which promotes early drying, because of the risks.

The descriptions of PTLs 1 to 3 exemplify such cases; however, in the related art, in order to form a film early, an organic solvent having a low or lowish flash point and high volatility is used. Accordingly, designing of a chemical agent is estimated to be performed on the premise that oil country tubular goods are produced at a place away from an oil/gas well and transported. A chemical agent based on a chemical agent having a low flash point is extremely dangerous to use near an oil/gas well where fire is strictly prohibited.

This disclosure provides a chemical agent that minimizes the use of a highly volatile organic solvent.

In addition, the inventors do not intend to evaluate a problem of anti-corrosion property and a problem of lubrication, which are problems of this disclosure, at a level of simple laboratory experiments or simulations which are often performed on a daily basis. The inventors have examined a conventional laboratory test and has found that it is necessary to set a test to be able to cope with even the most severe conditions that can be assumed.

In this disclosure, regarding the anti-corrosion property, a situation is assumed in which the solid lubrication coating film is damaged, rather than the anti-corrosion in a simple film-formed state. Under the most severe conditions and possible conditions, it is assumed that a surface of a solid lubrication coating film of a connection for oil country tubular goods needs to be able to maintain corrosion resistance after the make-up/break-out is performed with the protector. That is, in this disclosure, it is assumed that the solid lubrication coating film needs to be able to maintain the corrosion resistance even in a state of being damaged by contact with the protector.

At the same time, in this disclosure, regarding lubricity, it is assumed that it is necessary to ensure good lubricity under sliding conditions where a high load is applied. Considering an actual well, it is necessary to assume that the solid lubrication coating film is unavoidably scraped to some extent at the time of the make-up or break-out. The inventors have found that scraped fragments become a cause of galling problem in the following cases. The case is, for example, a case where a gap between the box connection and the pin connection is clogged, a case where a high load and an unbalanced load are applied to a joint portion, a case where a part of the film is completely removed, or the like. Accordingly, the present inventors have found that unless the upper and lower limits of components of the solid lubrication coating film are set with respect to the lubrication performance by simulating the actual well or conditions close to the well, definitions thereof have no meaning at the actual well.

Here, in the related art, as a frequently used test, there is a make-up test in a laboratory using only a short pin having a length of about 1 m. In the make-up test, regarding a case of lubrication of the solid lubrication coating film which is a target of this disclosure, lubrication determined as NG is NG also at the actual well. However, in the test in the related art, the inventors have found that even though the evaluation in the test with a short pin having a length of about 1 m is OK, the determination does not guarantee that the result is OK at the actual well. However, regarding a definition range regarding the lubrication performance of the solid lubrication coating film in the past patent literature, there are very few reports in that the definition range of the solid lubrication coating film is selected in consideration of such a point.

Further, a viscous liquid-like lubrication compound generally used for lubrication of the connection for oil country tubular goods in the related art does not have a significant difference between in a make-up/break-out evaluation using a short pin in a laboratory and in a situation at the actual well. In addition, the determination at the actual well tends to be made in accordance with the evaluation in the laboratory. This is to be assumed that the compound is the viscous liquid-like lubrication compound and thus is effective to move in conjunction with the make-up/break-out.

On the other hand, in the case of the solid lubrication coating film, fragments that have been unavoidably scraped do not necessarily move in conjunction with the make-up/break-out. Therefore, at the actual well where many fragments are unavoidably produced, the fragments are likely to cause clogging. In addition, when peeling occurs to a remarkable extent, galling occurs at a part where the solid lubrication coating film becomes thin or a part where the solid lubrication coating film disappears. Based on such findings, the inventors have found that, in the evaluation of the solid lubrication coating film, it is necessary to perform the evaluation based on such a point described above.

The findings will be described more specifically.

In the actual well, a situation in which a pin connection having an actual length is made up into a box connection is not implemented in an ideal state as described in a textbook. In an image in the ideal state, an actual size pin is envisaged to be fitted upright and made up straight into the box connection. However, this is not the case in practice. The structure of the connection for oil country tubular goods has an imperfect threaded part in a state where the pin connection enters the box connection by insertion. Accordingly, there are many cases where the pin is set slightly obliquely at the time of initial setting by a backlash (play, margin) of the portion. Accordingly, at the beginning of the make-up of the connection, the pin connection wobbles by the amount of play. Therefore, until the threads mesh with each other, the solid lubrication coating film is under superimposed loads of a pin weight which is a large load and an unbalanced load for causing the pin to move eccentrically. Therefore, there is a high concern that the solid lubrication coating film may be abnormally scraped or thoroughly peeled off. On the other hand, since the wet lubrication compound is a viscous liquid-like lubricant, the wet lubrication compound moves in conjunction with the make-up/break-out. Therefore, regarding the lubrication compound, the evaluation method of the lubrication in the laboratory using a short pin and the result at the actual well are almost the same, which is a good contrast.

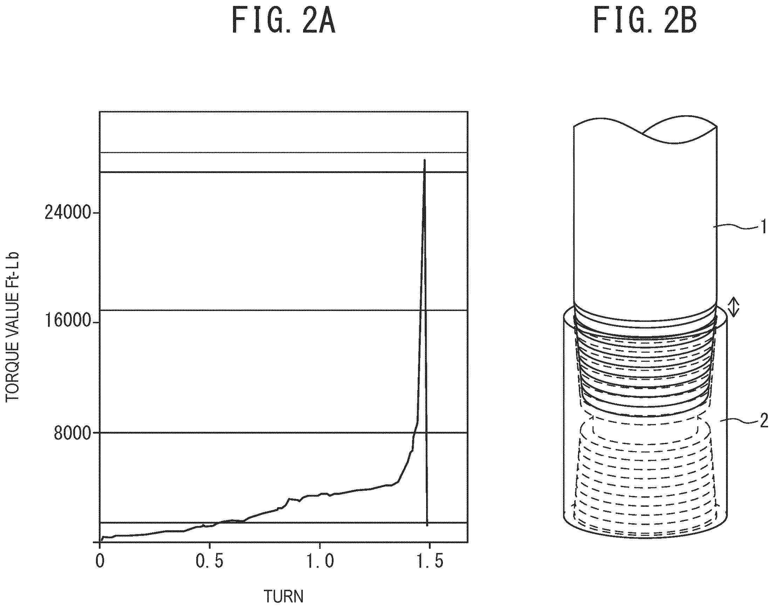

This is specifically illustrated in FIGS. 2A to 3B.

The examples illustrated in FIGS. 2A to 3B represent examples of conditions in which the make-up/break-out test conditions are turning at 15 to 25 rpm until torque rises and turning at 2.5 to 1.5 rpm when the torque has risen. This is a result of testing under severe conditions, that is, at a high turning speed, beyond the conditions specified in the instruction manual of the connection, that is, the make-up description in the technical package. The examples illustrated in FIGS. 2A to 3B represent an example of an evaluation of a solid lubrication coating film on a JFELION (trademark) connection made of a material of 9-5/8", 53.5#, and Q125 as a well make-up material and strength grade.

FIG. 2A is a torque-turn chart when a make-up is performed using a short pin having a length of about 1 m with a vertical power tong based on a laboratory evaluation method in the related art. Since the pin is short, the pin can be easily handled and can be set straight. Therefore, the pin can be set by hand to a state in which the pin crest is hardly exposed (FIG. 2B). In the torque-turn chart in this case, the torque starts to rise from the start of the make-up, and the make-up is performed beyond a bending point of a shoulder torque. That is, in this case, a very general chart is obtained (FIG. 2A). Here, the torque of the pin rises immediately, since the pin connection and the box connection sufficiently mesh with each other at the initial setting stage, and the make-up is performed from a preset position.

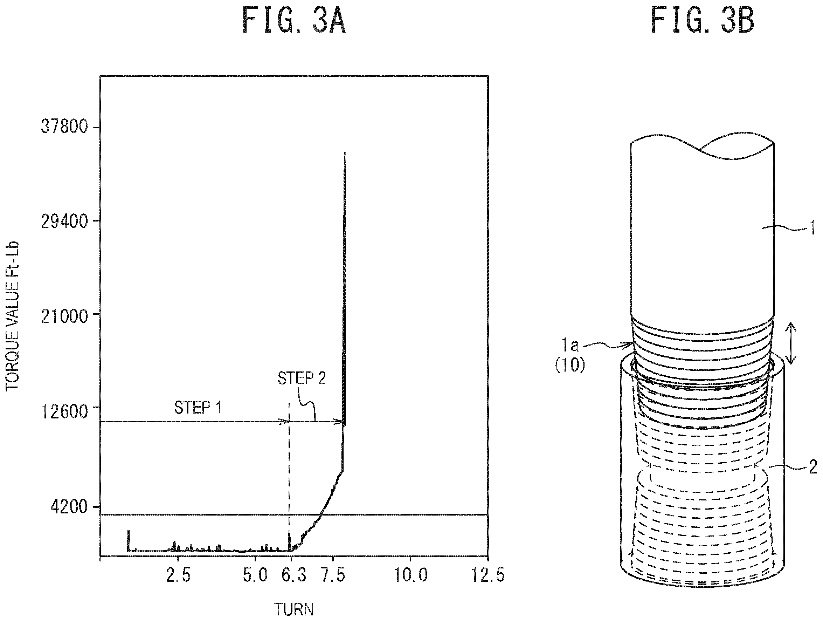

On the other hand, FIG. 3A is a torque-turn chart obtained when one actual size pin having Range-3, that is, 40 feet odd (12 m odd) is used. Accordingly, FIGS. 3A and 3B illustrate a result of a test performed at a simulated well. Here, the unit (size) of the horizontal axis is different from that in FIG. 2A. Further, the simulated well is not a well from which oil and gas are actually produced but an experimental well that is simulatively bored so that three actual size pins odd can enter the well in an underground direction, that is, downward. At the same time, the simulated well means a device group and an experimental facility in which there is a rig in which about 2 to 3 connected pins can be hung and set in an upper chamber, and a make-up/break-out test can be performed. This example tends to be a state where the pin is set similarly to the setting at the actual well but is different from the case of FIGS. 2A and 2B of the short pin. In this example, steady torque does not rise until about 6.3 turns, and irregular rises of spike-like torque are occasionally observed during the turning. The inventors have found that such a phenomenon is directly linked to damage of the solid lubrication coating film and indicates that it is important to evaluate the solid lubrication coating film based on the finding.

This example of the torque chart of FIG. 3A occurs when the pin of Range -3, that is, 40 feet odd (12 m odd) is set and made up. In this case, since the actual size pin is about 12 m odd, the pin cannot be set completely straight, and the pin is inserted obliquely in most cases. Further, this condition is similar to that in the case of the actual well. Therefore, even if the pin is set by hand, the pin connection and the box connection are partially abutted against each other too strongly. Therefore, five or more crests of the pin and, in many cases, about a half of the total crests, do not advance further by hand in a state of being exposed from the box. From that state, make-up and insertion by a tong are started. Accordingly, the threads do not sufficiently mesh with each other, and some threads are inadvertently abutted strongly against each other and come into a state of not advancing any more in most cases. Therefore, until the threads of the actual size pin sufficiently mesh with each other, the box connection and the pin connection abut against each other in a state where the load is unbalanced. That is, this means that damage is caused. In view of this, the present inventors have found that, as described above, unless the solid lubrication coating film is evaluated, the film determined as NG in the evaluation using the short pin is also determined NG at the actual well, but the film determined as OK in the evaluation using the short pin does not necessarily mean OK in the evaluation at the actual well. Therefore, in the past invention, it has been found that the film evaluated based on OK in the evaluation using the short pin is not necessarily intended to be in a favorable range at the actual well, in the upper/lower limit definition of the components, conditions, and other parameters

Here, the methods of PTLs 4 and 5 represent examples of test evaluations using short pins and are not necessarily intended to be in the favorable range.

In addition, in NPL 1, when a pin is erected and made up, a weight of 5 kN is placed on the upper end of the pin to evaluate lubrication. Here, NPL 1 is considered to intentionally apply a weight of one actual length pin, that is, a pin having a length of about 40 feet (about 12 m), as determined based on the torque-turn chart of a 7"/29# pin. However, when determination is made based the torque turbine chart, that is, FIG. 5 of this document, NPL 1 is considered to be based on the premise that the test is performed with make-up behavior close to FIGS. 2A and 2B instead of FIGS. 3A and 3B. That is, it is considered that NPL 1 is on the premise the test is determined as a made-up state evaluation test from a state where the initial set position is set at which the pin connection is made up by hand to a level at which the pin connection is not exposed, and the pin connection and the box connection sufficiently mesh with each other. Therefore, it is not always possible to obtain a favorable range.

From the above description, problems extracted in this disclosure will be described below.

This disclosure is based on the premise that an oil agent or a volatile organic compounds (VOC) belonging to a thinner is not used. Based on this premise, this disclosure is made by considering making a chemical agent by dispersing a solid lubricant component based on a metal soap in a binder resin composed of a water-soluble or water-dispersible polymer. Moreover, consideration is made to use the chemical agent to form a lubrication film that is made of a solid lubrication coating film and has corrosion resistance.

It has been found that such a configuration has the following problems. Therefore, it is found that further measure is necessary.

### (First Problem)

This is a problem arising in a case where a metal soap is mixed with an aqueous polymer. That is, when the metal soap insoluble in water is mixed, it is necessary to take measure about how to make a mixture opacify without using a chemical agent group of volatile organic compounds (VOC) which are also called thinners.

### (Second Problem)

When an alkaline soap is added to an aqueous polymer, since the alkaline soap is soluble in water, the solvent tends to come into a highly viscous gelated state. Therefore, when the alkaline soap is added to the aqueous polymer, even though the alkaline soap has the lubrication performance, time may be taken to form a film. At the same time, it is necessary to define an appropriate amount of the alkaline soap in order to obtain a solid lubrication coating film in a dry state.

### (Third Problem)

Since an aqueous polymer is used and water is used as a solvent, there is a high concern that drying after application may take time. Therefore, there is a problem that some sort of measure needs to be taken to realize early drying. In short, it is preferable to perform coating anywhere and to make dry early.

The ultimate situation such as a fire-prohibited environment also includes an environment in which neither a heat treatment furnace nor electricity is used, and only the coating film has to be left in the atmosphere. However, this disclosure is made by assuming that the solid lubrication coating film and the chemical agent can be used not only at a manufacturing site for oil country tubular goods products but also at the well site. Therefore, in order to improve the quick drying performance, it is necessary to avoid using a thinner VOC at the well site where fire is strictly prohibited. At the same time, it is necessary to consider safety and health of the workers and construction of drafts and the like. Therefore, it is necessary to design a solid lubrication coating film and a chemical agent on the premise that use of the thinner VOC should be avoided.

### (Fourth problem)

In order to cope with the recent increase in environmental awareness, it is necessary not to use a set of chemical agents containing heavy metals and PFAS (fluorine-containing acrylic group including PFOS and PFOA). Further, PFAS is a fluorine-containing acrylic group including PFOS and PFOA.

### (Fifth problem)

Regarding the solid lubrication coating film and the chemical agent of this disclosure, it is important to set the upper and lower limits of parameters by evaluating whether or not lubrication or the like is exhibited, by an evaluation method suitable for an environment used at the actual well. However, in an evaluation using a short pin having a length of about 1 m in the related art, an evaluation method does not conform to actual use conditions.

Hereinafter, means for solving each problem in this disclosure will be described.

This disclosure provides a chemical agent containing a water-soluble or water-dispersible polymer, that is, an aqueous polymer, as a binder resin, a metal soap as a main component of a solid lubricant, and a solvent containing water as a main component. This disclosure further provides the solid lubrication coating film formed of the chemical agent.

The metal soap functions as a solid lubricant having water repellency. Having water repellency means not being soluble in water. It is considered that good properties such as lubricity, corrosion resistance, and an early drying property are achieved within a range defined in this disclosure on the premise that a metal soap can be properly formulated in the chemical agent. In order to solve the above-described problems, this disclosure is defined using the following solutions and configures the invention.

A method for solving the first problem relates to a technology of successfully mixing a metal soap with the water-containing solvent.

In general, the metal soap is described as insoluble in both water and alcohol and is reported to be soluble in a thinner volatile organic compounds (VOC), ethers, and oil. For example, NPL 2 clearly describes that the metal soap is not soluble in ethyl alcohol, methyl alcohol, and butyl alcohol. That is, when water is selected as a solvent, and a VOC solvent which easily volatilizes even at room temperature which is a thinner solvent which requires a dedicated mask or draft equipment for a worker is used, the metal soap melts. However, in the related art, it has been considered that there is no solution for dissolving a metal soap into water as long as such a substance is not added.

In addition, in consideration of lubrication of the connection for oil country tubular goods and assuming that the chemical agent is applied at the well site, there is a difficulty that use of the thinner solvent is strictly prohibited in an environment of the well site where fire is strictly prohibited. The thinner solvent cannot be used although no solvent substance remain in the formed film.

The inventors have conducted experiments by examining mixing of the metal soap insoluble in water with water which is a solvent of a water-soluble or water-dispersible polymer, that is, an aqueous polymer. In the experiments, the metal soap is insoluble in both water and ethanol, but when actually dissolved, it was found during observation of the experiment that the dispersion of the metal soap is different between water and a lower alcohol group including ethanol, when water and the lower alcohol are compared with each other.

Specifically, it has been found that, in the lower alcohol group including ethanol, the metal soap hardly forms a lump and tends to easily become particulates so that the metal soap can be maintained as fine particles. The metal soap may be mixed with alcohol and then strongly agitated or ultrasonically vibrated. On the other hand, in water, particles of the metal soap gather with each other and become larger to form lumps, and a homogeneous dispersion state of the metal soap cannot be obtained.

From this, it has been found that the metal soap can be dispersed in an insoluble state by temporarily dissolving the metal soap in a lower alcohol group such as ethanol. Thereafter, it has been found that such a mixture is developed and mixed into an aqueous polymer, and thereby the mixture of the metal soap can become approximate to a homogeneous chemical agent.

When the chemical agent of this disclosure is left undisturbed, the metal soap is separated as time elapses. However, it has been checked that a homogeneous solid lubrication coating film is formed by removing the water-containing solvent, that is, evaporating/vaporizing the water, after application, in a case where the solvent is applied after being opacified again by performing shaking or the like of a container containing the chemical agent of this disclosure at the time of use, that is, application.

Further, when the metal soap is directly dissolved in water, the metal soap tends to form lumps, so that there is a high concern that the metal soap will form a heterogeneous film when the metal soap forms a solid lubrication coating film.

The reason of the description above provided is not very clear.

Qualitatively, water is merely a polar solvent. On the other hand, the lower alcohol group including ethanol is soluble in water and tends to be also slightly soluble in oil. The metal soap is described as being insoluble in water and also generally insoluble in alcohol. However, the metal soap can be dissolved in oil or the VOC called thinner. Therefore, it is estimated that a level view of insolubility has a difference at a molecular level and thus is effective for the difference in phenomenon described above.

On the other hand, a lower alcohol group including ethanol also has high volatility and also falls into the category of VOC. Therefore, there is a concern that fire is likely to be ignited in a fire-prohibited environment. Therefore, it is necessary to define the upper limit of the usable amount of the lower alcohol used for dissolving the metal soap and the concentration of the lower alcohol in the chemical agent. This disclosure defines the upper limit of the lower alcohol from such a viewpoint.

In addition, the larger the amount of metal soap to be dissolved, the better for use as a solid lubricant. However, a limit amount of the metal soap to be dissolved is defined as an upper limit amount depending on a limit amount of alcohol to dissolve and the volatility and the flash point. Accordingly, the lower limit of the metal soap is determined from a minimum amount by which lubrication can be achieved.

The second problem is how to mix a trace amount of alkaline soap as a supporting component for lubrication.

That is, how to mix the trace amount of alkaline soap is based on the premise that the VOC such as a thinner is not added to a system in which an aqueous polymer is used as a binder resin, a metal soap is used as a main component of a solid lubricant, and water is used as a solvent.

The alkaline soap is soluble in water and thus can be mixed. However, when the alkaline soap is too much dissolved, water as a solvent tends to come into a gelated state with high viscosity. Therefore, when the chemical agent is applied, the chemical agent is not easily dried, and time has to be taken to dry the chemical agent as a solid film. In addition, when the film is dried, the film becomes a semi-solid film having a high viscosity. Accordingly, in a semi-solid or viscoelastic film, stickiness remains on the surface and allows dust or sand to be easily attached. When dust or the like is attached, the dust or the like is not easily removed. The dust or the like results in resistance at the time of make-up/break-out, and there is a possibility that necessary lubrication cannot be realized.

From the above description, it is necessary to add the alkaline soap in a small amount and set the upper limit in order to keep the addition amount that can support the effect of solid lubrication by containing the alkaline soap and not to change the viscosity of water as a solvent. From such a viewpoint, this disclosure defines the addition amount of the alkaline soap.

The third problem is that since the aqueous polymer uses water as a solvent, there is a possibility that time is taken to dry when a chemical agent is applied.

In this disclosure, use of a large amount of VOC and evaporation of water by using volatility of the VOC are not employed in consideration of a fire-prohibited environment. Toluene-, xylene-, and benzene-based VOC which are called thinners cannot be used if health and safety of workers are considered. In addition, it is necessary to safely dry the film including a situation in which the film is formed by drying only by being left in an environment in which the electric heater cannot be used or in the outdoors in an environment on land thereof.

In this disclosure, the lower alcohol mentioned in the first problem, that is, an alcohol group such as ethanol, methanol, isopropyl alcohol, normal propyl alcohol, and industrial ethanol is used to dissolve the metal soap. At this time, as described above, the low alcohol can be formulated within a range in which there is no problem in terms of the volatility and the flash point so that the chemical agent can be used even in a fire-prohibited environment.

In order to be used in the fire-prohibited environment, conditions are as follows. The chemical agent needs to have a flash point of 60°C or higher, preferably 150°C or higher, and more preferably 250°C or higher. Accordingly, under the conditions, a lower alcohol group is added more than necessary for dissolving the metal soap, and the volatility thereof is utilized.

However, this means that the higher the flash point is set, the smaller the addition amount/content of alcohol is. However, it is preferable to contain at least 0.5% or more of the lower alcohol group.

At the same time, addition of ammonia water and the volatility thereof may be utilized.

Ammonia water may be used for adjusting the pH of a coating material. In a case of use for pH adjustment, ammonia water is additionally added and formulated to be shifted to an upper limit of the prescribed pH of the chemical agent, that is, the high pH side. In addition, in a case where the ammonia water is not designated to adjust pH, acceleration of volatility may be achieved by adding ammonia water (28 to 30%) at an upper limit of 1% at Vol/Vol% with respect to the water-containing solvent. In this disclosure, the conditions for simultaneous use of ethanol and ammonia were clearly determined by experiments to clarify an optimal range. As commercially available ammonia water, ammonia water at a low level of 10% or 5% also exists. However, in this disclosure, concentrated ammonia water (28% to 30%) is used as a base for discussion.

At the same time, in this disclosure, a metal soap having a small particle size is selected. Accordingly, by dispersing the metal soap in the chemical agent so as not to gather, a contact surface area of the metal soap is increased, and early drying is realized.

By using a metal soap having an average particle size of 10 µm or less, preferably 5 µm or less, and more preferably 1 µm or less, drying of the applied agent is promoted. In addition, in order to disperse and mix the metal soap with the chemical agent, as described in the measure for the first problem, a chemical agent is prepared by dissolving the metal soap in the lower alcohol such as ethanol.

In addition, it is important to adjust the viscosity of the chemical agent. It is also important to lower the viscosity to make a situation in which the film is thinly applied and make a situation in which the film is seldom applied thickly.

If the chemical agent is applied to a metal surface of a cylinder while turning the cylinder, a redundant amount of the chemical agent unavoidably falls from the 6 o'clock position, that is, the lowest position. In addition, in a case where the cylinder is not rotated, similarly, although the 6 o'clock position tends to be slightly thick, a redundant amount of the chemical agent unavoidably drips down from the 6 o'clock position. Even in a case of applying the chemical agent on a plate-like object, a redundant amount of the chemical agent drips down due to a self-weight in a state in which the object leans obliquely. In this manner, this makes it possible to make a state in which early drying is easily achieved.

Hence, for early drying, even in a situation where the metal surface coated with the chemical agent is left indoors or outdoors in an atmospheric environment, it is possible to realize early drying under the following condition. The condition is a combination of the use of the alcohol and ammonia and the selection of the particle size of the metal soap, the consideration of not causing the metal soap to gather and form lumps, the adjustment of the viscosity of the chemical agent, and the consideration of not causing the chemical agent to be applied thickly.

The fourth problem is a method of performing designing the chemical agent so as not to use heavy metals and a set of chemical agents containing PFAS. PFAS refers to a fluorine-containing acrylic group including PFOS, PFOA.

On the other hand, since this disclosure does not use a harmful substance in an aqueous polymer, the problem can be naturally solved by implementing the solution to the problems 1 to 3.

The fifth problem is that it is necessary to define the upper and lower limits of each material by evaluating the characteristics of the lubrication and anticorrosive films by an appropriate evaluation method.

First, regarding the anti-corrosion property and corrosion resistance of this disclosure, lubrication of the threaded joint for oil country tubular goods is assumed in consideration of the most severe conditions. In the evaluation of corrosion resistance in a state in which a film is simply attached to a plate or lubrication behavior using a short pin, a case of NG can be sorted out, but it cannot be said that the plate is passed.

In this disclosure, regarding the anti-corrosion property, it is necessary not to assume only the corrosion resistance of the film as it is by applying the chemical agent to form the film, that is, regarding the anti-corrosion property, it is necessary to assume that the film is brought into partial contact with the protector and the film is damaged when the make-up is performed with the protector.

In addition, regarding lubrication, at an actual well, an actual length pin of Range-3, that is, a pin having a length of about 40 feet (about 12 m) is erected, suspended by a derrick crane or the like, and made up. In the worst case, there is a situation in which the entire self-weight of the actual length pin is applied to the box connection side. Further, the weight equivalent to one pin of 9-5/8"and 53.8# is about 1 ton. Due to the large load, it is necessary to assume a situation in which the solid lubrication coating film is significantly damaged.

Also regarding an initial setting position of the actual length pin, unlike the short pin, a situation is assumed in which almost all of the crests of the pin cannot be set until hidden into the box connection. That is, it is necessary to evaluate the lubrication by assuming a situation in which the pin can be made up only up to a position where the thread cannot further advance on the way of turning, that is, a position where the crest is exposed. For example, at the actual well, the pin connection can be set only up to a position corresponding to 1a (10) in FIG. 3B.

However, it is not realistic to evaluate solid lubrication behavior of the connection for oil country tubular goods at an actual well or a simulated well from the viewpoint of costs and time for arranging an experiment.

A solution to this is as follows.

A weight equivalent to about one to three actual length pins is applied to an upper end portion of the short pin. Moreover, the initial set position of the connection is set to a position where about a half of the pin crests are exposed from the box connection. In this manner, the weight is applied at the time of make-up, and the weight is not applied at the time of break-out, and the upper and lower limits of parameters are determined depending on the actual conditions after simulating make-up at the actual well.

That is, in this disclosure, the initial set position of the pin connection is intentionally set to a position where the pin connection is exposed from the box connection. Moreover, in this disclosure, a weight equivalent to one to three actual size pins is placed on the pin end portion, and the make-up/break-out is performed for evaluation. At the time of the make-up, the weight equivalent to one to three actual size pins is applied to perform the make-up. Further, the weight equivalent to one pin is assumed to be at a land well, and the weight equivalent to three pins is assumed to be at a sea well. At the time of the break-out, the weight is suspended by an overhead crane to adjust the load, and the load is reduced including load zero to perform break-out. If the weight is applied as it is at the time of the break-out, the weight becomes a balancer, conversely, and the pin is lifted straight and does not rattle. Therefore, the solid lubrication coating film is in a situation in which neither the box connection nor the pin connection is damaged at all, and the actual situation at the actual well cannot be simulated.

### Advantageous Effects of Invention

The chemical agent of this disclosure is a chemical agent that contains a metal soap as a main component of a solid lubricant, a water-soluble or water-dispersible polymer as a main component of a binder resin, and water as a main component of a solvent.

According to the chemical agent of this disclosure, on the premise of such a configuration described above, it is possible to provide an environmentally friendly chemical agent without using a chemical agent group called a thinner, heavy metals, and a set of chemical agents containing PFAS.

In addition, the chemical agent of this disclosure can also achieve early drying without using a chemical agent group called a thinner. Therefore, it is possible to use the chemical agent even in a fire-prohibited environment. PFAS refers to a fluorine-containing acrylic group including PFOS, PFOA.

Moreover, the chemical agent of this disclosure can provide a solid lubricating film having lubricity and corrosion resistance that can withstand use at an actual well.

### Brief Description of Drawings

FIG. 1 is a view illustrating oil country tubular goods and a threaded joint for the oil country tubular goods;
FIG. 2A is a graph illustrating a make-up chart in a laboratory test in the related art, and FIG. 2B is a view illustrating an initial set position at that time;
FIG. 3A is a graph illustrating a make-up chart at an actual well, and FIG. 3B is a view illustrating an initial set position at that time;
FIGS. 4A and 4B are schematic graphs illustrating make-up charts, in which FIG. 4A is a case of the actual well and FIG. 4B is a case of a laboratory test in the related art;
FIG. 5 is a view for explaining a condition (weight tong) of a new laboratory test;
FIG. 6 is a view illustrating an installation example of a weight under the condition (weight tong) of the new laboratory test;
FIG. 7 is a schematic view illustrating a state of a set of a pin connection and a box connection, and in FIG. 7, description of a crest and the like is omitted; and
FIG. 8 is a schematic view illustrating an example of a method for performing application on a pipe with a brush.

### Description of Embodiments

This disclosure relates to a solid lubrication coating film formed on one side or both sides of lubrication surfaces and a chemical agent for forming the solid lubrication coating film, for example, in a situation where two objects made of the same metal and facing each other need to slide in which high lubrication is required. This disclosure is directed to a solid lubrication coating film and a chemical agent for forming the solid lubrication coating film, particularly in thread-shaped lubrication and further in lubrication for a thread for oil country tubular goods.

At the same time, this disclosure is intended to simultaneously impart anti-corrosion property by the lubrication film. This disclosure is intended to achieve sufficient lubrication at a threaded part even under make-up/break-out conditions at an actual oil and natural gas well.

In this disclosure, a solid lubricant component containing a metal soap as a main component is employed, and a water-soluble or water-dispersible polymer is used as a binder resin. In addition, when a chemical agent is applied to form a film on a solid lubrication coating film, instantaneous drying such as drying from an applied point is not expected. However, this disclosure aims to achieve early drying to the extent that drying can be performed in about 30 minutes even when a chemical agent is applied and left to dry in the atmosphere.

This disclosure provides protection for anti-corrosion by covering with a soft film. In addition, this disclosure aims to achieve lubrication by using the soft film as a film having a lubricating function at the same time. Accordingly, this disclosure is intended to provide a chemical agent for making the film. This disclosure also focuses on environmental resistance and conformity with international agreements on chemical agents and provides design including an early drying property as actual usability.

In addition, the chemical agent of this disclosure is also designed by assuming when there is a problem at a well or when workover occurs. Accordingly, the chemical agent of this disclosure is also intended to be used as a coating film that is formed on a thread surface for the purpose of protection for rust prevention, when actual length pins are detached one by one or in units of two or three pins, collected and arranged near a well, and washed. Detaching the actual length pins one by one is assumed to be performed at a land well, and detaching the actual length pins in units of two or three pins is assumed to be performed at a sea well.

Next, embodiments of the invention will be described.

In this embodiment, the description is provided by assuming oil country tubular goods as a metal component having a surface to which the lubrication performance is imparted. The invention may be applied to other metal parts.

### (Configuration)

### <Chemical agent>

A chemical agent of the embodiment is a chemical agent for imparting the lubrication performance and corrosion resistance to a metal surface of a metal component such as oil country tubular goods.

The chemical agent is composed of a solid lubricant, a binder resin, and a solvent component and may contain a slight amount of an additive component depending on a situation.

### [Solvent component]

The solvent component contains water as a main component. A lower alcohol having three or fewer carbon atoms is added as an additive to the water. A volume of the additive in terms of water is 0.5 or more and 45 or less in terms of 100 set as a volume of water.

One of the characteristics of a composition of the solvent of this disclosure is that 95% or more of the volume of the solvent is composed of the water and the lower alcohol, and the solvent is a component system containing water as a main component.

The lower alcohol is one or more kinds of lower alcohols selected from methanol, ethanol, isopropyl alcohol, normal propyl alcohol, and industrial ethanol.

As the additive, at least one of ammonia water and a primary amine may be further contained. A content of at least one of ammonia water and a primary amine is, for example, 2 or less in terms of 100 set as the volume of water.

The lower alcohol, the ammonia water, and the primary amine are added to achieve early drying of the coating film by taking advantage of volatility thereof. At the same time, the lower alcohol functions as follows, in a solvent characterized by water solubility according to this disclosure as, that is, a solvent containing water as a main component. That is, when dissolving the solid lubricant, the lower alcohol functions effectively when dissolving the solid lubricant having water repellency. Accordingly, the lower alcohol serves to disperse and dissolve the solid lubricant in the entire solvent while avoiding an extreme gathering state.

When the lower alcohol having 3 or less carbon atoms is not added by 0.5 or more in terms of 100 set as the volume of water, the solid lubricant having water repellency cannot be uniformly dispersed, and phase separation from water occurs. In many cases, the lower alcohol is placed on a water surface. On the other hand, a lower alcohol group has a low flash point. A situation where a lower alcohol is applied to lubrication of a connection for oil country tubular goods and is applied at a well site in a fire-prohibited environment is considered. In this case, the lower alcohol may cause a fire and may be a very dangerous chemical agent. Hence, the upper limit of the addition of the lower alcohol was set to 45.

Here, the solid lubrication coating film formed by drying does not contain a solvent component including a lower alcohol. The solvent component becomes a problem only related to the drying time of the chemical agent. Therefore, as long as the chemical agent is not used in a fire-prohibited environment, a large amount of lower alcohol may be used in order to accelerate drying.

Further, a range of suitable addition of the lower alcohol is 20 or less. Although correlated with a volatile point to be described below, in the case of 20 or less, early drying is easily realized. In addition, this range makes it possible to secure a level at which the volatile point is 70°C or higher or the chemical agent is nonflammable and to safely use the chemical agent at a fire-prohibited site of the well site. In addition, in a case of a bad example in which a large amount of lower alcohol is contained in expectation of early drying, the following problems arise. That is, there is a concern that the film is dried too early, the inhomogeneity of the solid lubrication coating film is increased, the film is broken, and the film quality deteriorates.

### [Solid lubricant]

The solid lubricant contains a soap component containing at least a metal soap among a metal soap and alkaline soap components. The metal soap component is 95% or more of the total weight of the metal soap and the alkaline soap components. That is, the main component of the solid lubricant is the metal soap.

The weight of the metal soap is 95% or more of the total weight of the metal soaps and the alkaline soaps. When a large amount of the alkaline soap is contained, there is a concern that the alkaline soap may be dissolved in an aqueous solvent, and the viscosity of the solvent becomes too high, so that it may be difficult to perform uniform application, and the drying of the film may also be delayed. That is, a reduction in amount of the alkaline soap component reduces the concern. However, under a condition that the alkaline soap is zero, the lubrication improving effect brought about by the alkaline soap cannot be expected, and therefore it is preferable to make component design to contain the alkaline soap.

At the same time, a condition that a particle size of the metal soap does not exceed a film thickness of the solid lubrication coating film is set. As a suitable range, an average particle size of the metal soap is preferably 10 µm or less. A case where the particle size exceeds the film thickness of the solid lubrication coating film means that the metal soap is present by penetrating the solid lubrication coating film. In this case, when make-up/break-out is performed with a strong torque, the solid lubrication coating film is more damaged than in a case of a film in which the metal soap is dispersed in the solid lubrication coating film. For example, there is a concern that significant peeling or the like may occur, resulting in poor lubrication characteristics. Hence, the particle size needs to be equal to or smaller than the thickness of the solid lubrication coating film. On the other hand, when it is assumed that the solid lubrication coating film is thin enough to realize lubrication and rust prevention, the film thickness is at least about 10 µm. Therefore, the particle size is preferably 10 µm or less.

Further, the metal soap and alkaline soap components constituting the solid lubricant include one or two or more kinds of soaps which are compounds composed of a fatty acid selected from the following A group and a metal element selected from the following B group.
A group: stearic acid, behenic acid, lauric acid, 12-hydroxystearic acid, oleic acid, montanic acid
B group: Na, K, Mg, Ca, Zn

### [Binder resin]

The binder resin is composed of a water-soluble or water-dispersible polymer and is a polymer or a copolymer containing a polymer having an acrylate or methacrylate structure by 90% or more of a total weight of the binder resin.

The water-soluble or water-dispersible polymer constituting the binder resin is, for example, a polymer composed of a monomer selected from the following (1) to (4) or a copolymer composed of two or more monomers.

(1) Monomers including acrylates, methacrylates and individual derivatives of acrylates and methacrylates, as main components
(2) Monomers including acrylates and methacrylates, and individual derivatives of acrylates and methacrylates, and alkyl esters, vinyl esters, styrene esters, carboxylic acid esters, and individual derivatives of these esters
(3) Monomers grafted with respect to the above-described (1) and (2)
(4) One or both monomers of a vinyl compound and a urethane compound

Here, in this specification, "being composed of a water-soluble or water-dispersible polymer and containing a polymer having an acrylate or methacrylate structure by 90% or more of a total weight of the binder resin" reads as follows. That is, in a case of a copolymer, when a part of a copolymer structure contains only a part of an acrylate or methacrylate structure, the binder resin of the copolymer is treated as the "polymer having an acrylate or methacrylate structure" regardless of a weight other than the incorporated acrylate or methacrylate structure.

When the content is less than 10%, the polymer allowed to be mixed refers to a polymer that does not form a copolymer with the polymer having an acrylate or methacrylate structure targeted by the present application. That is, a structure having an acryloyl group, a vinyl group, or the like in a monomer is excluded.

In addition, since the chemical agent of this disclosure is a chemical agent dissolved in an aqueous solvent, it is necessary that the polymer allowed to be mixed has a composition soluble in water in addition to the above-described information. Examples of the polymer include a polyamide-imide resin, a phenol resin, a urea resin (urea formaldehyde), and the like which are soluble in water.

The weight of the solvent is desirably, for example, 0.7 times or more and 100 times or less the total weight of the solid lubricant and the binder resin when the volume of the solvent is converted to the weight with a specific gravity of the solvent of 1.

In addition, the solid lubricant has a weight of 0.1 times or more and 1.0 times or less a weight of the binder resin.

It is preferable to adjust the flash point of the chemical agent to a flash point exceeding 60°C or to make the chemical agent flame-retardant (nonflammable) by adjusting the components.

In addition, it is preferable to adjust the viscosity of the chemical agent to 1,000 mPa·sec or less by adjusting the components.

An appropriate range and a suitable range of these parameters can be defined as follows. First, regarding the weight of the solvent, the lower limit of 0.7 or more is defined as the amount of the solvent required to dissolve the solid lubricant. In fact, the metal soap as the main component of the solid lubricant could be dissolved up to 0.7 as in Examples to be described below. In addition, since the weight of 0.5 results in a condition that the lubrication components to be mixed are not sufficiently dissolved, 0.7 is set as the lower limit. The lubrication components to be mixed include a metal soap component, an alkaline soap component, and the like. Regarding the upper limit, 100 times or less is assumed, but a preferable range is 10 times or less. A high weight proportion of the solvent means a large amount of chemical agent and thin film components. The film components include a binder resin component, a solid lubricant component, and the like. There is no particular problem if the upper limit is set to 100 times when multiple recoating such as repeated application and drying is desired. On the other hand, if time and effort for multiple coating and multiple drying is not considered as a trouble, the solvent can be contained by more than 100 times. At the same time, since the chemical agent is thin, there is a high concern that unevenness is likely to occur in a film quality. Therefore, the number of times of make-up/break-out is slightly reduced, but the film may be usable.

Hereinafter, the "number of times of make-up/break-out" is also referred to as the "number of times of M/B".

A preferred range is 10 times or less. When the number of times of M/B is 10 or less, a necessary film thickness can be easily formed by a conceivable application method, for example, by performing application about one to three times, the number of times of M/B is good, and particularly deterioration is not observed. In the examples to be described below, it will be ascertained that a solid lubrication coating film can be formed without a problem up to a weight proportion of 7.6 or less, and necessary lubrication characteristics and the like can be realized. Therefore, it can be said that 7.6 or less is a more preferable range. As will be described below, it is also preferable that the solvent weight is low for rust prevention. In the present application, the solvent contains water as a main component. Therefore, in order to avoid rusting of an insufficiently dried portion, it is more preferable that the weight ratio is twice or less.

Next, regarding a ratio of a weight of the solid lubricant to a weight of the binder resin, the lower limit is preferably 0.1 times or more, and the upper limit is preferably 1.0 times or less. When the weight of the solid lubricant is small with respect to the weight of the binder resin, a total amount of the solid lubricant which plays a main role for lubrication is small, and thus lubrication tends to deteriorate. Conversely, when the weight of the solid lubricants is too large, the solid lubricants may be contained more than necessary, and the solid lubricants interfere with each other so that the tendency of improvement in lubrication characteristics is saturated or deteriorated. In the following Examples, regarding actual deterioration of the characteristics to a level at which the number of times of M/B is a pass by the lower limit number of times within a pass range, the weight ratio of the solid lubricant is 0.08 at the lower limit and 5.0 at the upper limit within the range of the experiment.

A desirable range of the flash point is preferably 60°C or higher, and more desirably, the chemical agent is defined as a nonflammable classification. On the other hand, at an oil/gas well, if there is a place or an area that can be used in a temperature range of less than 60°C depending on the use environment, the chemical agent for producing the solid lubrication coating film and the film of the present application can be used. These are parameters determined purely from the safety of workers and the well site. The parameters are not factors that affect the lubrication evaluated by the number of times of M/B. With the exception of the chlorofluorocarbon substitute, a low flash point often means a high volatility, thus affecting the behavior of the chemical agent to dry early and become a film early. When a usage environment at a well is considered, the temperature is set to 60°C or higher, and more desirably, to a much higher temperature, or the chemical agent is designed to be a nonflammable classification.

Viscosity of the chemical agent is defined relative to the chemical agent as a result when formulated with the solvent, the solid lubricant, the binder resin, and other additives. The viscosity varies depending on the formulating concentration. In the present application, the viscosity is preferably 1,000 mPa·sec or less in order to suppress application unevenness and film thickness unevenness of the chemical agent. This is because when the viscosity is high, the film thickness unevenness is highly likely to occur. In the following Examples, no particular deterioration is observed at 740 mPa·sec or less, and thus it can be said that this is a more preferable range.

In addition, a case where the chemical agent is applied to a metal surface in an application amount of 0.1 g/mm² or less by adjusting the components is considered. In this case, preferably, the components are adjusted such that the chemical agent has an early drying property enabling drying to be completed within 30 minutes when the chemical agent is left to be dried in a windless atmospheric environment at an ambient temperature.

Alternatively, a case where the chemical agent is applied to the metal surface in an application amount of 0.1 g/mm² or less by adjusting the components is considered. In this case, preferably, the components are adjusted such that the chemical agent has an early drying property enabling drying to be completed within 5 minutes when the chemical agent is dried by air blow at 1 m/sec or higher in an atmospheric environment at an ambient temperature.

Further, the term "normal temperature" as used herein refers to a temperature in the range of 15 to 30°C.

The application amount of 0.1 g/mm² or less means a typical application amount realized by a method of performing application with a JIS 20 brush having a brush width of 50 mm in rotation coating by one draw of the brush in one direction. Accordingly, the drying time in this case is defined. It is preferable to realize drying within 30 minutes by leaving the chemical agent and within 5 minutes by drying with air blow at 1 m/sec or higher. The means is implemented by using a plurality of parameters defined in the present application. Drying is enhanced by containing at least one of the lower alcohol and the ammonia water to use volatility thereof and dispersing and containing the metal soap of the solid lubricant in an appropriate size to increase a volatile surface area.

### <Method for manufacturing chemical agent>

The chemical agent is obtained preferably by formulating the metal soap by dispersing and opacifying the metal soap in the lower alcohol and then adding the metal soap into the water-containing the solvent.

### <Method for applying chemical agent >

It is preferable that a container containing the chemical agent is shaken and to agitate the chemical agent before application, and then the chemical agent is applied.

In addition, when the chemical agent of the present embodiment is applied to a surface of a tubular part, it is preferable to apply the chemical agent in a circumferential direction while axially rotating the tubular part.

### <Oil country tubular goods and threaded joint for oil country tubular goods>

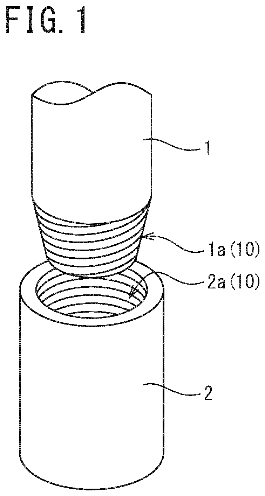

The oil country tubular goods includes a box 2 having a female thread 2a and a pin 1 having a male thread 1a as illustrated in FIG. 1.

As illustrated in FIG. 1, the threaded joint for oil country tubular goods is configured of the box 2 such as a coupling having the female thread 2a and a pin 1 having the male thread 1a. A lubrication coating film including the solid lubrication coating film of this disclosure is formed on a contact surface (fastening surface 10) of the thread portion in at least one component of the box 2 and the pin 1.

The lubrication coating film including the solid lubrication coating film is formed on the thread portion for oil country tubular goods of the embodiment.

The solid lubrication coating film includes a binder resin and a solid lubricant dispersed in the binder resin.

The solid lubricant contains a soap component containing at least a metal soap from the metal soap and alkaline soap components, and a metal soap component accounts for 95% or more of a total weight of the metal soap and alkaline soap components.

Further, the metal soap and alkaline soap components constituting the solid lubricant include, for example, one or two or more kinds of soaps which are compounds composed of a fatty acid selected from the following A group and a metal element selected from the following B group.
A group: stearic acid, behenic acid, lauric acid, 12-hydroxystearic acid, oleic acid, montanic acid
B group: Na, K, Mg, Ca, Zn

For example, the weight of the metal soap accounts for 95% or more of the total weight of the metal soaps and the alkaline soaps.

The particle size of the metal soap is preferably 10 µm or less.

The binder resin is composed of a water-soluble or water-dispersible polymer, and the polymer is a polymer or a copolymer containing monomers belonging to acrylates or methacrylates by 90% or more.

The water-soluble or water-dispersible polymer constituting the binder resin is, for example, a polymer composed of one or more monomers selected from the following (1) to (4). The copolymer is a copolymer composed of two or more monomers thereof.

(1) Monomers including acrylates, methacrylates and individual derivatives of acrylates and methacrylates, as main components
(2) Monomers including acrylates and methacrylates, and individual derivatives of acrylates and methacrylates, and alkyl esters, vinyl esters, styrene esters, carboxylic acid esters, and individual derivatives of these esters
(3) Monomers grafted with respect to the above-described (1) and (2)
(4) One or both monomers of a vinyl compound and a urethane compound

Further, "being composed of a water-soluble or water-dispersible polymer and containing a polymer having an acrylate or methacrylate structure by 90% or more of a total weight of the binder resin" referred to herein reads as follows. That is, in a case of a copolymer, when a part of a copolymer structure contains only a part of an acrylate or methacrylate structure, the binder resin of the copolymer is treated as the "polymer having an acrylate or methacrylate structure" regardless of a weight other than the incorporated acrylate or methacrylate structure. Merely the weight does not mean the weight of "acrylate or methacrylate".

For example, the solid lubrication coating film has a film thickness of 1 µm or more and 100 µm or less and a soft film hardness of H or lower in pencil hardness.

Further, a base film (not illustrated) may be provided at a lower layer of the solid lubrication coating film.

At least one oil country tubular goods of the box and the pin is formed by the oil country tubular goods on which the lubrication coating film of this disclosure is formed.

When one oil country tubular goods of the box and the pin is the oil country tubular goods on which the lubrication coating film of this disclosure is formed, a coating film having a higher hardness than that of the solid lubrication coating film is preferably formed on a thread portion of the other oil country tubular goods.

The lower limit of the film thickness set to 1 µm or more is determined in order to comply with the definition that the film thickness suitable for lubrication and the size of the metal soap is equal to or less than a film thickness with which the metal soap cannot fly through the solid lubrication film. The upper limit of 100 µm or less is determined from a gap between a female thread/a male thread (coupling/pin) of the connection for oil country tubular goods. It is unavoidable that the solid lubrication film is unavoidably scraped to some extent at the time of the make-up/break-out. Additionally, there is a high concern that fragments derived from the scraped solid lubrication film cause powdery substances to move in conjunction with the make-up/break-out on the way of moving, are reformed and reattached, or cannot be reformed and reattached, clog the thread gap, and consequently cause galling. Depending on a type of thread, the thread gap between "ridge of pin and bottom of coupling" is empty with a size of about 100 µm. On the other hand, a thread gap between "bottom of pin and ridge of coupling" has a close contact structure. When the solid lubrication film has a size exceeding 100 µm, it is estimated that an absolute amount of the solid lubrication coating film that is unavoidably scraped to some extent at the time of the make-up/break-out increases and exceeds an amount that can be absorbed by the gap, and the galling often occurs actually. Hence, the upper limit was set to a preferable range of 100 µm or less. When the size of the solid lubrication coating film exceeds 100 µm, it is difficult to say NG always, but the number of times of M/B does not satisfy the definition, and the galling is likely to occur.

As described above, the chemical agent of this disclosure contains the binder resin component mainly composed of a water-soluble or water-dispersible polymer. In addition, the metal soap is contained as the main component of the solid lubricant, and a trace amount of an alkaline soap and additional additives serving as a solid lubricant other than the alkaline soap are added thereto. Moreover, the chemical agent of this disclosure includes a component system that allows addition of a solvent containing water as a main component and a small amount of an organic solvent.

The chemical agent having such a configuration realizes early drying after application and further achieves lubrication and rust prevention that can withstand use at a well by a solid lubrication coating film formed using the chemical agent. In this disclosure, lubrication of a threaded joint for oil country tubular goods is achieved reflecting the most severe condition as the environment to be used.

Hereinafter, the definition and the like of each element will be described in detail.

In this disclosure, the chemical agent and the solid lubrication coating film formed using the chemical agent are expected to have an early drying property, the corrosion resistance, and lubrication characteristics.

However, the parameters that realize individual necessary properties are associated with the necessary properties and thus are realized within the upper and lower limit ranges defined in this disclosure. First, a target necessary property will be described, and then a range of each parameter and a meaning thereof will be described.

### "Regarding target early drying, corrosion resistance, and lubrication characteristics"

The term "early drying property" as used in this disclosure indicates that drying can be performed in 5 minutes or less and desirably in 1 minute or less without heating and by blowing air. Alternatively, the early drying property means that drying can be performed in 30 minutes or less, desirably 15 minutes, and more desirably 5 minutes, when a drying target is left outdoors or indoors at an ambient temperature.

The drying referred to herein means a semi-cured level or a cured dry level beyond a touch dry level. Further, the paint terms such as touch dry and semi-dry are defined in accordance with JIS K5500-2000.

However, this disclosure is the invention aimed at a chemical agent having a low viscosity and good fluidity when applied to a connection structure for oil country tubular goods. Therefore, it is also assumed that the coated chemical agent unavoidably gathers at the 6 o'clock position, that is, the lowermost position, and the liquid accumulates or drips in the part. Consequently, a dry state of a thread position on an upper side of a clock, in terms of the clock, from 8 o'clock to 4 o'clock will be discussed with regard to the aforementioned early drying property. A part at which the chemical agent remains without drying due to accumulation, dripping, or the like of the chemical agent at a position from 4 o'clock to 8 o'clock, more precisely, at a position from 5 o'clock to 7 o'clock, is excluded from early drying. The reason why no problem arises even though the part is excluded is as follows. That is, although the coated chemical agent may remain semi-wet, there is a part in which a solid lubrication coating film is formed in the lowermost layer of a coating liquid applied to the semi-wet part, and thus there is no problem in the intactness of the film from the viewpoint of rust prevention. That is, only an insufficiently dried part remains at a part sandwiched between the dried lowermost layer film from the pipe surface and the outermost layer film at a part in contact with the atmosphere, so that a solid lubrication film formed by drying the lowermost layer can be realized in terms of rust prevention.

The corrosion resistance of this disclosure is not intended only for the corrosion resistance of the surface to which the chemical agent has been applied to vaporize and evaporate water. The corrosion resistance of this disclosure is a target property when a threaded tubular structure having a crest like the connection for oil country tubular goods, which are assumed as the most severe conditions. Moreover, this disclosure is directed to corrosion resistance in a state where, for example, a protective cover such as a protector is made up and broken out, that is, attached once, removed again, and the protector is removed. A slightly more severe condition than the actual necessary property is assumed.

At the connection of actual oil country tubular goods, it is possible to assume a situation where the solid lubrication coating film is partially abutted on the protector and the film is damaged when the protector is attached after the solid lubrication coating film is formed. This is because the protector is attached in this state, and the protector is left undisturbed outdoors or indoors.

In this disclosure, the lubrication characteristics are ensured by evaluating the lubrication characteristics with an evaluation result at an actual well or at a simulated well or with a make-up test with a power tong that can be approximated to the evaluation result.

This disclosure does not evaluate the superiority or inferiority of lubricity by a conventional make-up/break-out test simply using a short pin. The inventors have found that the solid lubrication coating film cannot be properly evaluated by conventional evaluation using a short pin.

Here, in lubrication of the threaded joint for oil country tubular goods, lubrication achieved by using a lubrication compound has been and is still the mainstream. Because the lubrication compound is like a viscous liquid, the compound moves in conjunction with make-up/break-out and works in a direction in which lubrication is achieved by a favorable method. Therefore, the evaluation can be performed without a large difference between the lubrication evaluation in the laboratory using the short pin and the evaluation at the actual well. However, in the lubrication by the solid lubrication coating film as in this disclosure, the solid lubrication coating film may be unavoidably scraped off, and fragments and powder thereof may not move in conjunction with the make-up/break-out unlike the compound. As will be described in detail below about that, a method of performing evaluation under conditions close to the actual well is contrived based on a laboratory, and the possibility of the solid lubrication coating film is determined by the lubrication behavior evaluated in a contrived test.

### "Regarding water-soluble or water-dispersible polymer"

In this disclosure, a water-soluble or water-dispersible polymer is used as the binder resin.

In this disclosure, a polymer that becomes a film after water flies out, that is, vaporizes and evaporates, is assumed, and thus the polymer of this disclosure refers to a synthetic polymer in a narrow sense. As the polymer of this disclosure, pectin, agar, starch-based materials, cellulose-based materials, and natural gums (alginic acid-based) materials which are well known as natural polymers are not used. In addition, as the polymer of this disclosure, a material retaining semi-dry wetting at a stage of drying, that is, water having been removed, is not used. Further, when carbon steel is coated with a material that is not completely dried, there may be a risk of inducing corrosion due to water.

Specifically, a water-soluble or water-dispersible polymer in this disclosure includes a polymer composed of one polymer and a copolymer composed of two or more monomers. The individual monomers correspond to monomers of the following (1) to (4).

(1) Monomers including acrylates, methacrylates and individual derivatives of acrylates and methacrylates, as main components
(2) Further, monomers including, because water-based, alkyl esters, vinyl esters, styrene esters, carboxylic acid esters, and individual derivatives of these esters and acrylates and methacrylates, and individual derivatives of acrylates and methacrylates
(3) Monomers grafted with respect to the above-described (1) and (2)
(4) One or both monomers of a vinyl compound and a urethane compound

In this disclosure, the polymer includes at least one polymer defined by (1) to (4), a copolymer composed of two or more monomers, or one or both of a polymer composed of a single monomer of (1) to (3) or a polymer composed of a copolymer of (1) to (3) which are composed of a polymer forming a copolymer with (4) or another compound.

The other compounds refer to maleic acid, sulfonic acid, styrene, carboxylic acid, and salts thereof, and monomers thereof.

Further, "being composed of a water-soluble or water-dispersible polymer and containing a polymer having an acrylate or methacrylate structure by 90% or more of a total weight of the binder resin" referred to herein reads as follows. In a case of a copolymer, when a part of a copolymer structure contains only a part of an acrylate or methacrylate structure, the binder resin of the copolymer is treated as the "polymer having an acrylate or methacrylate structure" regardless of a weight other than the incorporated acrylate or methacrylate structure. Merely the weight does not mean the weight of "acrylate or methacrylate". Further, the aqueous polymer referred to herein refers to a polymer having hydrophilicity by containing a polar or charged functional group in a structure of the polymer. For example, the aqueous polymer refers to a polymer containing a carboxy group, an amine functional group, a sulfonic acid, or the like in a main chain or a side chain.

The binder resin of this disclosure is dissolved in the solvent containing water as a main component, and when the chemical agent is applied, water is removed, that is, evaporated and vaporized, to form a film.

Further, since this disclosure is based on a basic premise that environment is taken into consideration, the chemical agent of this disclosure is designed without using heavy metals including lead and a material containing an alkyl group containing fluorine (F) of a group called PFAS, which have recently become a problematic issue.

The definitions for realizing the early drying property of the film after application of the chemical agent directly and indirectly affect the film characteristics of the chemical agent.

Next, an item group related to the early drying property will be described in detail.

It is desirable to use a polymer or a copolymer containing 90% or more of monomers belonging to acrylates and methacrylates at a stage of finally forming a film. Further, a polymer obtained by copolymerizing monomers including acrylates and methacrylates and another monomer at the time of copolymerization is regarded as an acrylate polymer and a methacrylate polymer and satisfies the definition of 90% or more.

The ratio set to 90% or more means that most of the polymer is composed of the acrylate polymer or the methacrylate polymer, and 10% or less of another polymer is allowable to be contained. Substantially, the copolymer is assumed to be composed of approximately 100% of an acrylate or methacrylate polymer.

### "Reason for demanding early drying and reason for target setting value"

A reason for demanding the early drying property is because, in reality, the chemical agent of this disclosure and the solid lubrication coating film formed using the chemical agent are used at a manufacturing site to form a film and are also demanded to be used at a use site.

In particular, when application to a threaded joint for oil country tubular goods is assumed, use of the following chemical agent is also assumed. That is, it is also assumed that the chemical agent is used particularly when the oil country tubular goods for tubing is temporarily pulled up due to a problem at a well site or when galling occurs and the oil country tubular goods are taken out and sent to a workshop. In this case, it is necessary to perform a complete operation in a category of clean and green solid lubrication coating film. The oil country tubular goods drawn from the well is washed with water or the like, and in order to prevent the thread portion from rusting, it is also possible to form a rust preventive film for solid lubrication with the chemical agent of this disclosure. Such a demand naturally occurs in use at a well site.

In this case, when a conventional wet compound is used, a storage compound is applied in most cases. For example, an oil-based viscous liquid-like compound such as KENDEX (trademark), OCTG ORANGE CORROSION INHIBITOR & STORAGE COMPOUND. In addition, in a situation where there is no storage compound, a lubricating compound to which heavy metals Pb and Zn are added is applied for rust prevention. In that case, the compound is not green. That is, the compounds containing harmful heavy metals are used.

On the other hand, in this disclosure, the chemical agent for forming a solid lubrication coating film is designed by assuming that the chemical agent is applied in the environment of the well site. That is, in this disclosure, in a fire-prohibited environment, it is required to dry the solid lubrication coating film as early as possible without using anything that may cause a fire, including a heater.

From another point of view, there is a measure for a case where the production system of each individual workshop is incomplete when thread cutting is performed on site.

A threading workshop has sufficient equipment for machining. In a case of a method using a conventional compound, surface treatment processing of a box connection is often outsourced and less likely to be carried in-house. The surface treatment processing is performed by, for example, Mn phosphate treatment or Cu plating. At the same time, it is not a pin connection coated with a viscous liquid storage compound and is rather not required to be dried. Therefore, the pin connection is usually shipped with a protector attached after application without a drying process.

When the chemical agent of this disclosure is employed on site, it is determined that it is difficult to expect an air blower, a dryer for hot air, or a heat treatment apparatus. Hence, it is determined that the chemical agent of this disclosure needs to be dried in 30 minutes or less, desirably 15 minutes, and more desirably 5 minutes or less by being left indoors or outdoors.

Regarding 30 minutes, it is assumed that one worker repeats work of deploying and arranging about 30 pin connections or box connections, sequentially coating one end portion of each of the oil country tubular goods from an end, returning to the original position, and sequentially coating an end portion on an opposite side from an end. Accordingly, 30 minutes is assumed to be taken to almost dry the coating when returning to the original position. In addition, when the protectors are prepared and the protectors are made up in order, 30 minutes is set as a time during which work can be performed without waiting time. If the drying time is 15 minutes, there is no problem even when processing with a smaller number of threads is assumed. Drying in 5 minutes or less is the most preferred goal.

However, in a factory or the like that manufactures a product with a lubrication coating film, blowing equipment and the like can be expected. Consequently, drying may be promoted not only by being left in the atmosphere but also by an air blowing facility such as a jet fan, a heater air blowing facility that can blow hot air, a heat treatment furnace, or the like. In that case, drying is performed preferably within 5 minutes, desirably within 3 minutes, and more desirably within 1 minute. It is preferable that the drying time is within such a degree in order not to hinder a line speed and handling at a site where a product with a solid lubrication coating film having good lubricity and anti-corrosion property is manufactured or to keep the line speed and the handling even at a low level when hindrance is unavoidable.

Further, when described in terms of an air volume of a fan and a blower, a normal electric startup fan has 2 to 4 m/s. However, in this disclosure, since it is assumed that drying is performed even by a weak hand fan held in a hand or the like, the drying time is evaluated by drying in which air blowing at 1 m/sec is assumed.

### "Method for applying chemical agent"

A basic composition of the chemical agent of this disclosure is a solvent (water + lower alcohol, ammonia, primary amine, as trace addition), a binder resin (water-based polymer as main component), and a solid lubricant (metal soap + trace alkaline soap).

The viscosity of the chemical agent is also an important parameter. Accordingly, as one element for achieving the early drying, it is preferable to perform liquid design in such a manner that the chemical agent has low viscosity. At this time, when the chemical agent is applied to an inclined surface, the chemical agent tends to flow rather than stay on the inclined surface. That is, it is preferable to adjust the viscosity of the chemical agent to a viscosity that makes the chemical agent flow after application.

For example, the viscosity is preferably 1,000 mPa·sec or less. This level is a level at which, when a member or a tubular member that is obliquely disposed is coated with the chemical agent, the chemical agent flows along the inclination. Further, the viscosity in this disclosure refers to the viscosity of the chemical agent in an unsealed state or at the start of application. According to such a definition of the viscosity, it is possible to avoid forming an inadvertent thick film when the chemical agent is applied. The lower limit of the viscosity is not set but is 40 mPa·sec or higher, for example. When a water-soluble or water-dispersible polymer material is added and formulated into an aqueous solvent, the viscosity does not become equal to the viscosity of water: 1 mPa·sec, and the viscosity tends to increase. Therefore, the viscosity is set to at least about 40 mPa·sec.

Setting of the viscosity of the chemical agent to 1,000 mPa·sec or lower makes it difficult to perform recoating or thick coating and results in an advantage that the coating film can have a uniform and thin thickness. Adjustment of the viscosity is achieved by adjusting the selection of monomers constituting the aqueous polymer, the concentration of metal soap or alkaline soap, and the formulating proportion including the solvent.

On the other hand, since the viscosity of the chemical agent is 1,000 mPa·sec or lower, the viscosity is low, and the chemical agent easily flows. Therefore, the chemical agent drips at an undried part, and the chemical agent solution tends to accumulate at the 6 o'clock position in terms of a clock. Accordingly, since the part is inadvertently thickened, even though the base is dried and formed into a film, only the accumulated part may not dry in the drying time.

Therefore, in the case of the lubrication of a tubular structure, a target of the drying time is to be checked with a drying situation of 12 o'clock in terms of the clock, broadly speaking, the upper half of 9 o'clock to 3 o'clock position. It is true that the solution accumulates at the 6 o'clock position, but only the non-dried chemical agent accumulates on the already dried part. Therefore, the lower part is dried at an initial stage of application.

Any coating method is allowed including brush coating, spray, immersion, manual coating, machine coating, and the like. After the coating is performed by actively utilizing the tendency of dripping, a process of directing an object coated with the chemical agent downward or inclining the object obliquely may be performed so that the coating material flows down. In addition, a tubular metal part is preferably coated with a brush or a spray while rotating rather than is stationary and is coated. In this manner, drying is also enhanced. Additionally, a remaining amount of the chemical agent that has not been formed into a film results in uniform recoating of the metal surface and supporting for forming an even film while the tubular metal part rotates. In addition, it is also possible to avoid accumulation at the one position.

### "Measures for realizing early drying property"

In this disclosure, in order to realize the early drying property of the water-soluble or water-dispersible polymer, an essential configuration and a preferable configuration including the following four configurations were contrived and utilized.

### <Essential configuration>

One essential configuration is a lower alcohol.

That is, since the lower alcohol is intended to be used even in a fire-prohibited environment, the lower alcohol which is a volatile organic solvent having adjusted concentration to have a flash point of 60°C or higher is utilized to achieve early drying. The concentration may be adjusted until the flash point of the chemical agent is desirably to 150°C or higher and more desirably 250°C or higher. Further, the use of thinner VOC is avoided. This is to ensure safety and hygiene of workers and enable the workers to work without setting up exhaust facilities such as drafts.

Another selected component is ammonia water.

Depending on a situation, the volatility of ammonia water is also utilized, and the concentration thereof is controlled within an appropriate range at a level at which the chemical agent can be used without using a draft facility.

One of the configurations is the concentration and particle size of the metal soap.

The concentration and the particle size of the contained metal soap are controlled within appropriate ranges to realize the early drying. The particle size of the metal soap is 10 µm or less. The particle size is desirably 5 µm or less, and more desirably 1 µm or less, thereby enhancing drying by increasing the surface area of the metal soap.

In this case, particles of the metal soap gather with each other and form lumps, and thus a measure needs to be taken to prevent an apparent size of the lumps from becoming larger than the individual size. This is realized by once dissolving the metal soap with the lower alcohol described above and then mixing the metal soap with a solvent composed of water or a mixed liquid of an aqueous polymer.

The metal soap also serves as a main component of the lubricant so that the metal soap constitutes 95% or more of the total weight of the solid lubricant in combination with the following alkaline soap. As for the overall mixing ratio, when the solvent is volatilized and evaporated to form a solid lubrication coating film, the total weight of the solid lubricant accounts for 0.05 to 1.0 in terms of 100 set as the weight of the binder resin. Further, the total weight of the solid lubricant is made of 95% or more of the metal soap.

This disclosure may use the alkaline soap as a supporting component for lubrication. However, the addition of a soap that is easily dissolved in water conversely tends to cause water which is the solvent to have a high viscosity and be in a gelated state. Therefore, there is an adverse effect that the viscosity of the chemical agent increases and time is taken to form a film. If the chemical agent is gelated too much, water does not completely escape, and the solid lubricant film cannot be formed in a dry state. Hence, it is necessary to define the upper limit of the appropriate amount of the alkaline soap at a trace level. Accordingly, the viscosity is set to fall within the following viscosity appropriate range. Additionally, in the solid lubricant described above, the upper limit of the content of the metal soap as a main component is 95% or more, that is, the upper limit of the content of the alkaline soap component is 5% or less.

The viscosity of the chemical agent is adjusted to 1,000 mPa·sec or less.

When a water-soluble or water-dispersible polymer material, an additive such as the metal soap, and the lower alcohol described above are contained and formulated as a chemical agent, it is necessary to have this viscosity. In short, the chemical agent is intended to have a low viscosity and a smooth liquid viscosity. The lower limit of the viscosity is not set but is about 40 mPa·sec or higher. When the water-soluble or water-dispersible polymer material is added and formulated into an aqueous solvent, the viscosity does not become equal to the viscosity of water: 1 mPa·sec, and the viscosity tends to increase. Therefore, the level is set to approximately 40 mPa·sec.

### <Preferred configuration >

When the chemical agent is applied to a tubular metal part which is a structure, it is preferable to apply the chemical agent while the tubular structure is rotated. It is preferable to continue rotating as it is even after application. This is because an effect similar to that of promoting drying by blowing or the like can be expected without accumulation of the chemical agent that is not dried after application at 6 o'clock due to rotating.

In addition, in the case of the tubular metal part (structure), the solution accumulates at the 6 o'clock position, and it takes time to dry only the outermost layer. It takes a long time to complete drying including the drying of the accumulated part. Therefore, it is preferable to utilize dropping from the 6 o'clock position when application is performed to the outside of the pipe. Alternatively, it is preferable to utilize taking out the chemical agent that tends to accumulate at the 6 o'clock position by inclining the tube obliquely on both the outer side and the inner side of the tube.

In addition, early drying may be achieved by utilizing a dry enhancing process such as air blower drying, hot air blower drying, infrared irradiation, ultraviolet irradiation, or heat treatment. In that case, synergy with the case of employing the above configuration can also be expected.

### "Utilization of lower alcohol, ammonia, or a primary amine, and flash point of whole chemical agent"

In this disclosure, the volatility of the lower alcohol and ammonia is utilized, and the metal soap having a fine size is selected as a main component of the solid lubricant. As a result, a surface area is increased to perform early drying, and the viscosity of the chemical agent itself is reduced to increase the fluidity. In this manner, vaporization and evaporation of water are promoted while avoiding thickening of the film.

The lower alcohol referred to herein is a combination of one or more kinds of lower alcohols selected from methanol, ethanol, isopropyl alcohol, normal propyl alcohol, and industrial ethanol.

Of the lower alcohols, those having four or more carbon atoms, that is, butanol and the like are highly unlikely to soluble in water. Therefore, in this disclosure, the lower alcohol having three or fewer carbon atoms is used. However, the lower alcohols have a low flash point when having a high concentration and cannot be used in the fire-prohibited environment. Consequently, the chemical agent is prepared to have a flash point of 60°C or higher and preferably 150°C or higher when the finally prepared chemical agent is obtained. More preferably, the chemical agent is prepared at a level at which the chemical agent is classified as a nonflammable material. When the lower alcohol group is contained in an amount of at least 0.5% or more, early drying can be realized by utilizing volatility thereof. Most desirably, the chemical agent comes into a situation in which the flash point does not occur and is not measured and comes into a state of being defined as nonflammable.

A lower alcohol group serves to enhance drying, and at the same time, plays a role of formulating the metal soap of the additive without forming lumps and avoiding gathering of the metal soap with a size maintained from the time of addition.

When the metal soap is simply dissolved in water, the metal soaps are not mixed in water and gather each other to form lumps due to the water repellency. Despite of an attempt to mix the metal soap having a particle size equal to or smaller than a prescribed value with the coating material, the metal soap is not sufficiently dispersed when directly mixed with water. Therefore, even in the state of a film, the film has an inclination, and the inclination is not good for both the lubrication and the corrosion resistance.

This disclosure first dissolves the metal soap in the lower alcohols. Accordingly, a method of mixing a mixture having a state in which the lower alcohol and the metal soap are mixed, to a dispersion liquid of a water-soluble or water-dispersible polymer and water is employed. In this case, it is necessary to adjust the concentration of the lower alcohol and the content of the metal soap to fall within the ranges defined by this disclosure.

In addition, in order to enhance early drying, the volatility of a lower alcohol which is main, and further ammonia and a primary amine may be utilized.

The ammonia referred to herein is ammonia water. As a commercially available chemical agent, ammonia water mixed at 28% to 30% is available. Incidentally, the ammonia water itself is nonflammable. Further, as commercially available ammonia water, ammonia water at a low level of 10% or 5% also exists. However, in this disclosure, concentrated ammonia water (28% to 30%) is used as a base for discussion.

Ammonia water may be used as a chemical agent for performing formulating in a neutral pH range preferable for an aqueous polymer, specifically, a pH of about 5 to 9. Ammonia water may be used with the volatilization effect of the lower alcohols.

Further, the use of primary amines belonging to the group having high volatility is also allowed under conditions not exceeding the above-described pH. Primary amines may be added so that the pH is shifted to the alkali side. Accordingly, the volatility is combined and utilized by using ammonia and a primary amines added to shift the pH from the neutral side to the alkali side.

However, regarding primary amines, particular attention is required for handling methylamine. Ammonia water can be classified as nonflammable. On the other hand, since methylamine is highly flammable, there is a high concern that a large amount of methylamine may lead to an accident. Hence, primary amines can be used in a small amount but should be handled carefully. In order to enhance drying with volatilization, the weight of the lower alcohol group, ammonia, and primary amines needs to be 30% or less with respect to the total solvent. The upper limit thereof is limited by a flash point or the like.

The chemical agent of this disclosure does not contain an alternative chlorofluorocarbon solvent that is sparingly soluble in water, a halogenated solvent such as trichloroethylene or tetrachloroethylene, and a chemical agent group called a thinner. These chemical agents should not be used, due to the global environment including health disorders. In addition, the chemical agent group called a thinner is known as chemical agents classified into toluene, xylene, benzene, mineral spirits, an ether group, and oils that are widely referred to as mineral oils, which are often harmful to health.

The reason why the flash point of the chemical agent of this disclosure is set to 60°C is as follows. In an actual well site, a temperature that can be assumed as a temperature generated when the threaded joint for oil country tubular goods is running while being made up is considered to be at most less than 60°C. Therefore, first, the temperature is prevented from falling below this temperature. In this manner, a risk of ignition and fire due to the volatile chemical agent is reduced to substantially zero. The reason why the desirable flash point is 150°C and the more desirable flash point is 250°C is as follows. That is, as a temperature at a well site, the highest temperature as a temperature of a well bottom is exceptionally assumed to 250°C, and 150°C may be assumed as the highest possible temperature that is the temperature of the well site after heat transfer. In order to reduce a risk to zero, the flash point of the chemical agent is set not to be measured and be classified as nonflammable.

### "Particle size and concentration of metal soap and alkaline soap content"

In this disclosure, the metal soap and the alkaline soap serve as the solid lubricants. Moreover, the metal soap has a small particle size, thereby, increasing the surface area and promoting drying so as to enhance early drying. The alkaline soap is once dissolved in a solvent containing water as a main component and then is incorporated into the film, or the soap deposited on the surface of the film or inside the film appears. However, the alkaline soaps do not have a liquid state at a final stage and thus is treated as solid lubricants.

In the following description, the solid lubricant means a soap component containing the metal soap and the alkaline soap.

In this disclosure, enhancement of the early drying is realized by simultaneously achieving multiple factors. An appropriate amount of an additive including the above-described volatile lower alcohol group, ammonia, and primary amines is added to the solvent, and the volatility thereof is utilized. Accordingly, based on the promotion of volatilization and evaporation of the aqueous solvent, the size of the metal soap is defined, and the metal soap is uniformly dispersed without forming lumps. In addition, the viscosity of the chemical agent is set to 1,000 mPa·sec or less so that the chemical agent cannot be applied thickly. At the same time, in order to simultaneously realize lubricity and corrosion resistance, it is necessary to adjust the addition amounts of the metal soap and the alkaline soap.

Regarding the particle size of the metal soap, the metal soaps having an average particle size of 10 µm or less, preferably 5 µm or less, and more preferably 1 µm or less are used. In this manner, the surface area of the metal soap is increased, and drying is enhanced. The smaller the particle size of the metal soap, the faster the chemical agent dries. However, it is important that the metal soaps are dispersed from each other to keep the particle size of the metal soaps and prevent the metal soaps from forming lumps. At the same time, in order to realize the intactness of the solid lubrication coating film, it is necessary that the particle size of the metal soap does not exceed the film thickness of the solid lubrication coating film. When the particle size exceeds the film thickness, the metal soaps appear to protrude from the film. Accordingly, when a strong torque is applied, the film receives significant damage, that is, peeling, scraping, and the like.

On the other hand, the alkaline soaps are not specified in terms of size because the alkaline soaps are soluble in water.

The metal soap is a main component as solid lubricant and serves as a key for enhancing the drying. On the other hand, the alkaline soap is formulated with expectation as a supporting role for lubrication.

At an actual well, when an actual size pin is set in a box connection, a pin connection is inserted straight into a box connection, and crests of the pin connection are rarely inserted into the box connection by hand, as assumed in an ideal state. In practice, the pin connection is unavoidably set slightly obliquely. Therefore, even when the pin connection is set by hand, the pin connection can be set only in a state in which about half of the crests of the pin connection are exposed. Therefore, in an initial stage of the make-up by a tong, the threads are abutted against each other in an unbalanced manner, and the surface of the solid lubrication coating film tends to be damaged. At this time, the alkaline soap is expected to support lubrication such that the box connection and the pin connection slide to a stable position from a state where the box connection and the pin connection completely mesh with each other. As illustrated in FIGS. 3A and 3B, lubrication is expected by the alkaline soap so that the spike-like torque is not generated until the torque is generated.

At the same time, the metal soap has water repellency. Therefore, even though the solid lubrication coating film is slightly damaged, an effect of repelling water is expected, and therefore an increase in corrosion resistance is effectively maintained. That is, corrosion resistance is secured by the metal soap.

The solid lubricant accounts for 95% or more by weight of the metal soap and the alkaline soap. In short, about 5% of another solid lubricant is allowed to be mixed, but it is intended that most of the solid lubricant is composed of a material belonging to broadly soap.

As described above, the content of the metal soap or the alkaline soap is considered from the balance in the whole chemical agent. In this case, when a volume of the solvent is converted to a weight with a specific gravity of 1, the metal soaps and the solvent are formulated to account for 0.7 to 100 times the weight of all solid lubrication components forming the film. The weight of the all of the solid lubrication components is the sum of the weights of the solid lubricant and the binder resin. That is, the solvent containing water as a main component is allowed in a wide formulating range except for a significantly thick or thin state. If the content exceeds 100, the amount of water is too much and it becomes difficult to dry. In addition, since there is a concern that water itself may cause rust, it is preferably 10 times or less, more preferably 2 times or less.

Since the solvent disappears during drying, what exists as a film is a binder resin component and a solid lubricant.

It is desirable that a weight ratio of the solid lubricant to the weight of the binder resin is 0.01 to 1 times, and the metal soap is formulated to have a weight accounting for 95% or more of the solid lubricant. When the lower limit is 0.1 times or less, a part that supports solid lubrication is too small, and an effect of improving lubrication cannot be expected. In this case, when a strong force is applied to the binder resin, there is a high possibility that the film is completely peeled off. This is because, as a result, a possibility of the galling increases. The reason why the upper limit is one time is that the amount of metal soap is too much with respect to the solvent, the intactness of the film itself is lost, and there is a remarkably high concern that the film will be cracked by a small load and exposed to the environment. In addition, it can be said that such a concentration is a limit to maintain the metal soap having a small size without forming lumps of particles of the metal soap.

### "Regarding kinds of metal soaps and alkaline soaps"

In this disclosure, the metal soaps and the alkaline soaps are assumed as follows. That is, the metal soaps and the alkaline soaps include one kind or a combination of two or more kinds of soaps including a compound composed of an A group of fatty acids and a B group of metal elements described below.
· A group (Stearic acid, behenic acid, lauric acid, 12-hydroxystearic acid, oleic acid, montanic acid)
· B group (Na, K, Mg, Ca, Zn)

In this disclosure, the metal soap is composed of one or more metal salts of an Mg salt, a Ca salt, and a Zn salt of the B group with respect to the A group of fatty acids. The metal salt of the alkaline soap is composed of metal salts of either or both of an Na salt or a K salt of B group.

Other alkali metal salts are commercially available, but other metal salts were excluded because the metal salts are not used in so-called applications in which the metal salts are dissolved in water and used for washing.

### "Application amount of chemical agent and drying time"

In the above description, the early drying enhancement has been described as being realized by simultaneously achieving a plurality of factors. That is, an appropriate amount of the lower alcohol group having volatility and ammonia and primary amines is added to the solvent under the restriction that the flash point does not become too low. Accordingly, based on the promotion of volatilization and evaporation of the aqueous solvent by using the volatility described above, the metal soaps have a small size, and the metal soaps are uniformly dispersed without forming lumps. In addition, the viscosity of the chemical agent is adjusted to 1,000 mPa·sec or less so that the chemical agent cannot be applied thickly.

Moreover, as a condition for ensuring early drying, it is preferable for early drying that the coating is actually homogeneously applied in an application amount of 0.1 g/mm² or less on the premise of the above conditions. Under the conditions, in the case of leaving the chemical agent in the atmosphere at normal temperature, it can be expected that drying is performed at normal temperature (15°C to 30°C, for example 24°C) within 30 minutes. In addition, in the case of air blow drying, when drying is performed by blowing air at 3 mm/sec or higher, an early drying property for enabling drying to be performed within 5 minutes can be expected at normal temperature.

The application amount is preferably, for example, 0.2 to 0.05 g/mm². When the chemical agent is further thickly applied, the drying time tends to be prolonged and the chemical agent unavoidably drips. Accordingly, only the surface layer of the part may not dry. In addition, when the application amount is less than 0.05 g/mm², drying tends to be accelerated, but the formed film has unreliable anti-corrosion property.

"Characteristics as film: film thickness, pencil hardness"

In this disclosure, when the chemical agent is dried to form a solid lubrication coating film, the film is preferably soft with a film thickness in a range of 1 µm to 100 µm and a pencil hardness of H or less.

Originally, a uniform film thickness of about 10 µm to 50 µm may be used. However, when a chemical agent having the viscosity described above is applied, the viscosity is small, and thus the coating material that cannot be formed into a film tends to move while dripping even when the drying is enhanced. In the case of a structure having a crest as in the structure of the thread for oil country tubular goods, it cannot be denied that the chemical agent tends to further accumulate at a bottom part of the crest, particularly at the 6 o'clock position in terms of a clock. In addition, a corner part of a ridge of the crest structure tends to be thin due to the surface tension of the chemical solution. Hence, the film thickness is set preferably in the above range in order to achieve both the lubrication and the corrosion resistance. When the thickness is less than 1 µm at the thinnest portion, there is a high concern of galling. In addition, when the thickness exceeds 100 µm, the film is scraped off during lubrication, and the peeled piece or powdery substances tend to cause galling. In addition, there is also a possibility that the film may be peeled off thoroughly and cause galling.

Here, as described above, the film thickness is a film thickness at a stage when the chemical agent is dried and forms the solid lubrication coating film. The film thickness is identified, for example, by observing, with a microscope, each cross section obtained by cutting the thread portion at four points (for example, four positions at every 90 degrees) in a circumferential direction of the thread portion in a longitudinal direction. In the observation, each film thickness at the thickest part and the thinnest part of the coating film is identified. Accordingly, checking is performed whether each film thickness is within the above-described range.

Further, when the tendency of a film thickness distribution is grasped from the past measurement results, the film thickness may be estimated as follows. That is, when the method for applying and drying the chemical agent is the same, it is also possible to estimate the maximum value and the minimum value of the film thickness at the entire thread portion by measuring a film thickness at a predetermined specific region with an electromagnetic film thickness meter.

The solid lubrication coating film has preferably a hardness of H or lower in terms of a pencil hardness.

This is because the solid lubrication coating film of this disclosure intentionally has a soft film quality and realizes lubrication characteristics on the assumption that the solid lubrication coating film itself is slightly scraped when strongly abutted. In addition, when the pencil hardness exceeds H and is hard, there is a possibility that the film may be peeled off thoroughly and the galling may increase.

Further, the film hardness is measured by pencil hardness. The measurement method is performed by a method specified in JIS K 5600-5-4 (1999). It is written in the JIS standards that this standard is a translation of the standard of "ISO/DIS 15184, Paints and varnishes - Determination of film hardness by pencil test". A test method of the pencil hardness of this disclosure is evaluated based on the JIS standard. That is, the films having pencil hardness of 6B to B to HB to F to H to 9H as evaluation targets and a hard film having a pencil hardness of 9H or higher are evaluated as ≤ 6B and ≥ 9H, respectively.

### "Case of coating on both sides of oil country tubular goods including threaded joint, case of coating on one side, and situation of coating on one side and having another type of solid lubrication coating film on a surface opposite thereto"

This disclosure encompasses all of a case where the solid lubrication coating film of this disclosure composed of the chemical agent of this disclosure is applied to both sides of a lubrication symmetry plane and a case where the solid lubrication coating film is applied only to one side, and no film is applied to the other side.

When the solid lubrication coating film of this disclosure is formed only on one part, the pencil hardness of the solid lubrication coating film of this disclosure is preferably softer than that of another type of lubrication coating film on the facing surface. The solid lubrication coating film of this disclosure is designed to be a soft film. This is because the lubrication characteristics are realized on the assumption that the lubricant is slightly scraped when lubrication is required, and thus this effect cannot be realized when the film is hard.

### "Evaluation method of corrosion resistance of solid lubrication coating film"

In the evaluation of corrosion resistance in this disclosure, a protector used for protecting crests is once made up and then broken out with respect to a structure to which a crest structure is attached such as a connection for oil country tubular goods attached to a steel pipe, and then salt water is sprayed to a solid lubrication coating film in a state where the protector is removed. Accordingly, it was determined on the basis of a criterion that a case where red rust appears on the entire surface is evaluated as NG. In short, as the evaluation of corrosion resistance, evaluation was performed by spraying salt water after damage that could be assumed is applied to the film.

Further, regarding conditions of spraying salt water, the spraying was performed by a method in accordance with JIS K 5600-7-1, under neutral salt water spraying conditions of 5% NaCl (35°C, humidity 98 to 99%, spray 1 to 2 mL/Hr/80 cm², pH 6.5 to 7.2), and was based on evaluation for 8 hours.

Here, the metal surface of the metal part which is a target by this disclosure includes, for example, a surface subjected to lathe processing or cutting processing, a polished surface, and the like. Further, as the evaluation of corrosion resistance, a part where mill scale remained was removed. Depending on the roundness or eccentricity of a tubular structure, a sample may have the mill scale attached on the crest structure. However, regarding the mill scale, when cleaning or the like is performed before the solid lubrication coating film is formed, water enters minute defects, holes, and portions like scratches of the mill scale. Accordingly, when a solid lubrication coating film is formed on the mill scale, even though the solid lubrication coating film is intact, spot rust may occur from the base steel. However, since the spot rust is not the rust of the solid lubrication coating film, the rust is excluded from the evaluation.

### "Evaluation method for lubrication"

Of the environments in which the solid lubrication coating film of this disclosure is used, the most severe lubrication conditions are employed. That is, lubrication is evaluated under make-up/break-out conditions of the connection for oil country tubular goods in accordance with the make-up at the actual well.

However, it is not realistic to evaluate the solid lubrication behavior of the connection for oil country tubular goods at an actual well or a simulated well from the viewpoint of cost and time for arranging an experiment.

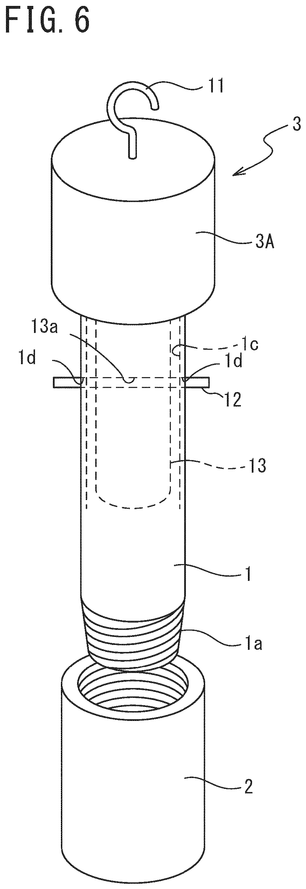

Therefore, in this disclosure, evaluation was performed using apparatuses as illustrated in FIGS. 5 and 6.

As a solution to such a problem, a weight equivalent to about one to three actual length pins can be loaded to an upper end portion of the short pin. Moreover, the initial set position of the connection is set to a state where about half of the pin crests are exposed with respect to the box connection, and the make-up is performed by a tong. Accordingly, the weight is applied at the time of the make-up, and the weight is not applied at the time of the break-out such that the pin connection is unstabilized. In this manner, a make-up situation at the actual well is simulated. In this manner, the upper and lower limits of each parameter for the lubrication characteristics can be set to values according to actual conditions. Hereinafter, this evaluation method is also referred to as the "evaluation with weight tong". Further, according to findings of the inventors, it has been confirmed that the evaluation with the weight tong can sufficiently imitate an evaluation at the time of make-up/break-out at the actual well.

The background of using the evaluation with the weight tong is as follows. That is, when determination is made depending on the evaluation performed by a horizontal power tong using a short pin having a length of about 1 m or the evaluation simply performed by a vertical power tong using a short pin, the "evaluation of the solid lubrication coating film" which is a target of this disclosure is erroneously evaluated as good. That is, the meanings of the upper and lower limits of the parameters defined by the invention are evaluated.

Regarding the solid lubrication coating film, there is a case where the solid lubrication coating film is unavoidably damaged at the time of the make-up/break-out, and then the peeled piece or the powdery peeled object does not always move in conjunction with the make-up/break-out. When not moving in conjunction, the thread gap is clogged to induce galling. However, in the evaluation using the short pin as in the related art, since the short pin is less likely to be damaged, there is a concern that a defective pin in the related art is evaluated as good. On the other hand, regarding lubrication by using a compound in the related art, since the compound is a viscous liquid-like compound, the compound moves in conjunction with the make-up/break-out. Therefore, there is no significant discrepancies between the evaluation result of the short pin and the evaluation at the actual well.

Further, in many pieces of past patent literature, in a lubrication test based on a solid lubrication coating film, there are indications that the number of times of make-up/break-out can be up to 15 to 20 times even with a large-diameter size of 9-5/8" or 13-3/8". However, in the solid lubrication coating film having poor lubrication characteristics as compared with the grease-like compound, the number of times of the make-up/break-out described above is substantially impossible. Such states appear to be due to the evaluation using short pins and horizontal or vertical power tong, which is often found in laboratories. In that case, the values of the characteristic evaluation are obtainable; however, in an example of large-diameter oil country tubular goods using a solid lubrication coating film, a level of 15 to 20 times of the make-up/break-out at the actual well rarely occurs.

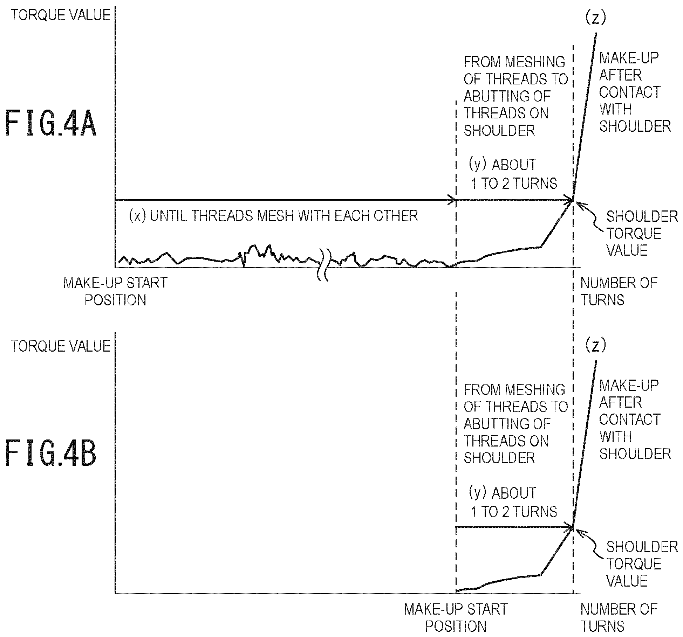

Based on the above-described idea, in the evaluation method in Examples to be described below, evaluation was performed by a weight tong test using the apparatus illustrated in FIGS. 5 and 6. The simulation is performed to evaluate the lubricity of the solid lubrication coating film by simulating a make-up condition as illustrated in FIGS. 3A and 4A under a condition of simulating a make-up/break-out test that is conducted at an actual well or a simulated well.

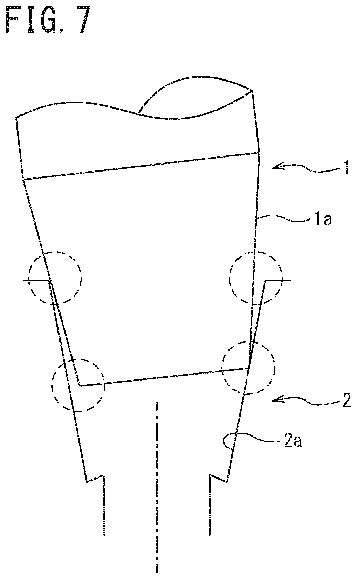

Since an actual size pin (pin having a length of about 12 m odd) is used at the actual well, it is not possible to "set the pin perfectly straight" at the time of initial setting, and the pin is mostly inserted obliquely. The pin connection having the actual length cannot be set ideally straight, even with an attempt to set the pin connection straight either with the support of a stabbing guide or with the support of a compensator. The pin connection is set to be slightly inclined. In reality, it is not possible to tighten the crests of the pin connection until the crests of the pin are hidden by the box connection. At a position where the pin connection can be inserted into the box connection to be further tightened and set by hand make-up, the threads are partially abutted against each other. Therefore, the crests of the pin do not advance further in a state where five or more ridges or about half of the total crests are exposed. Hence, at the beginning of the make-up with the tong, the pin connection and the box connection start to mesh at the normal position after several turns (up to about 6.3 turns in FIG. 3A) until the load is lifted. Since the thread for oil country tubular goods has a tapered structure like many threaded structures, the threads can finally mesh with each other at a stable position. As illustrated in FIG. 7, in the enlarged view, circled parts are strongly damaged. That is, cracks, peeling, and the like always occur at a microscopic level. That is, since a pin connection 1a is set slightly obliquely, the following occurs in relation to a crest portion 2a of a box connection 2. A position hit by the pin connection tends to be significantly damaged near a front end of the pin connection 1a, the center of the crest of the crest portion 2a of the box connection, the center of the pin connection 1a, and a mouth of the crest portion 2a of the box connection. "The vicinity of the center of the crest" means the vicinity of a position where the pin connection is inserted and abutted against the box connection. "The vicinity of the mouth of the crest portion 2a of the box connection" is the vicinity of the mouth of the box connection 2a when the pin connection is inserted.

FIG. 3A illustrates irregular rises of spike-shaped torque until several turns, that is, rise of steady torque, until reaching the stable position. Such behavior is directly linked to the fact that the pin connection and the box connection are irregularly abutted against each other, and thereby the solid lubrication coating film is damaged. Based on this, it is necessary to evaluate the lubrication of the solid lubrication coating film. When the threads are irregularly abutted against each other, the solid lubrication coating film is unavoidably scraped. The peeled pieces and fragments do not necessarily move in conjunction with the make-up/break-out of the threads. Accordingly, when the fragments clog the thread gap, the clogging is a main factor of galling. Rattling caused by the initial set position of the pin connection and the self-weight of the actual length pin are superimposed. In this manner, a load that is not uniform but unbalanced hits the pin connection and the box connection, and the solid lubrication coating film is unavoidably peeled off or becomes powdery. Accordingly, the influence of the clogging in the thread gap and the galling was evaluated by a method of simulating the influence in a laboratory.

FIG. 5 is an overall conceptual view of the test method, and FIG. 6 is an enlarged view of a part to which a weight 3 is applied. In a weight tong test, a vertical power tong 4 is used. Accordingly, the short connection 1 and the box connection 2 are fastened by the crests of the thread portion 1a of the pin and the crests of the thread portion 2a of the box. At this time, in order to simulate a situation where the crests do not mesh with each other, an initial temporary make-up position is set such that half of the total number of crests of the thread portion 1a of the pin are exposed from the box connection 2. This is one of the causes of rattling. From this state, a make-up is started by a power tong 4.

At this time, the weight 3 is attached to an opposite side to a make-up thread of the pin 1. A weight of the weight 3 is placed by being calculated as a load equivalent to one to three actual length pins, based on an actual length pin having an outer diameter and a wall thickness of the pin. In a case of 9-5/8" and 53.5#, one pin is about 1 ton (2,200 Lb), and a weight equivalent to connected three pins is about 3 tons (6,600 Lb). A weight equivalent to one pin is assumed to be a land well, and the weight equivalent to three pins is assumed to be the make-up at a sea well.

As illustrated in FIG. 6, the weight 3 in FIG. 5 is formed by joining an insertion rod 13 welded to a weight body 3A to an axisymmetric position of the weight. The insertion rod 13 is inserted into the pin 1 from above, and the weight is mounted on an upper end of the pin 1. Through-holes 1d and 13a are formed in the pin 1 and the insertion rod 13 in advance, respectively. A penetration rod 12 is inserted and set in the through holes 1d and 13a in order to integrate the weight 3 and the pin 1. A swivel hook 11 is welded to an axial center position of an upper portion of the weight 3 and has a suspended structure from a ceiling suspension device 20 via a suspension chain 21. At the time of make-up, a weight load is applied to the box connection, and the box connection is made up at 5 to 20 rpm until torque rises. The initial temporary make-up position and the highspeed turns of the make-up/break-out are the simulation of rattling. Once the torque has risen, a turning speed is reduced to 0.5 to 2 rpm and make-up is performed to reach the make-up position.

As a simulation of a make-up/break-out test at the actual well, a load of the weight 3 may be applied, or the load of the weight 3 may not be applied particularly, when loosening the make-up. At the time of break-out, it is preferable not to apply the load of the weight 3. In the following examples, the load of the weight 3 is not applied at the time of break-out. When the break-out is performed while the load is applied, the weight becomes a "weight" or a balancer when loosened from a make-up completion position, and the weight is loosened similarly to a state where the straight pin connection is lifted. Therefore, when the pin is broken out without rattling, the solid lubrication coating film is not damaged. Even under a condition where the load is not zero, a test is performed by lifting the load. The test can be performed under conditions that violent rattling occurs in a situation in which the load is loosened, including a case where the load is not completely set to zero, and the solid lubrication coating film is more likely to be damaged. Regarding the turning speed at the time of break-out, when the torque rises, the turning speed is started to be loosened to 0.5 to 2 rpm, and when the torque reaches about 1/10 of a make-up torque value, the turning speed is loosened to high speed turning of 5 to 20 rpm. In this example, the evaluation was performed by a method of separating the pin connection and the box connection from each other by the break-out after the break-out was finished, checking the respective surfaces thereof by blowing air to the surfaces to remove fragments and the like derived from the solid lubrication coating film, and continuing the make-up again.

Lubrication evaluation is determined using the following methods and criteria.

According to standards of ISO 13679, a casing size is determined to be a pass when make-up/break-out is performed three times or more, and a tubing size is determined to be a pass when make-up/break-out is performed ten times or more. However, when lubrication by a solid lubrication coating film is considered, the number of times of M/B tends to be worse than lubrication using a grease-like compound in the related art. The reasons are as follows. In the method using a grease-like compound in the related art, each time make-up/break-out is performed, the grease-like compound attached to the surface is washed with an organic solvent to inspect the surface, and then the grease-like compound is newly applied again. That is, this means that the main body of lubrication is supplied again. On the other hand, regarding lubrication using a solid lubrication coating film, the thread surface is cleaned by air blowing or the like, but a lubrication component is not particularly added in the middle of testing. As a result, it cannot be denied that the number of times of make-up/break-out using the solid lubrication coating film unavoidably tends to be small.

Hence, as a criterion for the number of times of make-up/break-out in this disclosure, the casing size was determined to be a pass when the number of times of make-up/break-out is three times or more. The tubing size was determined to be a pass when make-up/break-out was performed five times or more. In addition, the casing size was determined to be 7"or more, and the tubing size was determined to be less than 7". In addition to the number of times of M/B, when the pin is completely loosened after the break-out, the pin is released to an upper portion, and the pin connection surface and the box connection surface are observed after air blowing to directly check whether galling occurs visually. At the same time, the torque-turn chart was checked, and the determination was made based on whether an abnormal point is observed.

Determination of NG was made as follows. When the connections were not loosened while the make-up/break-out was performed the number of times of M/B, it was determined that the galling was determined by the number of times during the make-up/break-out, and the number of times of make-up/break-out was determined as the previous number of times. Regarding a case where the threads are completely loosened and the surfaces can be observed, in a case where slight galling occurs at a seal part, the case is determined as NG on the spot. Accordingly, the number of times of make-up/break-out is determined by the galling at the next time, and the make-up test by the weight tong is completed on the spot. In a case of very mild galling at the thread portion, repair is performed and the test is continued as is. In this manner, good and bad cases are sorted out with the number of times of make-up/break-out performed in accordance with the determination criteria described above.

### [Examples]

Hereinafter, Examples according to this disclosure will be described.

### (Example 1: Technique of formulating metal soap and method of mixing metal soap homogeneously)

In an examination group of Example 1, conditions were sorted according to how the metal soap is mixed with a liquid for the method of mixing the metal soap. A formulating state of the metal soap was examined using a chemical agent having the following formulating ratio.

As the solvent, a mixture of water as a main component, industrial ethanol, and ammonia water was used. As the solid lubricant, calcium stearate (metal soap: particle size of 8 to 10 µm or less) and sodium stearate (alkaline soap) were formulated at a weight ratio of 99: 1. As the binder resin, a copolymer of vinyl acetate and methacrylic acid composed of a monomer obtained by formulating 10 parts by weight of methacrylic acid in terms of 100 parts by weight of vinyl acetate was used. Further, the copolymer referred to herein corresponds to 100% of "polymer having an acrylate or methacrylate structure" described in this disclosure.

Regarding a formulating ratio thereof, the solvent (water) (measured by volume and converted to weight with a specific gravity of 1) was formulated to be three times the total weight of the solid lubricant (metal soap + alkaline soap) and the binder resin. In addition, the formulating weight ratio of the solid lubricant was 0.1 times the weight of the binder resin.

In the formulating, a mixture obtained by mixing a monomer for making a copolymer of vinyl acetate and methacrylic acid to water was prepared. As described below, the metal soap was formulated with industrial ethanol, and ammonia water was further added to adjust the pH to 7 to 8. Then, sodium stearate was finally formulated and mixed. An attempt to mix the metal soap in a basic agent was examined.

### <Condition 1>

Condition 1 represents an example in which calcium stearate was directly put into the basic agent and agitated according to the above-described formulating ratio. Condition 1 represents an example in which industrial ethanol is not used at all.

In Condition 1, the metal soap was not sufficiently mixed, and the metal soap floated on the surface and gathered with each other. That is, the metal soap could not be mixed well and homogeneously. The results supported the conventional knowledge that the metal soap is insoluble in water.

### <Condition 2>

In Condition 2, calcium stearate was put into the basic agent and agitated according to the above-described formulating ratio. Thereafter, industrial ethanol: 20 was put in water: 100 at a Vol/Vol ratio.

In Condition 2, calcium stearate was not sufficiently mixed, and calcium stearate floated on the surface and gathered with each other. That is, the metal soap could not be mixed well and homogeneously. Condition 2 indicates that metal soap is not mixed well even when ethanol is mixed later.

### <Condition 3>

Condition 3 represents an example in which the amount of industrial ethanol: 20 was set with respect to water: 100, and calcium stearate was agitated in industrial ethanol in a separate container, that is, mixed homogeneously, and then the mixture was put into the basic agent and agitated.

Condition 3 can be reported as an example of a substantially homogeneous mixture. Although calcium stearate is reported to be insoluble in both water and alcohol, it has been confirmed that a situation in which calcium stearate is finely dispersed in alcohol (ethanol) without forming lumps through gathering of grains of calcium stearate can be realized. Hence, it has been found that a situation in which the metal soap is homogeneously dissolved can occur by once dissolving the metal soap in ethanol (alcohol) and then developing and agitating the metal soap in the dissolved state in the basic agent.

### <Condition 4>

In Condition 4, an amount of industrial ethanol: 1 was set with respect to water: 100, and calcium stearate was sufficiently agitated in industrial ethanol in a separate container and then was put into the basic agent. Condition 4 represents an example in which, subsequently, an amount of industrial ethanol: 19 was put into the basic agent and agitated.

In Condition 4, at a stage of putting and opacifying the metal soap (calcium stearate) in a small amount of ethanol, the metal soap was not sufficiently mixed, and some grains of the metal soap floated on the surface and gathered with each other to form lumps. That is, Condition 4 is an example in which the metal soap is mixed into the basic agent, but Condition 4 corresponds to an example in which the metal soap cannot be mixed well and homogeneously.

### <Condition 5>

In Condition 5, an amount of industrial ethanol: 15 was set with respect to water: 100, and calcium stearate was sufficiently agitated in industrial ethanol in a separate container and then was put into the basic agent. Condition 5 represents an example in which, subsequently, an amount of industrial ethanol: 5 was put into the basic agent and agitated.

In a system of Condition 5, the metal soap (calcium stearate) came into a state of already being homogeneously mixed into industrial ethanol: 15. Therefore, from this state, Condition 5 can be reported as an example in which, even when industrial ethanol is further added, the metal soap is substantially homogeneously mixed.

What has been found from the examples of Conditions 1 to 5 is as follows. That is, a mixture obtained by homogeneously dissolving an appropriate amount or less of the metal soap once in an appropriate amount of an appropriate lower alcohol, that is, an amount in which the metal soap can be sufficiently mixed, is prepared and is put in the chemical agent itself and agitated. In this case, the metal soap can be mixed with the solvent containing water as a main component. Accordingly, in the case of an amount of metal soap that cannot be uniformly mixed in the volume of a lower alcohol, it has been found that there is a high tendency that the metal soap is not mixed even when industrial ethanol is additionally added after the metal soap is added to the basic agent.

Further, in the following examples, the examples are described on the premise that the chemical agents are agents in which the metal soap is uniformly mixed.

### (Example 2: Early drying property, application amount, and drying method)

An examination group of Example 2 is sorted out by good and bad depending on the degree of dryness by applying the chemical agent to a structure of the connection for oil country tubular goods. The formulating ratio of alcohol and ammonia water, a difference in alcohol type, and the size of the metal soap were examined. That is, the following individual agents made by different conditions were systematically prepared, and the early drying property was examined.

A solvent was composed of alcohol and ammonia water with respect to 100 set as the water-containing solvent, and the solid lubricant was composed of a metal soap and an alkaline soap. As the binder resin, a copolymer obtained by formulating 6 parts by weight of polyvinyl alcohol as a monomer in terms of 100 parts by weight of acrylic acid was used. The polyvinyl alcohol is, for example, Poval obtained by saponifying polyvinyl acetate obtained by polymerizing a vinyl acetate monomer.

A formulating ratio thereof corresponds to the details of the current examination. Accordingly, in a solvent system, when the solvent (water) was 100 (measured by volume and converted to weight with a specific gravity of 1), conditions of changing formulating conditions for industrial ethanol and ammonia water were prepared.

At the same time, a chemical agent obtained by changing a formulating balance of a total weight of the solid lubricant (metal soap + alkaline soap) and the binder resin and the solvent, and a weight ratio of the metal soap and the alkaline soap in the solid lubrication coating film is prepared. Moreover, a metal soap having different sizes was prepared. Accordingly, each drying condition was examined.

As a formulating method, sodium stearate was formulated and mixed in a second last stage. Finally, ammonia water (about 28%) was mixed at the end to adjust the pH to 6.5 to 8.5.

The method ascertained with the examination group of Example 1 described above, that is, the method of mixing the metal soap after mixing the metal soap in "lower alcohol (ethanol: Example 1)" in advance was used. The industrial ethanol referred to herein is high-purity ethanol. Here, the industrial ethanol indicates industrial ethanol mixed with methanol or isopropyl alcohol at a level without violating the Liquor Tax Act.

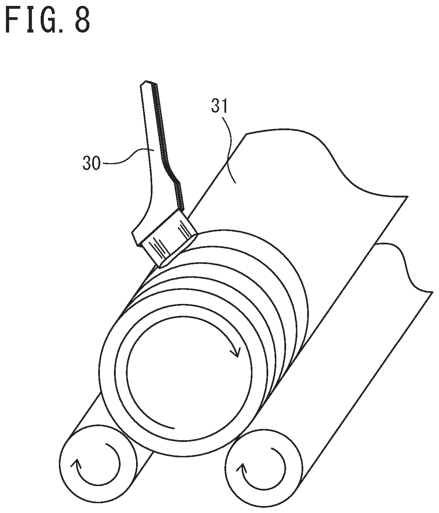

As common experimental conditions, a connection for oil country tubular goods was prepared to have a carbon steel pin connection having a grade of L80, a size of 5.5" and 23#, and a connection was a pin connection of JFEBEAR (trademark) and had both ends machined to have a short length of 700 to 1,000 mm. Regarding the method of applying the chemical agent, first, a general paint brush (Japanese Standard of brush: No. 20: brush width of 50 mm) was dipped in a chemical agent. Then, the short pins were placed on two rollers rotating at the same number of times and coated while rotating at a speed of about 10 seconds to 20 seconds per rotation cycle (see FIG. 8). The two rollers were two axially rotating rollers that were 5.5", 23# pin connections and were in contact at positions of 5 o'clock and 7 o'clock approximately. In addition, a brush 30 applied the chemical agent to sweep only 1 degrees in one direction and not to overcoat the same portion of the thread positioned at the same position of the brush, while the brush 30 touched the thread perpendicularly to thread rotation in a longitudinal direction of the pipe 31. The applied part was the entire thread, an end surface of a front end of the pin connection, about 10 mm inward, and up to about 30 to 50 mm in a non-crest region of a runout part of the crest. Both ends were evaluated as one set. Further, the brush rolls around, and thus coating is unavoidably performed to about 10 mm inward. The brush rolls around, and thus coating is unavoidably performed to about 30 to 50 mm in the non-crest region.

First, as an example of leaving the chemical agent to be dried in the atmosphere, the one side was coated and then was left. Subsequently, as an example of leaving the chemical agent to dry in the atmosphere, similarly, the other side was also coated while being rotated and was dried while being exposed to the atmosphere, for example, at a flow rate of 1 m/sec as a lower side of two-level air volume switching in air blowing modes of a hand dryer, while rotation continued. Accordingly, the drying time was recorded. Thereafter, the rotation of the pipe was stopped, and the drying time on a stationary drying side was also recorded. A sample which was not sticky without fingerprint mark from a touch by hand was determined to be dried.

Regarding a position at which the drying was determined, the drying was determined at a position on an upper side of the pipe, that is, between 8 o'clock and 4 o'clock positions in terms of a clock. Further, the same determination position was set also on the side being left and dried. When a large amount of the chemical agent was applied, the chemical agent was accumulated at the 6 o'clock position as the stationary position. However, since other parts only except for the surface were already hardened, drying of the coating material was determined based on the determination that there was no problem and used as a determination criterion.

The stationary drying was recorded as 30 minutes or longer when the drying cannot be regarded to be completed in 30 minutes. Further, an indoor temperature on that day was 25 to 28°C, and the drying was performed at almost the same temperature. A forced drying condition is set as a simple air blowing condition because the drying is slower than the hot air sending condition, which is a severe condition. However, when this drying condition is determined as OK, the drying can be determined as a pass under any forced drying condition, and thus, this means that the test is conducted under the most conceivable severe conditions.

A coating weight was calculated by a weight difference of the brush. However, since the chemical agent had a low viscosity and high fluidity, the semi-dry coating material appeared to be accumulated at the 6 o'clock position particularly on the side where the chemical agent was left after being applied. Ultimately, there was also a part to which the chemical agent dripped from the 6 o'clock position, but the application amount was obtained without reflecting such a dripping amount and simply measuring a difference in weight of the brush before and after application. In addition, the viscosity of the solution was about 850 mPa·sec, except for the exception, and there was no significant change under all conditions. The exception was below 850 mPa·sec when the mixing ratio of the solvent was increased. The exception with low fluidity is Nos. 2-10 to 2-14 below. A case where the formulating ratio of the solvent is increased is, for example, a case where a chemical agent thinly mixed with an aqueous solvent is used.

Further, in the following cases, a film weight will be described, but the film thickness will not be discussed. There is only one case where the film thickness was measured, and a cross-sectional microscope was performed on No. 2-5. The connection for oil country tubular goods had a pin connection shape with a thread bottom of 20 to 50 µm and a ridge portion of about 20 to 40 µm. In addition, the stabbing/flank portion (longitudinal wall part of the thread that is abutted when the thread is made up) and the load/flank portion (longitudinal wall part of the thread that is abutted when the thread is loosened) were 5 to 10 µm. Depending on how the brush touches, for example, there are variations in a seam of brush coating. The seam of brush coating is an abnormal part formed at a timing or the like of applying the coating solution again after dipping the brush again in the chemical agent or strongly pressing the brush to squeeze the coating solution from the brush when an output of the coating solution decreases. Therefore, in the examination of the examples, the pipe itself is also rotated by brushing. In this manner, uniform application was intended. However, since the viscosity of the solution itself is low, a film is formed from a dried place, but on the other hand, the coating material tends to accumulate at an undried coating material portion by rotation. That is, the coating material moves to a groove of a thread bottom; however, the coating material appeared to accumulate due to a film thickness difference. Characteristics were evaluated with this level of film thickness difference. However, regarding the evaluation of the drying itself, since the drying tends to be uniformly performed as long as the pipe is rotated, the determination of the completion of drying was made based on the drying time at the place where the drying is the slowest.

Details thereof are illustrated in Tables 1 to 3.

These are examination examples regarding the drying time. Further, in Tables 1 to 3, the lubrication characteristics of the connection for oil country tubular goods represented by the number of times of M/B are not subjected to evaluation determination. "*" in the tables means a result deviating from the definition. "**" means a result exceeding a preferable range.

Here, the evaluation and determination were made as inventive examples (drying OK)/inventive examples (Δ: drying time deviates from preferred range)/comparative example.

In the inventive examples (drying OK), the drying time falls within the appropriate range defined in claims 10 and 11 of the present application, and the range defined in claims 1 to 9 is cleared.

The inventive examples (Δ: the drying time deviates from the preferred range) is examples including the condition of NG in terms of the drying time. That is, the examples deviate from the preferred range. However, the examples refer to those falling within the scope of the invention defined by this disclosure. However, no make-up/break-out test is described.

The comparative examples are determined as NG from the viewpoint of the drying time or the formation of the solid coating film is not good, and the examples cannot be expected to achieve a pass in the number of times of M/B. In this respect, the examples are NG because it is difficult to conduct the make-up/break-out test itself with the examples. Moreover, the comparative examples refer to examples which deviate from the scope of the invention defined by this disclosure.

**[Table 1]**

| *: Result deviating from definition range | | | | **: Result deviating from preferable range | | | | | | | | | |
|---|---|---|---|---|---|---|---|---|---|---|---|---|---|
| No. | Solvent (substance other than water: in terms of 100 of water) | | Solid lubricant (chemical agent name and each weight of metal soap and alkaline soap) *Size of metal soap is written in parentheses | | | | Formulating Ratio | | Pencil hardness | Application amount (g) | Application amount (mg/mm²) | Drying time | Inventive example/comparative example regarding drying time |
| | Alcohol | Ammonia water (or primary amine) | Metal soap (size) | Weight of metal soap/total soap components (%) | Alkaline soap | Weight of alkaline soap/total soap components (%) | Solvent/(solid lubricant + binder resin) | Solid lubricant/binder resin | | | | | |
| 2-1 | -* | - | Calcium stearate (5 µm) | 100 | - | 0 | 1.0 | 0.15 | 2B | 13 g | 0.114** | Air blowing drying: 15 min or more* | Comparative example |
| | | | | | | | | | | | | Undisturbed drying: (not dried in 1 hr, further, large amount of undried chemical agent accumulates at 5 to 7 o'clock) | |
| | | | | | | | | | | | | Metal soap (water repellency) is not dissolved in solvent of pure water, solid lubricant can be homogeneously dispersed)* | |
| 2-2 | Industrial ethanol: 6 | - | Calcium stearate (5 µm) | 100 | - | 0 | 1.1 | 0.15 | 2B | 8g | 0.066 | Air blowing drying: 4.8 min | Inventive example (drying OK) |
| | | | | | | | | | | | | Undisturbed drying: 23 min | |
| 2-3 | Industrial ethanol: 6 | 0.5 | Calcium stearate (5 µm) | 100 | - | 0 | 1.1 | 0.15 | 2B | 8g | 0.065 | Air blowing drying: 4.5 min | Inventive example (drying OK) |
| | | | | | | | | | | | | Undisturbed drying: 21 min | |
| 2-4 | Industrial ethanol: 6 | 0.5 | Calcium stearate (5 µm) | 99 | Sodium stearate | 1 | 1.1 | 0.15 | 2B | 7g | 0.053 | Air blowing drying: 4.5 min | Inventive example (drying OK) |
| | | | | | | | | | | | | Undisturbed drying: 22 min | |
| 2-5 | Industrial ethanol: 6 | (Methylamine) | Calcium stearate (5 µm) | 99 | Sodium stearate | 1 | 1.1 | 0.15 | 2B | 7g | 0.053 | Air blowing drying: 4.5 min | Inventive example (drying OK) |
| | | | | | | | | | | | | Undisturbed drying: 24 min | |
| 2-6 | Industrial ethanol: 10 | 1.0 | Calcium stearate (5 µm) | 99 | Sodium stearate | 1 | 1.1 | 0.15 | 2B | 6g | 0.046 | Air blowing drying: 90 sec | Inventive example (drying OK) |
| | | | | | | | | | | | | Undisturbed drying: 15 min | |
| 2-7 | Industrial ethanol: 25 | 1.0 | Calcium stearate (5 µm) | 99 | Sodium stearate | 1 | 1.1 | 0.10 | 2B | 6g | 0.053 | Air blowing drying: 55 sec | Inventive example (drying OK) |
| | | | | | | | | | | | | Undisturbed drying: 5 min | |
| 2-8 | Industrial ethanol: 25 | - | Calcium stearate (5 µm) | 99 | Sodium stearate | 1 | 1 | 0.15 | 2B | 5g | 0.038 | Air blowing drying: 62 sec | Inventive example (drying OK) |
| | | | | | | | | | | | | Undisturbed drying: 6.5 min | |
| 2-9 | Industrial ethanol: 43 | 2.0 | Calcium stearate (5 µm) | 99 | Sodium stearate | 1 | 1.1 | 0.15 | 2B | 6g | 0.057 | Air blowing drying: 40 sec | Inventive example (drying OK) |
| | | | | | | | | | | | | Undisturbed drying: 4.5 min | |
| 2-10 | Industrial ethanol: 25 | 0.5 | Calcium stearate (5 µm) | 99 | Sodium stearate | 1 | 0.7 | 0.15 | 2B | 4g | 0.035 | Air blowing drying: 40 sec | Inventive example (drying OK) |
| | | | | | | | | | | | | Undisturbed drying: 4.5 min | |
| 2-11 | Industrial ethanol: 25 | 0.5 | Calcium stearate (5 µm) | 99 | Sodium stearate | 1 | 30 | 0.15 | 2B | 4g | 0.033 | Air blowing drying: 4.5 min | Inventive example (drying OK) |
| | | | | | | | | | | | | Undisturbed drying: 28 min | |
| 2-12 | Industrial ethanol: 40 | 0.5 | Calcium stearate (5 µm) | 99 | Sodium stearate | 1 | 20 | 0.15 | 2B | 3g | 0.024 | Air blowing drying: 4 min | Inventive example (drying OK) |
| | | | | | | | | | | | | Undisturbed drying: 25 min | |
| 2-13 | Industrial ethanol: 40 | 0.5 | Calcium stearate (5 µm) | 99 | Sodium stearate | 1 | 50 | 0.15 | 2B | 2 g | 0.015 | Air blowing drying: 5 min | Inventive example (drying OK) |
| | | | | | | | | | | | | Undisturbed drying: 25 min | |

**[Table 2]**

| *: Result deviating from definition range | | | | **: Result deviating from preferable range | | | | | | | | | |
|---|---|---|---|---|---|---|---|---|---|---|---|---|---|
| No. | Solvent (substance other than water: in terms of 100 of water) | | Solid lubricant (chemical agent name and each weight of metal soap and alkaline soap) *Size of metal soap is written in parentheses | | | | Formulating Ratio | | Pencil hardness | Application amount (g) | Application amount (mg/mm²) | Drying time | Inventive example/comparative example regarding drying time |
| | Alcohol | Ammonia water (or primary amine) | Metal soap (size) | Weight of metal soap/total soap components % | Alkaline soap | Weight of alkaline soap/total soap components % | Solvent/(solid lubricant + binder resin) | Solid lubricant/binder resin | | | | | |
| 2-14 | Industrial ethanol: 40 | 0.5 | Calcium stearate (5 µm) | 99 | Sodium stearate | 1 | 100 | 0.15 | 2B | 1g | 0.008 | Air blowing drying: 5 min | Inventive example (drying OK) |
| | | | | | | | | | | | | Undisturbed drying: 30 min | |
| 2-15 | Industrial ethanol: 40 | 0.5 | Calcium stearate (5 µm) | 99 | Sodium stearate | 1 | 130** | 0.15 | 2B | 1g | 0.009 | Air blowing drying: 12 min** | Inventive example (Δ: drying time deviating from preferable range) |
| | | | | | | | | | | | | Undisturbed drying: 25 min | |
| 2-16 | Industrial ethanol: 40 | 0.5 | Calcium stearate (5 µm) | 99 | Sodium stearate | 1 | 2.5 | 1.0 | 2B | 6g | 0.049 | Air blowing drying: 45 min | Inventive example |
| | | | | | | | | | | | | Undisturbed drying: 5 min | |
| 2-17 | Industrial ethanol: 40 | 0.5 | Calcium stearate (5 µm) | 99 | Sodium stearate | 1 | 2.5 | 1.0 | 2B | 12 g | 0.11** | Air blowing drying: 4.9 min | Inventive example (Δ: drying time deviating from preferable range) |
| | | | | | | | | | | | | Undisturbed drying: 35 min** | |
| 2-18 | Industrial ethanol: 40 | 0.5 | Calcium stearate (5 µm) | 95 | Sodium stearate | 5 | 25 | 1.0 | 2B | 6 g | 0.049 | Air blowing drying: 5 min | Inventive example (drying OK) |
| | | | | | | | | | | | | Undisturbed drying: 28 min | |
| 2-19 | Industrial ethanol: 40 | 0.5 | Calcium stearate (5 µm) | 90* | Sodium stearate | 10** | 2.5 | 1.5* | 2B | 6g | 0.050 | Air blowing drying: 5 min | Comparative example |
| | | | | | | | | | | | | Undisturbed diving: more than 30 min** | |
| | | | | | | | | | | | | Too much alkaline soap component causes viscosity of coating agent to increase, and uniform application isdifficult to achieve, when applying the chemical agent | |
| 2-20 | Industrial ethanol: 40 | 0.5 | Calcium stearate (5 µm) | 80* | Sodium stearate | 20** | 2.5 | 1.5* | Too much alkaline soap component causes viscosity of coating agent to increase, and uniform application is difficult to achieve, when applying the chemical agent. In addition, drying time to dry exceeds defined time | | | | Comparative example |
| 2-21 | Methanol: 10 | 1.0 | Calcium stearate (5 µm) | 99 | Sodium stearate | 1 | 1.1 | 0.15 | 2B | 6g | 0.046 | Air blowing drying: 90 sec | Inventive example (drying OK) |
| | | | | | | | | | | | | Undisturbed drying: 15 min | |
| 2-22 | Isopropyl alcohol: 10 | 1.5 | Calcium stearate (5 µm) | 99 | Sodium stearate | 1 | 1.1 | 0.15 | 2B | 6g | 0.046 | Air blowing drying: 90 sec | Inventive example (drying OK) |
| | | | | | | | | | | | | Undisturbed drying: 15 min | |
| 2-23 | Isopropyl alcohol: 10 | 1.5 | Calcium stearate (5 µm) | 99 | Sodium stearate | 1 | 1.1 | 0.15 | 2B | 12 g | 0.091 | Air blowing drying: 4.8 min | Inventive example (drying OK) |
| | | | | | | | | | | | | Undisturbed drying: 29 min | |
| 2-24 | Isopropyl alcohol: 10 | 1.5 | Calcium stearate (5 µm) | 99 | Sodium stearate | 1 | 1.1 | 0.15 | 2B | 15 g | 0.12** | Air blowing drying: 6 min** | Inventive example (Δ: drying time deviating from preferable range) |
| | | | | | | | | | | | | Undisturbed drying: more than 30 min** | |

**[Table 3]**

| *: Result deviating from definition range | | | | **: Result deviating from preferable range | | | | | | | | | |
|---|---|---|---|---|---|---|---|---|---|---|---|---|---|
| No. | Solvent (substance other than water: in terms of 100 of water) | | Solid lubricant (chemical agent name and each weight of metal soap and alkaline soap) *Size of metal soap is written in parentheses | | | | Formulating Ratio | | Pencil hardness | Application amount (g) | Application amount (mg/mm²) | Drying time | Inventive example/comparative example regarding drying time |
| | Alcohol | Ammonia water (or primary amine) | Metal soap (size) | Metal soap size | Weight of metal soap/total soap components % | Alkaline soap | Weight of alkaline soap/total soap components (%) | Solvent/(solid lubricant + binder resin) | | | | | |
| 2-25 | Normal propyl alcohol: 10 | 1.5 | Calcium stearate (5 µm) | 99 | Sodium stearate | 1 | 1.1 | 0.15 | 2B | 6g | 0.046 | Air blowing drying: 90 sec | Inventive example |
| | | | | | | | | | | | | Undisturbed drying: 15 min | |
| 2-26 | Isobutyl alcohol: 10* | 1.5 | Calcium stearate (5 µm) | 99 | Sodium stearate | 1 | 1.1 | 0.15 | Not possible to well mix metal soap. Further, dissolution of isobutyl alcohol in water cannot be expected to reach level of propanol. | | | | Comparative example |
| 2-27 | Industrial ethanol: 10 | 1.0 | Calcium stearate (2 µm) | 99.5 | Sodium stearate | 0.5 | 1.1 | 0.15 | 2B | 6g | 0.046 | Air blowing drying: 70 sec | Inventive example (drying OK) |
| | | | | | | | | | | | | Undisturbed drying: 13 min | |
| 2-28 | Industrial ethanol: 10 | 1.0 | Calcium stearate (10 µm) | 99.5 | Sodium stearate | 0.5 | 1.1 | 0.15 | 2B | 6g | 0.046 | Air blowing drying: 2.5 min | Inventive example (drying OK) |
| | | | | | | | | | | | | Undisturbed drying: 22 min | |
| 2-29 | Industrial ethanol: 10 | 1.0 | Calcium stearate (25 µm)** | 99.5 | Sodium stearate | 0.5 | 1.1 | 0.15 | 2B | 6g | 0.046 | Air blowing drying: 7 min or more** | Inventive example (Δ: drying time deviating from preferable range) |
| | | | | | | | | | | | | Undisturbed drying: 28 min | |
| 2-30 | Industrial ethanol: 25 | 0.5 | Calcium stearate (0.5 µm) | 99 | Sodium oleate | 1 | 2.5 | 0.2 | 2B | 7g | 0.053 | Air blowing drying: 44 sec | Inventive example (drying OK) |
| | | | | | | | | | | | | Undisturbed drying: 8 min | |
| 2-31 | Industrial ethanol: 25 | 0.5 | Calcium stearate (1 µm) | 99 | Potassium stearate | 1 | 2.5 | 0.2 | 2B | 7g | 0.057 | Air blowing drying: 52 sec | Inventive example (drying OK) |
| | | | | | | | | | | | | Undisturbed drying: 11 min | |
| 2-32 | Industrial ethanol: 25 | 1.0 | Ca montanate (5 µm) | 99 | Sodium 12 hydroxystearate | 1 | 2.5 | 0.2 | 2B | 6g | 0.049 | Air blowing drying: 86 sec | Inventive example (drying OK) |
| | | | | | | | | | | | | Undisturbed drying: 14 min | |
| 2-33 | Industrial ethanol: 25 | 0.5 | Ca behenate (5 µm) | 99 | Sodium laurate | 1 | 0.7 | 0.15 | 2B | 8g | 0.070 | Air blowing drying: 55 sec | Inventive example (drying OK) |
| | | | | | | | | | | | | Undisturbed drying: 4.5 min | |
| 2-34 | Industrial ethanol: 10 | 1.0 | Calcium stearate (5 µm) | 99 | Sodium oleate | 1 | 0.3 ** | 0.2 | 2B | 6g | 0.046 | Since metal soap of solid lubricant cannot well melt in solvent, time and effort is taken to uniformly apply chemical agent, while performing strong agitation each time applying chemical agent. | Inventive example (drying OK) |
| | | | | | | | | | | | | ** (Air blowing: 9.5 sec) | |

Nos. 2-1 to No. 2-3 are examples in which no alkaline soap is contained. At the same time, No. 2-1 is an example in which neither alcohol nor ammonia water is contained in the solvent.

No. 2-1 is an example for examination of the dry state of the binder resin (copolymer of acrylic acid and vinyl alcohol) examined in Examples in a state in which the coating is performed by slightly exceeding the limit of thick coating. This is the drying property of the binder resin of the composition. This example corresponds to a comparative example. Specifically, the solvent is only water and does not contain alcohol, ammonia water, or the like. Since only water is used, calcium stearate characterized by water repellency may not be uniformly dispersed and dissolved even at the chemical agent stage. Therefore, even in a state of being a solid coating film, many calcium stearate components are not incorporated into the film and are placed on the film, and it cannot be said that the film is good as a solid lubrication coating film. In addition, this is an example in which the drying time is also long and is regarded as a comparative example.

In both No. 2-2 and No. 2-3, the volume ratio (Vol/Vol) of ethanol to water 100 is 6. The former is an example in which ammonia water is not contained, and the latter is an example in which ammonia water is mixed at a proportion of 0.5. In both examples, the application amount is within the target range, and both air blow drying and undisturbed drying satisfy the target value. That is, both examples correspond to the inventive examples (drying OK). No. 2-3 has a slightly shorter drying time and is improved. This indicates a possibility that the volatility leads to a somewhat good result due to the influence of the ammonia water content.

No. 2-4 is an example in which an alkaline soap component was slightly added to No. 2-3. The metal soap (calcium stearate) and alkaline soap (sodium stearate) are added in a weight proportion of 99: 1. The drying time is not inferior to No. 2-3, and this example is an inventive example.

No. 2-5 is an example in which methylamine of primary amine is added as ammonia water of No. 2-4. This example has the same level of the drying performance as No. 2-4 and is an inventive example.

No. 2-4 described above and Nos. 2-6 to 2-9 are examples in which the proportions of industrial ethanol are increased to 6, 10, 25, 25, and 43 with respect to 100 of the water volume, in this order. In addition, these examples correspond to examples of 0.5, 1.0, and 1.0, no addition, and 2.0 of ammonia, in that order.

In general, the drying time was shortened in No. 2-4, No. 2-5, No. 2-7, No. 2-8, and No. 2-9, in that order, in both the air blow drying and the undisturbed drying. These examples represent that the greater the industrial ethanol, the faster the drying. These are all inventive examples (drying OK).

The example of No. 2-7 represents that drying can be enhanced only with the volatilization capacity of industrial ethanol without ammonia. From the examples of Nos. 2-4, 2-5, 2-6, and 2-8, it can be interpreted that ammonia has a good influence on early drying.

In addition, the example of No. 2-9 means that the sum of alcohol and ammonia water is 45 with respect to the water volume, and there is no problem in drying up to this range.

Examples of Nos. 2-10 to 2-15 are results of examining a weight ratio of the solvent to the solid content (weight of solid lubricant component + total weight of binder resin). Further, the weight of the solvent refers to a weight obtained by converting the volume of the solvent composed of water, alcohol, and ammonia, with a specific gravity of 1.

No. 2-10 and No. 2-11 are examination examples in which industrial ethanol was used by 25 with respect to 100 set as the water volume. Nos. 2-12 to 2-15 are examination examples of industrial ethanol by 40. In the former group, the weight ratio of the solvent to the solid content is 0.7 and 30, in this order. In the latter group, the examples have the water ratios of 20, 50, 100, and 130, in this order.

When the weight ratio of the solvent to the solid content is up to 100, the target drying time in this disclosure can be cleared, which corresponds to the inventive example (drying OK) (Nos. 2-11 to 2-14). On the other hand, the example of No. 2-15 having 130 which is more than 100 fails to achieve the target drying time in the undisturbed drying, which is an inventive example (Δ: drying time deviates from preferred range). This means that the basic structure of this disclosure is satisfied although the standard of the drying time has not been cleared. However, the lubrication behavior is not described in Example 2.

Nos. 2-16 to 2-20 represent examination results when the alkaline soap content was increased. This is also an examination example (the weight ratio of the solvent is 2.5,), in which the amount of solvent is increased, and is an example in which the alcohol content is also large. In the examples, the weight ratios of the metal soap and the alkaline soap are 99:1, 99:1, 95:5, 90:10, and 80:20, respectively. Moreover, in the examples of No. 2-16 and No. 2-17, the application amount is different, and the former has 6 g and the latter has 12 g, and the application amount is slightly more than the target value of 0.1 g/mm².

Nos. 2-16 and 2-17 satisfy the standard for air blow drying. However, in the undisturbed drying, the former is an example in which the standard has been cleared, and the latter is an example in which the standard has not been cleared. Since the application amount in the latter is twice as large as that in the former, it is estimated that the application amount exceeds the standard for the drying time. When the application amount exceeds the prescribed value: 0.1 g/mm², it is indicated that the example may not satisfy the standard of the preferred range of the drying time particularly in the undisturbed drying. The former corresponds to the inventive example (drying OK), and the latter corresponds to the inventive example (Δ: drying time deviates from the preferred range). This is because the range defined by the present application is cleared except for a suitable drying time.

No. 2-18 is an example in which the upper limit of the defined content value of the alkaline soap is contained. The drying time is more prolonged than that of No. 2-15, but the target has been cleared. This corresponds to an inventive example (drying OK).

On the other hand, in Nos. 2-19 and 2-20, the amount of the alkaline soap component (sodium stearate) exceeded the target and is added too much, the viscosity of the solvent is increased, and it became difficult to apply the chemical agent uniformly. Moreover, even if the chemical agent is applied, it takes too long time to dry, and the target value cannot be cleared. Consequently, the example indicates that it is not good to contain too much alkaline soap. In particular, No. 2-20 is an example in which the drying time is longer than the standard of the preferred range of the drying time, and the viscosity is excessively increased, so that the application cannot be uniformly performed, and the application is not easily performed. In No. 2-20, unevenness or dripping drying was very slow, and the drying time could not be accurately found. Therefore, Nos. 2-19 and 2-20 correspond to comparative examples.

Examples of Nos. 2-21 to 2-26 are a series of examinations of lower alcohols.

No. 2-21 represents an examination example of methanol, No. 2-22 to No. 2-24 represent examination examples of isopropyl alcohol, No. 2-25 represents an examination example of normal propyl alcohol, and No. 2-26 represents an examination example of isobutyl alcohol.

Nos. 2-22 to 2-24 are results of examining the influence of the film thickness of the solid lubrication coating film.

Nos. 2-21 to 2-25 are examples of a component having up to three carbon atoms. When methanol, ethanol (examples of Nos. 2-2 to 2-20), isopropyl alcohol, or normal propyl alcohol is used, a defined amount of the metal soap content is contained. At the same time, when 0.1 g/mm² or less, which is the target value of the film thickness, is satisfied, it indicates that the drying target can be satisfied. Nos. 2-21 to 2-23 and 2-25 correspond to inventive examples (drying OK).

On the other hand, No. 2-24 is an example in which the film thickness exceeds the target value with isopropyl alcohol and is an example in which the film thickness does not satisfy the target value in the preferable drying time range. Since the basic structure of this disclosure is satisfied (experimental data is omitted), it corresponds to the inventive example (Δ: drying time deviates from the preferred range).

No. 2-26 was an example of isobutyl alcohol having four carbon atoms. As a problem before application, the metal soap was not well mixed with the aqueous solvent at the time of preparation of the chemical agent, and thus, the example corresponds to a comparative example. As the number of carbon atoms increases, the solid solubility capacity with water gradually decreases. From this result, even when the metal soap can be uniformly dispersed and dissolved in isobutyl alcohol, the following can be said when the metal soap is considered as a coating material in a state of being developed in water and mixed. That is, it is presumed that the dissolved isobutyl alcohol and metal soap is not mixed well in the water-based solvent. Therefore, before the drying time was discussed, a uniform coating film was not formed, and therefore the coating film was positioned as a comparative example.

Examples of Nos. 2-27 to 2-33 are the results of examining the influence of the types of metal soap and alkaline soap and the particle size of the metal soap. Nos. 2-27 to 2-29 are examples of calcium stearate and sodium stearate. No. 2-30 is an example of zinc stearate and sodium oleate. No. 2-31 is an example of magnesium stearate and potassium stearate. No. 2-32 is an example of calcium montanate and sodium 12-hydroxystearate, and No. 2-33 is an example of calcium behenate and sodium laurate. Accordingly, the influence of the fine particles of the metal soap is examined.

As in the example of No. 2-29, when the particle size of the metal soap is 25 µm, the drying time becomes longer than defined. However, in the case of a particle size of 10 µm or less in other examples, the definition of the preferred range of the drying time is satisfied, and early drying is possible. That is, it is found that, although the drying tends to be enhanced when the metal soap is added, setting the particle size to 10 µm or less tends to achieve the target drying time. In addition, it has been found that the types of metal soaps and alkaline soaps can be applied without any particular problem within the scope of this disclosure.

No. 2-29 can be determined as inventive example (Δ: drying time deviates from preferred range), and Nos. 2-27 to 2-34 correspond to inventive example (drying OK).

The reason why No. 2-29 corresponds to inventive example (Δ: drying time deviates from preferred range) is as follows. That is, the metal soap (calcium stearate) is 25 µm, and as described above, there is often a region where the film thickness of the longitudinal wall-like part of the connection for oil country tubular goods, the film thickness of the stabbing/flank and the load/flank is smaller than the particle size of the metal soap. Therefore, it can be assumed that the intactness of the film cannot be always maintained during lubrication, and a problem may occur in long-term rust prevention.

### (Example 3: Influence of each condition from the viewpoint of lubricity)

The examination group of the Example 3 describes the invention based on the results of examining the lubrication behavior by applying a chemical agent to the structure of the connection for oil country tubular goods to form a film and performing a weight tong test.

A weight of the entire weight was applied at the time of make-up. On the other hand, at the time of break-out, rattling was simulated to be lifted by a ceiling crane 20 in FIG. 5 so that the weight load become close to 0. The examination details of combinations of various conditions were systematically prepared, and the propriety was determined by the lubrication behavior, that is, the number of times of M/B.

The metal soap component was dispersed in a lower alcohol in advance to be homogeneously dispersed, and uniformly dissolved to obtain a chemical agent, by reflecting the details examined in Example 1.

As already described above, the determination criteria for the lubrication characteristics by the weight tong were that the casing size was determined to be a pass when make-up/break-out was performed three times or more. The tubing size was determined to be a pass when make-up/break-out was performed five times or more. In addition, the casing size was determined to be 7"or more, and the tubing size was determined to be less than 7". In the connection test standard such as API-5C5, the tubing equivalent material is based on achieving 10 times or more of M/B in the conventional lubrication requirement characteristics with an API-mod compound. However, with the solid lubrication coating film, since it is unavoidable that the film itself is gradually scraped, the number of times tends to decrease, and thus in the present application, 5 times or more are set to a pass range.

In addition to the number of times of M/B, once fully loosened after make-up, the pin was released to the top. Accordingly, the pin connection surface and the box connection surface are observed after air blowing to directly check whether galling occurs visually. At the same time, the torque-turn chart was checked, and the determination was made based on whether an abnormal point is observed. The determination method was as follows. When the connection were not loosened while the make-up/break-out was performed the number of times of M/B, it was determined that the galling was determined by the number of times during the make-up/break-out, and the number of times of make-up/break-out was determined as the previous number of times.

Regarding a case where the threads were completely loosened and the surfaces could be observed, in a case where slight galling occurred at a seal part, the case was determined as NG. Accordingly, the number of times of make-up/break-out is determined by the galling at the next time thereof, and the number of times of make-up test by the weight tong is recorded on the spot, and the make-up/break-out test is ended. In a case where galling does not occur at the seal part, but very lightly galling occurs at the seal part, repair is performed and the test is continued as is. In this manner, good and bad cases are sorted out with the number of times of make-up/break-out performed in accordance with the determination criteria described above.

The conditions and results are illustrated in Tables 4 to 12. The symbol "*" in each parameter in the table means a result deviating from the definition. The symbol "**" means a result exceeding a preferable range.

**[Table 4]**

| *: Result deviating from definition range | | | | **: Result deviating from preferable range | | | | | | | | | |
|---|---|---|---|---|---|---|---|---|---|---|---|---|---|
| No. | Steel type | OD (inch) | WT (LPF) | Connection type | Solvent (substance other than water: in terms of 100 of water) | | | | Solid lubricant (chemical agent name and each weight of metal soap and alkaline soap) *Size of metal soap is written in parentheses | | | | |
| | | | | | Alcohol | Ammonia water | Others | Sum of volumes of water and low alcohol/sum of volume of entire solvent (%) | Metal soap | Alkaline soap | Others | Formulating ratio-1 metal soap/(metal soap + alkaline soap) (%) | Formulating ratio-2 (metal soap + alkaline soap)/entire solid lubricant (%) |
| 3-1 | P110 | 7" | 38# | JFELION | Industrial ethanol: 15 | Ammonia water 2 | - | 98.3 | Calcium stearate (5 µm) | Sodium stearate | - | 99% | 100% |
| 3-2 | P110 | 7" | 38# | JFELION | Industrial ethanol: 15 | Ammonia water 2 | - | 98.3 | Calcium stearate (1 µm) | Sodium stearate | - | 99% | 100% |
| 3-3 | P110 | 7" | 38# | JFELION | Industrial ethanol: 15 | Ammonia water 2 | - | 98.3 | Calcium stearate (10 µm) | -** | - | 100% | 100% |
| 3-4 | P110 | 7" | 38# | JFELION | Industrial ethanol: 15 | Ammonia water 2 | - | 983 | Calcium stearate (10 µm) | Sodium stearate | - | 99% | 100% |
| 3-5 | P110 | 7" | 38# | JFELION | Industrial ethanol: 15 | Ammonia water 2 | - | 983 | Calcium stearate (25 µm**) | Sodium stearate | - | 99% | 100% |
| 3-6 | P110 | 7" | 38# | JFELION | Industrial ethanol: 15 | Ammonia water 2 | - | 98.3 | Calcium stearate (25 µm**) | Sodium stearate | - | 99% | 100% |
| 3-7 | P110 | 7" | 38# | JFELION | Industrial ethanol: 15 | Ammonia water 2 | - | 98.3 | Calcium stearate (25 µm**) | Sodium stearate | - | 99% | 100% |
| 3-8 | P110 | 7" | 38# | JFELION | Industrial ethanol: 15 | Ammonia water 2 | - | 983 | Calcium stearate (25 µm**) | Sodium stearate | - | 99% | 100% |
| 3-9 | P110 | 7" | 38# | JFELION | Industrial ethanol: 25 | Ammonia water 2 | - | 98.4 | Calcium stearate (5 µm) | Sodium stearate | - | 99% | 100% |
| 3-10 | P110 | 7" | 38# | JFELION | Industrial ethanol: 25 | Ammonia water 2 | - | 98.4 | Calcium stearate (5 µm) | Sodium stearate | - | 99% | 100% |
| 3-11 | P110 | 7" | 38# | JFELION | Industrial ethanol: 10 | Ammonia water 1 | - | 99.1 | Calcium stearate (5 µm) | Sodium stearate | - | 99% | 100% |
| 3-12 | P110 | 7" | 38# | JFELION | Industrial ethanol: 10 | Ammonia water 1 | - | 99.1 | Calcium stearate (5 µm) | Sodium stearate | - | 99% | 100% |
| 3-13 | Q125 | 9-5/8" | 53.5# | JFELION | Industrial ethanol: 35 | Ammonia water 1 | - | 993 | Calcium stearate (5 µm) | Sodium stearate | - | 98% | 100% |
| 3-14 | Q125 | 9-5/8" | 53.5# | JFELION | Industrial ethanol: 35 | Ammonia water 1 | - | 99.3 | Calcium stearate (5 µm) | Sodium stearate | - | 98% | 100% |
| 3-15 | Q125 | 9-5/8" | 53.5# | JFELION | Industrial ethanol: 35 | Ammonia water 1 | - | 993 | Calcium stearate (5 µm) | Sodium stearate | - | 98% | 100% |
| 3-16 | Q125 | 9-5/8" | 53.5# | JFELION | Industrial ethanol: 45 | Ammonia water 1 | - | 993 | Calcium stearate (5 µm) | Sodium stearate | - | 98% | 100% |
| 3-17 | Q125 | 9-5/8" | 53.5# | JFELION | Industrial ethanol: 60* | Ammonia water 1 | - | 99.3 | Calcium stearate (5 µm) | Sodium stearate | - | 98% | 100% |

**[Table 5]**

| *: Result deviating from definition range | | | **: Result deviating from preferable range | | | | | | | |
|---|---|---|---|---|---|---|---|---|---|---|
| No. | Binder resin | | | Flash point | Formulating ratio | | Viscosity | Application method | Application amount | Film thickness |
| | Binder resin (formulating ratio in terms of 100 of weight of acrylic or methacrylic monomer) | Others | Ratio of acrylic or methacrylic monomer in binder resin (wt.%) | | Solvent (weight conversion with specific gravity of 1)/(solid lubricant + binder resin) | Solid lubricant/binder resin | | | | |
| 3-1 | | - | 100% | 70C | 2.0 | 0.15 | 400 mPa·sec | Brush coating while rotating | 0.08 g/mm2 | 20 µm at ridge part of thread |
| 3-2 | | - | 100% | 70C | 2.0 | 0.15 | 400 mPa·sec | Brush coating while rotating | 0.08 g/mm2 | 20 µm at ridge part of thread |
| 3-3 | | - | 100% | 70C | 2.0 | 0.15 | 400 mPa·sec | Brush coating while rotating | 0.08 g/mm2 | 20 µm at ridge part of thread |
| 3-4 | | - | 100% | 70C | 2.0 | 0.15 | 400 mPa·sec | Brush coating while rotating | 0.08 g/mm2 | 20 µm at ridge part of thread |
| 3-5 | | - | 100% | 70C | 2.0 | 0.15 | 400 mPa·sec | Brush coating while rotating | 0.08 g/mm2 | 20 µm at ridge part of thread |
| 3-6 | | - | 100% | 70C | 2.0 | 0.15 | 400 mPa·sec | Brush coating while rotating | 0.19 g /mm2 | 50 µm at ridge part of thread |
| 3-7 | Copolymer of styrene-acrylic acid (500 : 100) | - | 100% | 70C | 2.0 | 0.15 | 400 mPa·sec | Brush coating while rotating | 0.38 g /mm2 | 100 µm at ridge part of thread |
| 3-8 | | - | 100% | 70C | 2.0 | 0.15 | 400 mPa·sec | Brush coating while rotating | 0.58 g/mm2 | 180 µm at ridge part of thread** |
| 3-9 | | - | 100% | 70C | 2.0 | 0.15 | 400 mPa·sec | Brush coating while rotating | 0.08 g/mm2 | (Unmeasured) |
| | | | | | | | | | | Film thickness at the same level as Nos. 2-1 and 2-2 above |
| 3-10 | | - | 100% | 70C | 2.0 | 0.15 | 400 mPa·sec | Brush coating while rotating | 0.08 g/mm2 | (Unmeasured) |
| | | | | | | | | | | Film thickness at level approximate to Nos. 2-1 and 2-2 above; but having slight variations due to stationary drying |
| 3-11 | | water-soluble phenol resin (11 parts by weight) | 90% | 85C | 1.8 | 0.12 | 650 mPa·sec | Brush coating while rotating | 0.11 g/mm2 | 25 µm at ridge part of thread; however, film thickness unevenness observed to extent not higher than Pin connection groove, due to slight influence of liquid dripping by period of drying time |
| 3-12 | | water-soluble phenol resin (35 parts by weight) | 74%* | 80C | 1.8 | 0.12 | 1300 mPa·sec** | Brush coating while rotating | 0.11 g/mm2 | Coating with target thickness of 25 µm at ridge part of thread; however, cannot be defined as semi-dry state |
| 3-13 | Vinyl acetate-butyl acrylate, polyvinyl polymer (420 : 100 : 75) | - | 100% | 65C | 2.8 | 1.5** | 1000 mPa·sec | Brush coating while rotating rotating | 0.1 g/mm2 | 35 µm at ridge part of thread |
| 3-14 | | - | 100% | 65C | 3.5 | 1.0 | 1000 mPa·sec | Brush coating while rotating | 0.1 g/mm2 | 35 µm at ridge part of thread |
| 3-15 | | - | 100% | 65C | 3.5 | 1.0 | 1000 mPa·sec | Place pipe, perform coating uniformly by hand without changing pipe position | 0.1 g/mm2 | (Unmeasured) |
| | | | | | | | | | | Variations similar to above case |
| 3-16 | | - | 100% | 60C | 3.5 | 1.0 | 1000 mPa·sec | Brush coating while rotating | 0.15 g/mm2 | 35 µm at ridge part of thread |
| 3-17 | | - | 100% | 40C** | 6.0 | 1.0 | 1000 mPa·sec | Place pipe, perform coating uniformly by hand without changing pipe position | 0.1 g/mm2 | (Unmeasured) |
| | | | | | | | | | | Similar to No. 2-7; however, variations observed in film thickness |

**[Table 6]**

| *: Result deviating from definition range | | | **: Result deviating from preferable range | | | | | |
|---|---|---|---|---|---|---|---|---|
| No. | Pencil hardness | Time of being left in atmosphere or forced drying | Coating target thread surface | In case of one surface coating, film information of the other surface | Load condition of weight tong | Number of times of M/B | Pass/fail of number of times of M/B | Note |
| 3-1 | 3B | Air blowing drying while rotating pipe: 3 min | Pin connection | Box connection: solid lubrication film A having pencil hardness of 3H | 2 ton (assuming three connected pins) | ≥ 10 times (Stop at tenth time) | Pass | Inventive example |
| 3-2 | 3B | Air blowing drying while rotating pipe: 1 min 20 sec | Pin connection | Box connection: solid lubrication film A having pencil hardness of 3H | 2 ton (assuming three connected pins) | ≥ 10 times (Stop at tenth time) | Pass | Inventive example |
| 3-3 | 3B | Air blowing drying while rotating pipe: 5 min | Pin connection | Box connection: solid lubrication film A having pencil hardness of 3H | 2 ton (assuming three connected pins) | 3 times | Pass | Inventive example |
| 3-4 | 3B | Air blowing drying while rotating pipe: 5 min | Pin connection | Box connection: solid lubrication film A having pencil hardness of 3H | 2 ton (assuming three connected pins) | 8 times | Pass | Inventive example |
| | | | | | | 7 times | | |
| 3-5 | 3B | Air blowing drying while rotating pipe: 7 min** | Pin connection | Box connection: solid lubrication film A having pencil hardness of 3H | 2 ton (assuming three connected pins) | Twice | Fail | Comparative example |
| | | | | | | 3 times | | |
| 3-6 | 3B | Air blowing drying while rotating pipe: 23 min** | Pin connection | Box connection: solid lubrication film A having pencil hardness of 3H | 2 ton (assuming three connected pins) | 6 times | Pass | Inventive example |
| | | | | | | 7 times | | |
| 3-7 | 3B | Air blowing drying while rotating pipe: 8 min** | Pin connection | Box connection: solid lubrication film A having pencil hardness of 3H | 2 ton (assuming three connected pins) | 3 times | Pass | Inventive example |
| 3-8 | 3B | Air blowing drying while rotating pipe: 13 min** | Pin connection | Box connection: solid lubrication film A having pencil hardness of 3H | 2 ton (assuming three connected pins) | Twice * 3 times | Fail | Comparative example |
| 3-9 | 3B | Air blowing drying while rotating pipe: 15 min** | Pin connection | Box connection: solid lubrication film A having pencil hardness of 3H | 2 ton (assuming three connected pins) | ≥ 10 times (Stop at tenth time) | Pass | Inventive example |
| 3-10 | 3B | Stationary drying: 20 min (8 o'clock to 4 o'clock positions) | Pin connection | Box connection: solid lubrication film A having pencil hardness of 3H | 2 ton (assuming three connected pins) | 5 times | Pass | Inventive example |
| 3-11 | 3B | Even in 1 hr by air blowing drying. viscous liquid-like semi-wet state as is** Hence, after complete drying, perform make/break test | Pin connection | Box connection: solid lubrication film A having pencil hardness of 3H | 2 ton (assuming three connected pins) | 3 times | Pass | Inventive example |
| 3-12 | Semi-wet state and hard to define | Even by air blowing drying, and after one night, viscous liquid-like state as is at some parts* | Pin connection | Hard to conduct lubrication test on semi-wet film* | | | | Comparative example |
| 3-13 | 2B | Air blowing drying while rotating pipe: 2.5 min | Pin connection | Box connection: solid lubrication film A having pencil hardness of 3H | 3 ton (assuming three connected pins) | 3 times | Pass | Inventive example |
| 3-14 | 2B | Air blowing drying while rotating pipe: 2.5 min | Pin connection | Box connection: solid lubrication film A having pencil hardness of 3H | 3 ton (assuming three connected pins) | ≥ 5 times (Stop at tenth time) | Pass | Inventive example |
| 3-15 | 2B | Stationary drying: 20 min (8 o'clock to 4 o'clock positions) | Pin connection | Box connection: solid lubrication film A having pencil hardness of 3H | 3 ton (assuming three connected pins) | 4 times | Pass | Inventive example |
| 3-16 | 2B | Stationary drying: 20 min (8 o'clock to 4 o'clock positions) | Pin connection | Box connection: solid lubrication film A having pencil hardness of 3H | 3 ton (assuming three connected pins) | 3 times | Pass | Inventive example |
| 3-17 | 2B | Stationary drying: 12 min (8 o'clock to 4 o'clock positions) | Pin connection | Box connection: solid lubrication film A having pencil hardness of 3H | 3 ton (assuming three connected pins) | 5 times Once * Twice * | Fail | Comparative example |

**[Table 7]**

| *: Result deviating from definition range | | | | **: Result deviating from preferable range | | | | | | | | | |
|---|---|---|---|---|---|---|---|---|---|---|---|---|---|
| No. | Steel type | OD (inch) | WT (LPF) | Connection type | Solvent (substance other than water: in terms of 100 of water) | | | | Solid lubricant (chemical agent name and each weight of metal soap and alkaline soap) *Size of metal soap is written in parentheses | | | | |
| | | | | | Alcohol | Ammonia water | Others | Sum of volumes of water and low alcohol/sum of volume of entire solvent (%) | Metal soap | Alkaline soap | Others | Formulating ratio-1 metal soap/(metal soap + alkaline soap) (%) | Formulating ratio-2 (metal soap + alkaline soap)/entire solid lubricant (%) |
| 3-18 | HP2-13CR-110 | 9-5/8" | 43.5# | JFELION | Industrial ethanol: zero* | - | - | 100 | Styrene acid Ca/Zn (10 µm) (St-Ca : St-Zn = 1 : 1) | Sodium stearate | - | 99% | 100% |
| 3-19 | HP2-13CR-110 | 9-5/8" | 43.5# | JFELION | Industrial ethanol: 0.5 | - | - | 99.0 | Styrene acid Ca/Zn (10 µm) (St-Ca : St-Zn = 1 : 1) | Sodium stearate | - | 99% | 100% |
| 3-20 | HP2-13CR-110 | 9-5/8" | 43.5# | JFELION | Industrial ethanol: 1 | Ammonia water: 1 | - | 99.0 | Styrene acid Ca/Zn (10 µm) (St-Ca : St-Zn = 1 : 1) | Sodium stearate | - | 99% | 100% |
| 3-21 | HP2-13CR-110 | 9-5/8" | 43.5# | JFELION | Industrial ethanol: 5 | Ammonia water: 2 | - | 98.1 | Styrene acid Ca/Zn (10 µm) (St-Ca : St-Zn = 1 : 1) | Sodium stearate | - | 99% | 100% |
| 3-22 | HP2-13CR-110 | 9-5/8" | 43.5# | JFELION | Industrial ethanol: 5 | Ammonia water: 2 | - | 98.1 | Styrene acid Ca/Zn (10 µm) (St-Ca : St-Zn = 1 : 1) | Sodium stearate | Black lead | 99% | 95% |
| 3-23 | HP2-13CR-110 | 9-5/8" | 43.5# | JFELION | Industrial ethanol: 5 | Ammonia water: 2 | - | 98.1 | Styrene acid Ca/Zn (10 µm) (St-Ca : St-Zn = 1 : 1) | Sodium stearate | Black lead | 99% | 85%* |
| 3-24 | HP2-13CR-110 | 9-5/8" | 43.5# | JFELION | Industrial ethanol: 5 | Ammonia water: 2 | - | 98.1 | Styrene acid Ca/Zn (10 µm) (St-Ca : St-Zn = 1 : 1) | Sodium stearate | BN | 99% | 95% |
| 3-25 | HP2-13CR-110 | 9-5/8" | 43.5# | JFELION | Industrial ethanol: 10 | Ammonia water: 1 | - | 99.1 | Styrene acid Ca/Zn (10 µm (St-Ca : St-Zn = 1 : 1) | Sodium stearate | - | 99% | 100% |
| 3-26 | HP2-13CR-110 | 9-5/8" | 43.5# | JFELION | Industrial ethanol: 10 | Ammonia water: 2 | - | 98.2 | Styrene acid Ca/Zn (10 µm (St-Ca : St-Zn = 1 : 1) | Sodium stearate | - | 99% | 100% |
| 3-27 | HP2-13CR-110 | 9-5/8" | 43.5# | JFELION | Industrial ethanol: 10 | Ammonia water: 2 | - | 98.2 | Styrene acid Ca/Zn (10 µm (St-Ca : St-Zn = 1 : 1) | Sodium stearate | - | 99% | 100% |
| 3-28 | HP2-13CR-110 | 9-5/8" | 43.5# | JFELION | Industrial ethanol: 10 | Ammonia water: 2 | - | 98.2 | Styrene acid Ca/Zn (10 µm) : 99 (St-Ca : St-Zn = 1 : 1) | Sodium stearate : 1 | - | 99% | 100% |
| 3-29 | HP2-13CR-110 | 9-5/8" | 43.5# | JFELION | Industrial ethanol: 10 | Ammonia water: 2 | - | 98.2 | Styrene acid Ca/Zn (10 µm) : 99 (St-Ca : St-Zn = 1 : 1) | Sodium stearate : 1 | - | 99% | 100% |
| 3-30 | HP2-13CR-110 | 9-5/8" | 43.5# | JFELION | Industrial ethanol: 10 | Ammonia water: 2 | - | 98.2 | Styrene acid Ca/Zn (10 µm) : 99 (St-Ca : St-Zn = 1 : 1) | Sodium stearate : 1 | - | 99% | 100% |
| 3-31 | HP2-13CR-110 | 9-5/8" | 43.5# | JFELION | Industrial ethanol: 10 | Ammonia water: 2 | - | 98.2 | Styrene acid Ca/Zn (10 µm) : 99 (St-Ca : St-Zn = 1 : 1) | Sodium stearate : 1 | - | 99% | 100% |
| 3-32 | HP2-13CR-110 | 9-5/8" | 43.5# | JFELION | Industrial ethanol: 10 | Ammonia water: 2 | - | 98.2 | Styrene acid Ca/Zn (10 µm) : 99 (St-Ca : St-Zn = 1 : 1) | Sodium stearate : 1 | - | 99% | 100% |
| 3-33 | HP2-13CR-110 | 9-5/8" | 43.5# | JFELION | Industrial ethanol: 14 | - | DMSO: 6 | 95.0 | Styrene acid Ca/Zn (10 µm (St-Ca : St-Zn = 1 : 1) | Sodium stearate | - | 99% | 100% |
| 3-34 | HP2-13CR-110 | 9-5/8" | 43.5# | JFELION | Industrial ethanol: 10 | Ammonia water: 2 | DMSO: 12 | 88.7* | Styrene acid Ca/Zn (10 µm) (St-Ca : St-Zn = 1 : 1) | Sodium stearate | - | 99% | 100% |

**[Table 8]**

| *: Result deviating from definition range | | | **: Result deviating from preferable range | | | | | | | |
|---|---|---|---|---|---|---|---|---|---|---|
| No. | Binder resin | | | Flash point | Formulating ratio | | Viscosity | Application method | Application amount | Note |
| | Binder resin (formulating ratio in terms of 100 of weight of acrylic or methacrylic monomer) | Others | Ratio of acrylic or methacrylic monomer in binder resin (wt.%) | | Solvent (weight conversion with specific gravity of 1)/(solid lubricant + binder resin) | Solid lubricant/binder resin | | | | |
| 3-18 | | - | 100% | Nonflammable | 1.5 | 0.2 | 600 mPa·sec | Brush coating while rotating | 0.25 g/mm2 | 25 µm at ridge part of thread |
| 3-19 | | - | 100% | Nonflammable | 1.5 | 0.2 | 600 mPa·sec | Brush coating while rotating | 0.25 g/mm2 | 25 µm at ridge part of thread |
| 3-20 | | - | 100% | Nonflammable | 1.5 | 0.2 | 600 mPa·sec | Brush coating while rotating | 0.25 g/mm2 | 25 µm at ridge part of thread |
| 3-21 | | - | 100% | Nonflammable | 1.5 | 0.2 | 600 mPa·sec | Brush coating while rotating | 0.25 g/mm2 | 25 µm at ridge part of thread |
| 3-22 | Ethylene-methacrylic acid copolymer (30 : 100) *Here, ethylene refers to a part by weight of polymerized ethylene methacrylic acid from a random copolymer of ethylene oxide and propylene oxide. | - | 100% | Nonflammable | 1.5 | 0.2 | 600 mPa·sec | Brush coating while rotating | 0.12 g/mm2 | 25 µm at ridge part of thread |
| 3-23 | | - | 100% | Nonflammable | 1.5 | 0.2 | 600 mPa·sec | Brush coating while rotating | 0.12 g/mm2 | 25 µm at ridge part of thread |
| 3-24 | | - | 100% | Nonflammable | 1.5 | 0.2 | 600 mPa·sec | Brush coating while rotating | 0.12 g/mm2 | 25 µm at ridge part of thread |
| 3-25 | | - | 100% | Nonflammable | 1.5 | 0.2 | 600 mPa·sec | Brush coating while rotating | 0.06 g/mm2 | 15 µm at ridge part of thread |
| 3-26 | | - | 100% | Nonflammable | 1.5 | 0.2 | 600 mPa·sec | Place pipe, perform coating uniformly by hand without changing pipe position | 0.06 g/mm2 | (Unmeasured) Variations similar to above case |
| 3-27 | | - | 100% | Nonflammable | 1.5 | 0.2 | 600 mPa·sec | Place pipe, perform coating uniformly by hand without changing pipe position | 0.06 g/mm2 | (Unmeasured) Variations similar to above case |
| 3-28 | | | 100% | Nonflammable | 100 | 0.6 | 600 mPa·sec | Forming film by repeating hot air drying for 5 min plurality of times, during rotation coating and pipe rotation | 0.10 g/mm2 | 20 µm at ridge part of thread |
| 3-29 | | | 100% | Nonflammable | 150** | 5.0** | 600 mPa·sec | Forming film by repeating hot air drying for 5 min plurality of times, during rotation coating and pipe rotation | 0.12 g/mm2 | 25 µm at ridge part of thread |
| 3-30 | | | 100% | Nonflammable | 0.7 | 0.1 | 600 mPa·sec | Brush coating while rotating | 0.08 g/mm2 | 18 µm at ridge part of thread |
| 3-31 | | | 100% | Nonflammable | 0.5** | 0.08** | 600 mPa·sec | Brush coating while rotating | 0.09 g /mm2 | 20 µm at ridge part of thread |
| 3-32 | | | 100% | Nonflammable | 0.6** | 1.1** | 600 mPa·sec | Brush coating while rotating | 0.08 g /mm2 | 18 µm at ridge part of thread |
| 3-33 | | - | 100% | Nonflammable | 1.5 | 0.2 | 500 mPa·sec | Brush coating while rotating | 0.06 g/mm2 | 15 µm at ridge part of thread |
| 3-34 | | - | 100% | Nonflammable | 1.5 | 0.2 | 340 mPa·sec | Brush coating while rotating | 0.06 g /mm2 | 15 µm at ridge part of thread |

**[Table 9]**

| *: Result deviating from definition range | | | **: Result deviating from preferable range | | | | | |
|---|---|---|---|---|---|---|---|---|
| No. | Pencil hardness | Time of being left in atmosphere or forced drying | Coating target thread surface | In case of one surface coating, film information of the other surface | Load condition of weight tong | Number of times of M/B | Pass/fail of number of times of M/B | Note |
| 3-18 | 4B | Using dryer at temperature of higher than 100°C while rotating pipe Hot air drying: 3 min (*25 min by air blowing drying) | Pin connection | Box connection: solid lubrication film A having pencil hardness of 3H | 2 ton (assuming less than three length-connected pins) | Once* | Fail | Comparative example |
| 3-19 | 4B | Air blowing drying while rotating pipe: 5 min | Pin connection | Box connection: solid lubrication film A having pencil hardness of 3H | 2 ton (assuming less than three length-connected pins) | ≥ 10 times (Stop at tenth time) | Pass | Inventive example |
| 3-20 | 4B | Air blowing drying while rotating pipe: 4 min | Pin connection | Box connection: solid lubrication film A having pencil hardness of 3H | 2 ton (assuming less than three length-connected pins) | ≥ 10 times (Stop at tenth time) | Pass | Inventive example |
| 3-21 | 4B | Air blowing drying while rotating pipe: 3 min | Pin connection | Box connection: solid lubrication film A having pencil hardness of 3H | 2 ton (assuming less than three length-connected pins) | ≥ 10 times (Stop at tenth time) | Pass | Inventive example |
| 3-22 | 4B | Air blowing drying while rotating pipe: 3 min | Pin connection | Box connection: solid lubrication film A having pencil hardness of 3H | 2 ton (assuming less than three length-connected pins) | ≥ 7 times (Stop at seventh time) | Pass | Inventive example |
| 3-23 | 4B | Air blowing drying while rotating pipe: 3 min | Pin connection | Box connection: solid lubrication film A having pencil hardness of 3H | 2 ton (assuming less than three length-connected pins) | Once | Fail | Comparative example |
| 3-24 | 4B | Air blowing drying while rotating pipe: 3 min | Pin connection | Box connection: solid lubrication film A having pencil hardness of 3H | 2 ton (assuming less than three length-connected pins) | ≥ 5 times (Stop at fifth time) | Pass | Inventive example |
| 3-25 | 4B | Air blowing drying while rotating pipe: 2.5 min | Pin connection | Box connection: solid lubrication film A having pencil hardness of 3H | 2 ton (assuming less than three length-connected pins) | ≥ 10 times (Stop at tenth time) | Pass | Inventive example |
| 3-26 | 4B | Stationary drying: 25 min (8 o'clock to 4 o'clock positions) Complete drying (without semi-wet part) | Pin connection | Box connection: solid lubrication film A having pencil hardness of 3H | 2 ton (assuming less than three length-connected pins) | 6 times | Pass | Inventive example |
| 3-27 | 4B | Stationary drying: 25 min (8 o'clock to 4 o'clock positions) However, semi-wet parts remain at 5 to 7 o'clock positions | Pin connection | Box connection: solid lubrication film A having pencil hardness of 3H | 2 ton (assuming less than three length-connected pins) | 3 times | Pass | Inventive example |
| 3-28 | 4B | Forming film by repeating hot air drying for 5 min plurality of times, during rotation coating and pipe rotation | Pin connection | Box connection: solid lubrication film A having pencil hardness of 3H | 2 ton (assuming less than three length-connected pins) | 6 times | Pass | Inventive example |
| 3-29 | 4B | Forming film by repeating hot air drying for 5 min plurality of times, during rotation coating and pipe rotation | Pin connection | Box connection: solid lubrication film A having pencil hardness of 3H | 2 ton (assuming less than three length-connected pins) | 3 times | Pass | Inventive example |
| 3-30 | 4B | Air blowing drying while rotating pipe: 1.5 min | Pin connection | Box connection: solid lubrication film A having pencil hardness of 3H | 2 ton (assuming less than three length-connected pins) | ≥ 10 times (Stop at tenth time) | Pass | Inventive example |
| 3-31 | 4B | Air blowing drying while rotating pipe: 1.2 min | Pin connection | Box connection: solid lubrication film A having pencil hardness of 3H | 2 ton (assuming less than three length-connected pins) | 3 times | Pass | Inventive example |
| 3-32 | 4B | Air blowing drying while rotating pipe: 1.5 min | Pin connection | Box connection: solid lubrication film A having pencil hardness of 3H | 2 ton (assuming less than three length-connected pins) | 4 times | Pass | Inventive example |
| 3-33 | 4B | While rotating pipe, not dried in 5 min by air blowing drying, dryable in 10 min with hot air. Not dryable in 30 min by undisturbed drying in atmosphere.** | Pin connection | Box connection: solid lubrication film A having pencil hardness of 3H | 2 ton (assuming less than three length-connected pins) | 3 times | Pass | Inventive example |
| 3-34 | 4B | Not dried by undisturbed drying in atmosphere, air blowing drying (including hot air). Film can be formed with heat treatment at about 200°C Some samples having low viscosity, dripping occurred during firing treatment, uniform film was not formed due to dripping | Pin connection | Box connection: solid lubrication film A having pencil hardness of 3H | 2 ton (assuming less than three length-connected pins) | Twice | Fail | Comparative example |

**[Table 10]**

| *: Result deviating from definition range | | | | | **: Result deviating from preferable range | | | | | | | | |
|---|---|---|---|---|---|---|---|---|---|---|---|---|---|
| No. | Steel type | OD (inch) | WT (LPF) | Connection type | Solvent (substance other than water: in terms of 100 of water) | | | | Solid lubricant (chemical agent name and each weight of metal soap and alkaline soap) *Size of metal soap is written in parentheses | | | | |
| | | | | | Alcohol | Ammonia water | Others | Sum of volumes of water and low alcohol/sum of volume of entire solvent (%) | Metal soap | Alkaline soap | Others | Formulating ratio-1 metal soap/(metal soap + alkaline soap) (%) | Formulating ratio-2 (metal soap + alkaline soap)/entire solid lubricant (%) |
| 3-35 | T95 | 5.5" | 23# | JFELION | Industrial ethanol : 15 | Ammonia water : 1 | - | 99.1 | Styrene acid Ca/Zn (10 µm) (St-Ca : St-Zn = 1 : 1) | Sodium stearate | - | 99% | 100% |
| 3-36 | T95 | 5.5" | 23# | JFELION | Industrial ethanol : 15 | Ammonia water : 1 | - | 99.1 | Styrene acid Ca/Zn (10 µm) (St-Ca : St-Zn = 1 : 1) | Sodium stearate | - | 99% | 100% |
| 3-37 | T95 | 5.5" | 23# | JFELION | Industrial ethanol : 15 | Ammonia water : 1 | - | 99.1 | Styrene acid Ca/Zn (10 µm) (St-Ca : St-Zn = 1 : 1) | Sodium stearate | - | 99% | 100% |
| 3-38 | T95 | 5.5" | 23# | JFELION | Industrial ethanol : 15 | Ammonia water : 1 | - | 99.1 | Zinc stearate (5 µm) | Sodium stearate | - | 99% | 100% |
| 3-39 | T95 | 5.5" | 23# | JFELION | Industrial ethanol : 15 | Ammonia water : 1 | - | 99.1 | Barium stearate (5 µm) | Sodium stearate | - | 99% | 100% |
| 3-40 | T95 | 3.5 | 9.2# | JFEBEAR | Industrial ethanol : 10 | Ammonia water : 1 | - | 99.1 | Styrene acid Ca/Zn (10 µm) (St-Ca : St-Zn = 1 : 1) | Sodium stearate | - | 97% | 100% |
| 3-41 | T95 | 3.5 | 9.2# | JFEBEAR | Industrial ethanol : 10 | Ammonia water : 1 | - | 99.1 | Styrene acid Ca/Zn (10 µm) (St-Ca : St-Zn = 1 : 1) | N stearate | - | 97% | 100% |
| 3-42 | T95 | 3.5 | 9.2# | JFEBEAR | Industrial ethanol : 10 | Ammonia water : 1 | - | 99.1 | Styrene acid Ca/Zn (10 µm) (St-Ca : St-Zn = 1 : 1) | Sodium stearate | - | 97% | 100% |
| 3-43 | T95 | 3.5 | 9.2# | JFEBEAR | Industrial ethanol : 10 | Ammonia water : 1 | - | 99.1 | Styrene acid Ca/Zn (10 µm) (St-Ca : St-Zn = 1 : 1) | Sodium stearate | - | 97% | 100% |

**[Table 11]**

| *: Result deviating from definition range | | | **: Result deviating from preferable range | | | | | | | |
|---|---|---|---|---|---|---|---|---|---|---|
| No. | Binder resin | | | Flash point | Formulating ratio | | Viscosity | Application method | Application amount | Note |
| | Binder resin (formulating ratio in terms of 100 of weight of acrylic or methacrylic monomer) | Others | Ratio of acrylic or methacrylic monomer in binder resin (wt.%) | | Solvent (weight conversion with specific gravity of 1)/(solid lubricant + binder resin) | Solid lubricant/binder resin | | | | |
| 3-35 | Polymer of diacetone acrylamide (DAAD: one kind of acrylate) and diphenylmethane diisocyanate (MDI: urethane compound) (100 : 40) | - | 100% | Nonflammable | 7.6 | 0.3 | 350 mPa·sec | Brush coating while rotating | 0.08 g/mm2 | 25 µm at ridge part of thread |
| 3-36 | | - | 100% | Nonflammable | 7.6 | 0.3 | 350 mPa·sec | Brush coating while rotating | 0.08 g/mm2 | 25 µm at ridge part of thread |
| 3-37 | | - | 100% | Nonflammable | 7.6 | 0.3 | 350 mPa·sec | Place pipe, perform coating uniformly by hand without changing pipe position | 0.08 g/mm2 | 25 µm at ridge part of thread |
| 3-38 | | - | 100% | Nonflammable | 7.6 | 0.3 | 350 mPa·sec | Brush coating while rotating | 0.11 g/mm2 | 30 µm at ridge part of thread |
| 3-39 | | - | 100% | Nonflammable | 7.6 | 0.3 | 350 mPa·sec | Brush coating while rotating | 0.13 g/mm2 | 30 µm at ridge part of thread |
| 3-40 | copolymer of acrylic acid and polyvinyl acetate (30 : 100) | - | 100% | Nonflammable | 3.5 | 0.2 | 740 mPa·sec | Brush coating while rotating | 0.08 g/mm2 | 25 µm at ridge part of thread |
| 3-41 | | - | 100% | Nonflammable | 3.5 | 0.2 | 740 mPa·sec | Brush coating while rotating | 0.08 g/mm2 | 25 µm at ridge part of thread |
| 3-42 | | - | 100% | Nonflammable | 35 | 0.2 | 740 mPa·sec | Brush coating while rotating | 0.08 g/mm2 | 25 µm at ridge part of thread |
| 3-43 | | - | 100% | Nonflammable | 3.5 | 0.2 | 740 mPa·sec | Brush coating while rotating | 0.08 g/mm2 | 25 µm at ridge part of thread |

**[Table 12]**

| *: Result deviating from definition range | | | **: Result deviating from preferable range | | | | | |
|---|---|---|---|---|---|---|---|---|
| No. | Pencil hardness | Time of being left in atmosphere or forced drying | Coating target thread surface | In case of one surface coating, film information of the other surface | Load condition of weight tong | Number of times of M/B | Pass/fail of number of times of M/B | Note |
| 3-35 | B | Air blowing drying while rotating pipe: 1 min | Pin connection | Box connection: solid lubrication film A having pencil hardness of 3H | 1 ton (assuming less than three pins) | ≥ 10 times (Stop at tenth time) | Pass | Inventive example |
| 3-36 | B | Stationary drying 15 min (8 o'clock to 4 o'clock positions) | Pin connection | Box connection: solid lubrication film A having pencil hardness of 3H | 1 ton (assuming less than three pins) | ≥ 10 times (Stop at tenth time) | Pass | Inventive example |
| 3-37 | B | Stationary drying 23 min (8 o'clock to 4 o'clock positions) | Pin connection | Box connection: solid lubrication film A having pencil hardness of 3H | 1 ton (assuming less than three pins) | 9 times | Pass | Inventive example |
| 3-38 | B | Air blowing drying while rotating pipe: 1 min | Pin connection | Box connection: solid lubrication film A having pencil hardness of 3H | 1 ton (assuming less than three pins) | 8 times | Pass | Inventive example |
| 3-39 | B | Air blowing drying while rotating pipe: 1 min | Pin connection | Box connection: solid lubrication film A having pencil hardness of 3H | 1 ton (assuming less than three pins) | 9 times | Pass | Inventive example |
| 3-40 | B | Air blowing drying while rotating pipe: 1.5 min | Pin connection | Box connection: solid lubrication film A having pencil hardness of 3H | 500 kg (assuming three length-connected pins) | ≥ 10 times (Stop at tenth time) | Pass | Inventive example |
| 3-41 | B | Air blowing drying while rotating pipe: 1.5 min | Pin connection | Box connection: only Mn phosphate chemical conversion film | 500 kg (assuming three length-connected pins) | 3 times | Pass | Inventive example |
| 3-42 | B | Air blowing drying while rotating pipe: 1.5 min (both Pin connection and Box connection) | Both Pin connection and Box connection | Same as Pin connection | 500 kg (assuming three length-connected pins) | 5 times | Pass | Inventive example |
| 3-43 | B | Air blowing drying while rotating pipe: 2.5 min | Box connection | Solid lubrication film A having pencil hardness of 3H is formed on Pin connection | 500 kg (assuming three length-connected pins) | ≥ 10 times (Stop at tenth time) | Pass | Inventive example |

In the tables, "solid lubrication coating films A having a pencil hardness of 3H" which are often appear in the following description are as follows. That is, in a case of carbon steel, an Mn phosphate chemical conversion film, and in a case of a stainless steel material, a Cu-Sn electroplating film (Sn; 45 to 47%) was formed as a base layer, and then a solid lubrication coating film was formed on the base layer. In this case, a structure is formed by substantially uniformly dispersing the binder resin: polyamideimide film, the solid lubricant: PTFE and a trace amount of MoS₂ (1 to 3%). Accordingly, the solid lubrication coating film refers to a solid lubrication coating film having a film thickness of 50 µm to 80 µm. The film thickness is a measured value of a film thickness at the crest. The solid lubrication coating film refers to common and the same solid lubrication coating film, including a pencil hardness of 3H. Further, a distribution of the film thickness of each part of the crest is as follows. That is, the crest design of the connection for oil country tubular goods has an inverted hook type structure. Therefore, although a chemical agent is contrived and applied to aim for a homogeneous film thickness, a film thickness of a longitudinal wall part of the crests of the load/flank portion and the stabbing/flank portion cannot be avoided from decreasing. However, by contriving the film formation of the solid lubrication coating film, the film was formed so that a half or more of a film thickness can be secured with respect to the measured value of the film thickness of the crest even in the vertical wall part.

Nos. 3-1 to 3-12 represent examples in which a 7" 38# JFELION (trademark) connection having a material grade of carbon steel: P 110 was prepared, and a copolymer of styrene-acrylic acid (500 parts by weight of styrene in terms of 100 parts by weight of acrylate) was used as a chemical agent. Accordingly, these represent examples in which the solid lubrication coating film is formed on the pin connection side. In addition, the examples have a condition that, on the box connection side, the "solid lubrication coating film A having a pencil hardness of 3H" is formed. In this case, an Mn phosphate chemical conversion film is formed on the base. A make-up/break-out test using a weight of 2 tons equivalent to a make-up at the time of three connected pins was performed to determine whether or not the make-up/break-out can be performed.

In the examples of Nos. 3-1 to 3-8, the solvent contains industrial ethanol and ammonia water at a proportion of 15:2, respectively, in terms of 100 set as the water. The formulating ratio is common, and formulating is performed under the conditions within the defined range. This is an examination example in which the size of the metal soap, the presence or absence of the alkaline soap, and the condition of the film thickness vary. Nos. 3-1 to 3-4 are examples in which the particle size of the metal soap (calcium stearate) is 5 µm, 1 µm, 10 µm (no alkaline soap is contained in this example), and 10 µm, respectively. Nos. 3-1, 3-2, and 3-4 exhibit good lubrication behavior when the number of times of M/B by the weight tong is 10 times or more (stopping at 10 times) and correspond to an inventive example. No. 3-3 corresponds to the inventive example in which the number of times of M/B is only 3 times. However, the lubrication characteristics of No. 3-3 deteriorated more than those of Nos. 3-1, 3-2, and 3-4 in which the alkaline soap component is contained. This indicates that the addition of alkaline soap is effective in improving lubrication.

In Nos. 3-5 to 3-8, the metal soap had a size of 25 µm. However, in the examples, the film thicknesses of the solid lubrication coating films are 20 µm, 50 µm, 100 µm, and 180 µm, in that order. In addition, these examples are examples in which the drying time is 7 minutes by air blow drying, 23 minutes by air blow drying, 8 minutes by hot air drying, and 10 minutes by hot air drying, in that order. In Nos. 3-7 and 3-8, drying is performed using a hot air blower (output: 1,000 W).

In general, the drying time tends to be longer than in Nos. 3-1 to 3-4. This change is considered to be influenced by an increase of the solid lubrication film and the particle size of the metal soap. When the particle size of the metal soap is small and the metal soap is dispersed, the drying points in the film are increased as the surface area is increased. As a result, it can be expected that drying is accelerated. However, in these examples, it can be explained that since the size is large, and thus a reduction in drying time cannot be expected, and the volume to dry is increased due to the influence of the film thickness.

No. 3-5 is an example of a film thickness of 20 µm and is an example in which the size of the metal soap is larger than the film thickness. In the example, when the metal soap is larger than the film thickness, there is a part where the intactness of the film is difficult to maintain, and the part is broken to cause galling. No. 3-6 (film thickness: 50 µm) corresponds to an inventive example with 6 or 7 times of M/B. Nos. 3-7 and 3-8 are examples of examining the influence of the film thickness. In the former, the film thickness is 100 µm and the number of times of M/B can be cleared, but in the latter, the film thickness is 180 µm and some parts of the film may not satisfy three times of M/B as a reference. That is, this indicates that when the film thickness exceeds 100 µm, the lubrication performance may deteriorate.

Nos. 3-9 and 3-10 are comparative examination examples performed by different drying methods. These will be described in comparison with No. 3-1. No. 3-1 described above is an example in which the number of times of M/B was 10 times or more (stopped at tenth turn). No. 3-9 is the same up to 1 brush application while rotating the pipe. However, the example is an example in which only the pin connection pipe is rotated as it is and dried in the atmosphere, and drying is performed in 15 minutes. No. 3-10 is an example in which drying was performed in a state where rotation was stopped and the coating film was left after rotation coating, and it took extra drying time.

Further, as described above, the drying was determined on the upper side of the pipe at the position from 8 o'clock to 4 o'clock. This determination can be made because the lower portion of the coating film is already formed into a film, which can be estimated by drying at the 8 o'clock to 4 o'clock position. In addition, in this case, the surface is dry in addition to the lower portion of the coating film at the position of 5 to 7 o'clock where the chemical agent accumulates, but the surface is not completely dry to the inside, so that it can be considered that there is no problem in corrosion resistance. As illustrated in this example, the lubrication behavior is slightly inferior to that of No. 3-1 or 3-9 but is in a pass range, and the lubrication can be regarded as being in a good range, and the example can be regarded as an inventive example. The reason appeared to be correlated with the fact that the chemical agent was more fluid due to the lower viscosity, and the coating material that had not been fully dried at the end of application had liquid flowing (dripping) along the crests. Although the position between 5 and 7 o'clock has a state of having a dried surface but incompletely dried inside part; however, the position is within the pass range.

Examples of No. 3-11 and 3-12 are examination examples in which a binder resin component other than an acrylate-based or methacrylate-based binder resin component is contained in the binder resin. These are examples in which 11 parts by weight and 35 parts by weight of a water-soluble phenol resin are formulated in terms of 100 parts by weight of a binder resin component other than methacrylate-based resin. The former corresponds to an inventive example, and the latter corresponds to a comparative example in which the formulating amount exceeds the standard upper limit.

In the examples, weight proportions of a binder resin other than acrylic or methacrylic resin in the whole binder resin are 90% and 74% (* less than 90% of the standard), in that order. The former is an inventive example in which the number of times of M/B satisfies the definition. The former is an example in which the formulating ratio of solvent/(solid lubricant + binder resin) is 1.8, the weight ratio of solid lubricant/binder resin is 0.12, and the viscosity is 650 mPa·sec. The latter is an example of having 1.8, 0.12 and 1300 mPa·sec, in this order.

On the other hand, in the latter example, the solid lubrication coating film was applied with a target thickness of 25 µm, but the solid lubrication coating film was not completely dried. Accordingly, since the film was not dried even after one night after application, the film was in a semi-wet state, and a make-up/break-out test could not be performed, and the example was determined as comparative example.

In the examples of Nos. 3-13 to 3-17, a 9-5/8" 53.5# JFELION (trademark) connection having a material grade of carbon steel: Q125 is prepared, and vinyl acetate-butyl acrylate, polyvinyl polymer (420:100:75) is used as a chemical agent. This is an example in which the solid lubrication coating film is formed on the pin connection side. In addition, the examples have a condition that, on the box connection side, the "solid lubrication coating film A having a pencil hardness of 3H" is formed. Accordingly, an Mn phosphate chemical conversion film is formed on the base with the condition. A make-up/break-out test using a weight of 3 ton equivalent to a make-up at the time of three connected pins was performed to determine whether or not the make-up/break-out can be performed. This is an examination example in which the addition of a lower alcohol (ethanol) was increased to increase volatility and enhance drying.

The solvent contains industrial ethanol by ratios of 35, 35, 35, 45, 60 with respect to 100 set as water, in this order. In addition, the application methods are, rotation coating/air blowing drying, rotation coating/air blowing drying, stationary coating (manual coating)/stationary drying, rotation coating/stationary drying, stationary coating (manual coating)/stationary drying, in this order.

Only No. 3-17 containing the lower alcohol by a ratio of 60 which exceeds the upper limit of 45 as the definition does not satisfy the standard for the number of times of make-up/break-out. When the make-up/break-out test was performed with the weight tong, the number of times of M/B was generally poor although the examples were at a pass level such as 5 times, 1 time, and 2 times. Consequently, the example corresponds to a comparative example. This indicates that the film may be dried too early and the film thickness may not be uniform. In addition, if it is assumed that the flash point is 40°C and the chemical agent is applied at the well site, there is a risk of an accident such as an explosion, and thus the example can also be determined as a fail in that respect.

In the examples other than 3-17, the number of times of M/B satisfied the pass standard. The reason why the number of times of M/B of No. 3-13 was only 3 times, which is the lower limit, is presumed to be that the solid lubricant/binder resin exceeded 1.0, which exceeds the preferred range. In a case of a solid lubrication film containing a large amount of solid lubricant, it is presumed that this is because the intactness of the film is slightly poor. In addition, from the examination examples of Nos. 3-15 to 3-17, the examples of manual coating and/or stationary drying (without air blowing) tend to be slightly reduced in the number of times of M/B. It is assumed that the reduction is because there is film thickness unevenness for forming a film while the undried chemical agent gradually flows down to the 6 o'clock position during drying.

In the examples of Nos. 3-18 to 3-34, a JFELION (trademark) connection having size: 9-5/8" 43.5# having a material grade of martensitic stainless steel HP2-13CR-110 (13Cr-5Ni-2Mo-based) is prepared, an ethylene-methacrylic acid copolymer resin is used as a chemical agent. Here, ethylene is polymerized ethylene methacrylic acid from a random copolymer of ethylene oxide and propylene oxide, and a solid lubrication film is formed on the pin connection side. On the box connection side, an electroplating indication film having Cu-Sn binary system is formed on the base under the condition that the "solid lubrication coating film A having a pencil hardness of 3H" is formed. Here, a make-up/break-out test using a weight of 2 ton was performed to determine whether or not the make-up/break-out can be performed, under a condition that a weight equivalent to the make-up at the time of less than three connected pins at the actual well is applied.

In Nos. 3-19 to 3-22 and 3-24 to 3-33, the number of times of make-up/break-out in the make-up/break-out test using the weight tong is within the pass range, and the examples correspond to an inventive example. Nos. 3-18, 3-23, and 3-34 correspond to comparative examples.

Examples of Nos. 3-18 to 3-21 are an example group in which the lower limit of the content ratio of lower alcohol is examined. No. 3-18 is an example of a solvent of only pure water without addition of alcohol. Drying was performed with hot air at 100°C, and the drying time was not particularly significantly long. However, the make-up/break-out test with the weight tong is determined as a fail, and thus the example is positioned to the comparative example. Since the solvent was only water, the metal soap as the main component of the solid lubricant had water repellency. For this reason, it is considered that, since the metal soap cannot be homogeneously dispersed well, even when the solid lubrication film is formed, inhomogeneous dispersion relates to inhomogeneity of a film quality.

Nos. 3-19 to 3-21 are examples in which industrial ethanol is contained by a ratio of 0.5, 1, and 5, in this order. It can be confirmed from No. 3-19 (industrial ethanol: 0.5) that the number of times of M/B falls within the pass range.

No. 3-22 to 3-24 are examination examples in which a third solid lubricant other than the metal soap and the alkaline soap is contained and are examples in which black lead, black lead, and BN are added in this order. In Nos. 3-22 and 3-24 adjusted within the defined range, the number of times of M/B is within the pass range, and the examples correspond to the inventive example. No. 3-23 is an example in which a large amount of the third solid lubricant (black lead in this case) is contained, and the weight% of the metal soap and the alkaline soap with respect to the total solid lubricant is not defined. In these examples, the number of times of M/B does not satisfy the pass criteria, and the example is determined as NG and corresponds to the comparative example. In practice, black lead formed a tape-like product exceeding 20 mm along the groove of the crest, which caused galling.

Examples of Nos. 3-25 to 3-27 are comparative examination examples in which the solvent, the binder resin, and the solid lubricant are common, and the solid lubrication coating film is completely dried by changing the application method and the drying method, and a part of the solid lubrication coating film remains as semi-dried part, and thus the examples correspond to comparative examples. No. 3-25 is an example in which a pipe is coated with a brush while being rotated, and then the pipe is blown and dried while being rotated. In the case of a completely dried film, the number of times of M/B by the weight tong is determined as a pass, and the example corresponds to an inventive example.

Nos. 3-26 and 3-27 are examples in which the same process was performed up to the application as in No. 3-25, but drying was different, and a solid lubrication coating film was formed and is left to dry stationarily. No. 3-26 is an example of complete drying, and No. 3-27 has a feeling that an insufficiently dried portion remains. To be precise, there is a part of a liquid-like coating material that is not completely dried partially between the 5 to 7 o'clock positions. In addition, since the coating material is formed into a film (dried) from a contact surface between the outermost layer (contact surface with the atmosphere) and the threaded steel material, in this case, a semi-dried part remains near the center of the film thickness. This is an example in which drying is performed even on the contact surface between the thread and the coating film. Although the application and drying were performed for the same time, there was a slight variation in the application method, and it is presumed that the application method was affected by the variation, but there was no problem with lubrication, and the examples correspond to inventive examples.

In examples of Nos. 3-28 to Nos.3-32, the influence of the weight ratio of the solvent (here, calculated with a specific gravity of the solvent of 1) and the weight ratio of the solid lubricant/the binder resin with respect to the total weight of the solid lubricant and the binder resin was compared and examined. Both parameters were examined in order of 100-0.6, 150Δ-5.0Δ, 0.7-0.1, 0.5∇-0.08Δ, and 0.6∇-1.1Δ. Further, Δ means exceeding the upper limit of the preferred range, and ∇ means falling short of the lower limit of the preferred range. All the conditions are also inventive examples. The examples which fall within the preferred range are No. 3-28 with 6 times of M/B and No. 3-30 with 10 times of M/B, which indicate a good number of times of M/B. However, the examples which exceed the preferred range only exhibit the lubrication performance with about three times or four times.

Examples of Nos. 3-33 and 3-34 are examples in which another solvent is added to the solvent in addition to water and alcohol and are examples in which dimethyl sulfoxide (DMSO) is added. In the former, when the volume of water is 100, DMSO is added by a ratio of 6 to a base chemical agent containing industrial ethanol by a ratio of 14 in terms of 100 as the volume of water. Accordingly, in the examples, with respect to the total weight of the solvent, a volume composed of water and the lower alcohol is 95%, and a volume of the other solvent is 5%. In this example, the limit value of the solvent composition of the present application is examined. In these examples, a stable polar solvent that is hardly volatilized is contained, and the chemical agent can be dried in about 5 minutes by hot air drying. However, this is an example in which drying is not performed in a defined 5 minutes by air blowing drying in a normal temperature range, and drying cannot be performed in 30 minutes even by undisturbed drying. If the film can be formed, the target lubrication level of the present application can be cleared, and thus the example corresponds to an inventive example.

On the other hand, No. 3-34 is an example in which more DMSO is added, and a solvent containing a large amount of DMSO having a high boiling point (about 190°C) is examined. Therefore, the film is not dried even by being left to dry in the atmosphere and even by air blowing drying (including hot air), and the chemical agent cannot be formed into a film. This can be formed into a film by heat treatment at 200°C or higher. However, since the viscosity of the prepared solvent is low, a film cannot be instantaneously formed during firing treatment, and dripping occurs even during firing. Specifically, a thick film is formed at the 6 o'clock position, and places of filled pin connection bottoms are observed, and dripping further progresses in some places, so that droplet-like film bulges tend to be formed. Therefore, even if the make-up/break-out test is performed, the number of times does not reach the required number of times, and galling occurs. Therefore, the example is determined as NG and corresponds to a comparative example. From these examinations, it is found that a proportion of water and a lower alcohol to the solvent needs to account for 95% or more.

Examples of Nos. 3-35 to 3-39 are examples of a chemical agent obtained by mixing a polymer of diacetone acrylamide (DAAD: one kind of acrylate) and diphenylmethane diisocyanate (MDI: urethane compound) with 40 parts by weight of MDI in terms of 100 parts by weight of acrylate, and the obtained mixture is used as the chemical agent that is applied to a JFELION (trademark) connection having size: 5.5" 23# and a material grade: carbon steel T95. On the box connection side, an electroplating indication film having Cu-Sn binary system is formed on the base under the condition that the "solid lubrication coating film A having a pencil hardness of 3H" is formed. A make-up/break-out test using a weight of 1 ton was performed to determine whether or not the make-up/break-out can be performed, under a condition that a weight equivalent to the make-up at the time of less than three connected pins at the actual well is applied.

No. 3-35 to 3-39 are examples in which a solid lubrication coating film is formed by changing an application method and a drying method. In order, there are five examples of rotation coating-rotation air blowing drying, rotation coating-stationary drying, stationary and hand coating-stationary drying, rotation coating-rotation air blowing drying, and rotation coating-rotation air blowing drying. The number of times of M/B of the weight tong is, in order, ≥10 times (stop at tenth time), ≥ 10 times (stop at tenth time), 9 times, 8 times, and 9 times, all of which are the pass, and the examples correspond to the inventive examples. As compared with the examples of Nos. 3-1 to 3-34, since the make-up torque is small because of the small diameter material, it indicates that the film thickness distribution unevenness is not significantly affected based on manual coating in a stationary state or stationary drying standing or static drying.

The examples of Nos. 3-38 and 3-39 use, as the metal soap, different kinds of metal soaps different from calcium stearate and calcium/zinc stearate (mixed) used in the examples of Nos. 3-1 to 3-37. The former is an example using zinc stearate, and the latter is an example using Ba stearate. In both examples, other conditions are examples that fall within the definition range, and the number of times of M/B falls within a pass range, and thus the examples correspond to an inventive example.

The examples of No. 3-40 to 3-43 are examples in which a copolymer of acrylic acid and polyvinyl acetate is used as the chemical agent which is applied on a JFEBEAR (trademark) connection having a size: 3.5" 9.2# and a material grade: carbon steel T95. Additionally, a chemical agent obtained by mixing 30 parts by weight of polyvinyl acetate in terms of 100 parts by weight of acrylic acid is examined. In the examples, as a condition for using the "solid lubrication coating film A having a pencil hardness of 3H" for the box connection, there is an Mn phosphate chemical conversion film on the base. In addition, the examples include an example of using a pin connection, an example of applying only the chemical agent to both thread surfaces, and an example of including only an Mn phosphate chemical conversion film or the like. A make-up/break-out test using a weight of 500 kg was performed to determine whether or not the make-up/break-out can be performed, and this corresponds to a condition in which a weight equivalent to the make-up at the time of three connected pins at the actual well is applied.

No. 3-40 is the same as the above series of examples and is an example in which a solid lubrication coating film is attached to the pin connection side, and the "solid lubrication coating film A having a pencil hardness of 3H" is formed on the box connection side. Additionally, this is an inventive example in which the number of times of M/B can be ≥ 10 times (stop at tenth time). No. 3-41 is an example in which a solid lubrication coating film is attached to the pin connection side, and the box connection has only an Mn phosphate film without the "solid lubrication coating film A having a pencil hardness of 3H". However, the make-up/break-out can be performed 3 times, and thus the example corresponds to an inventive example.

No. 3-42 is an example in which the solid lubrication coating film of this disclosure is attached to both sides of the thread, and five times of make-up/break-out can be confirmed, and thus the example corresponds to an inventive example. No. 3-43 is an example in which the box connection is coated with a solid lubrication coating film, and the "solid lubrication coating film A having a pencil hardness of 3H" is attached to the pin connection side. The number of times of M/B can be ≥ 10 times (stop at tenth time). This is also an inventive example.

### (Example 4) Result of examination on corrosion

The results are illustrated in Table 13.

**[Table 13]**

| *: Result deviating from definition range | | **: Result deviating from preferable range | | |
|---|---|---|---|---|
| No. | Material | Results of salt water spray | Pass/fail | Note |
| Comparative examples | SPCC (plate material) | Red rust all over surface | Fail | Comparative example |
| 3-1 | L80 | No rust | Pass | Inventive example |
| 3-13 | L80 | No rust | Pass | Inventive example |
| 3-17 | L80 | Rust at two points of remaining mill scale part | Pass | Inventive example |
| 3-20 | L80 | No rust | Pass | Inventive example |
| 3-38 | L80 | Rust at one point of remaining mill scale part | Pass | Inventive example |
| 3-42 | L80 | No rust | Pass | Inventive example |

In the evaluation of corrosion resistance in this disclosure, a protector used for protecting a connection structure was once made up and then broken out with respect to a structure to which a crest structure was attached such as a connection for oil country tubular goods attached to a steel pipe, and then salt water was sprayed to a solid lubrication coating film in a state where the protector was removed. Accordingly, it was determined on the basis of a criterion that a case where red rust appears on the entire surface is evaluated as NG. Evaluation was performed by spraying salt water after damage that could be assumed is applied to the film. Corrosion resistance was examined using some of the materials and conditions examined in Tables 1 to 12.

Further, regarding conditions of spraying salt water, the spraying was performed by a method in accordance with JIS K 5600-7-1, under neutral salt water spraying conditions of 5% NaCl (35°C, humidity 98 to 99%, spray 1 to 2 mL/Hr/80 cm², pH 6.5 to 7.2), and was based on evaluation for 8 hours.

Here, the metal surface (thread surface for oil country tubular goods) of the metal part which is a target by this disclosure includes, for example, a surface subjected to lathe processing or cutting processing, a polished surface, and the like. Further, as the evaluation of corrosion resistance, a part where mill scale remained was removed. Depending on the roundness or eccentricity of a tubular structure, a sample may have the mill scale attached on the crest structure. However, regarding the mill scale, when cleaning or the like is performed before the solid lubrication coating film is formed, a water-based solvent enters minute defects, holes, and portions like scratches of the mill scale. Therefore, when a solid lubrication coating film is formed on the mill scale, even though the solid lubrication coating film is intact, spot rust may occur from the base steel. However, since the spot rust is not the rust of the solid lubrication coating film, the rust is excluded from the evaluation.

The sample Nos. in Table 13 means a chemical agent composition based on the components and configurations used in Tables 1 to 12. Unlike the sample Nos., the application method is an example in which the coating is performed with a brush while rotating a pipe, and the drying method is an example in which the drying is performed by rotating, air blowing, and drying, and complete drying is performed. In addition, these are all examples in which the materials were examined while being aligned with Pin connections (male threads) of L80, 3.5" 9.2# JFELION (trademark). Accordingly, after complete drying, a protector made of HDPE resin (made of high density polyethylene) was once made up and broken out, and a salt water spray test was performed. As a comparative material, SPCC materials of general-purpose thin steel sheets were put, and those obtained by applying the chemical agents of Nos. 3-1, 3-13, 3-17, 3-20, 3-38, and 3-42 to pin connections were prepared and tested. However, the SPCC of the comparative material is not coated with the rust preventive oil and does not undergo the test corresponding to one break-out/break-out of the protector.

As a result, it is clear that all of those coated with the chemical agent of this disclosure are good in corrosion resistance.

### (Other examples)

This disclosure can also have the following configurations.
(1) There is provided a chemical agent for forming a solid lubrication coating film on a metal surface, the chemical agent including:
   as main components, a solid lubricant; a binder resin; and a solvent, in which
   the solvent contains water as a main component and a lower alcohol having three or fewer carbon atoms which is added as an additive to the water, and the additive has a volume of 0.5 or more and 45 or less in terms of 100 set as a volume of the water-containing solvent,
   95% or more of a volume of the solvent is composed of the water and the additive,
   as the solid lubricant, a soap component containing at least a metal soap from metal soap and alkaline soap components is contained, and a metal soap component accounts for 95% or more of a sum of total weights of the metal soap and alkaline soap components,
   a condition that a particle size of the metal soap does not exceed a film thickness of the solid lubrication coating film is set, and
   the binder resin is composed of a water-soluble or water-dispersible polymer and a copolymer, and a polymer having an acrylate or methacrylate structure and the copolymer account for 90% or more of a total weight of the binder resin.
(2) As the additive, at least one of ammonia water and a primary amine is further contained.
(3) The lower alcohol is composed of one or two or more lower alcohols selected from methanol, ethanol, isopropyl alcohol, normal propyl alcohol, and industrial ethanol, and a volume of the lower alcohol is 0.5 or more in terms of 100 set as the volume of the water-containing solvent.
(4) The metal soap and alkaline soap components constituting the solid lubricant include one or two or more kinds of soaps which are compounds composed of a fatty acid selected from the following A group and a metal element selected from the following B group, and the weight of the metal soap is 95% or more of the total weight of the metal soaps and the alkaline soaps.
   A group: stearic acid, behenic acid, lauric acid, 12-hydroxystearic acid, oleic acid, montanic acid
   B group: Na, K, Mg, Ca, Zn
(5) The metal soap has a particle size of 10 µm or less.
(6) The water-soluble or water-dispersible polymer constituting the binder resin is a polymer composed of one or more monomers selected from the following (1) to (4), and the copolymer is a copolymer composed of two or more monomers selected from the following (1) to (4).
   (1) Monomers including acrylates, methacrylates and individual derivatives of acrylates and methacrylates, as main components
   (2) Monomers including acrylates and methacrylates, and individual derivatives of acrylates and methacrylates, and alkyl esters, vinyl esters, styrene esters, carboxylic acid esters, and individual derivatives of these esters
   (3) Monomers grafted with respect to the above-described (1) and (2)
   (4) One or both monomers of a vinyl compound and a urethane compound
(7) The chemical agent has a flash point of above 60°C or is flame-retardant.
(8) When a volume of the solvent is converted into a weight, with a specific gravity of the solvent of 1,
   the solvent has a weight of 0.7 times or more and 100 times or less a total weight of the solid lubricant and the binder resin, and
   the solid lubricant has a weight of 0.1 times or more and 1.0 times or less a weight of the binder resin.
(9) The agent has a viscosity of 1,000 mPa·sec or lower.
(10) When the chemical agent is applied to a metal surface in an application amount of 0.1 g/mm2 or less and is left and dried at an ambient temperature in a windless atmospheric environment, the chemical agent has an early drying property enabling drying to be performed within 30 minutes.
(11) When the chemical agent is applied to a metal surface in an application amount of 0.1 g/mm2 or less and is dried by blowing air at 1 m/sec or more at an ambient temperature in an atmospheric environment, the chemical agent has an early drying property enabling drying to be performed within five minutes.
(12) There is provided a method for manufacturing the chemical agent for forming a solid lubrication coating film of this disclosure, the method including:
   formulating the metal soap by dispersing and opacifying the metal soap in the lower alcohol and then adding the metal soap into the water-containing solvent.
(13) There is provided a method for applying the chemical agent for forming a solid lubrication coating film of the disclosure to a surface of a tubular part, the method including:
   applying the chemical agent while the tubular part is rotated around an axis.
(14) There is provided oil country tubular goods including:
   a lubrication coating film having a solid lubrication coating film formed on a thread portion, the solid lubrication coating film is formed by dispersing a solid lubricant in a binder resin,
   as the solid lubricant, a soap component containing at least a metal soap from metal soap and alkaline soap components is contained, and a metal soap component accounts for 95% or more of a sum of total weights of the metal soap and alkaline soap components,
   a condition that a particle size of the metal soap does not exceed a film thickness of the solid lubrication coating film is set, and
   the binder resin is composed of a water-soluble or water-dispersible polymer and a copolymer, and a polymer having an acrylate or methacrylate structure and the copolymer account for 90% or more of a total weight of the binder resin.
(15) The metal soap and alkaline soap components constituting the solid lubricant include one or two or more kinds of soaps which are compounds composed of a fatty acid selected from the following A group and a metal element selected from the following B group, and
   the weight of the metal soap is 95% or more of the total weight of the metal soaps and the alkaline soaps.
   A group: stearic acid, behenic acid, lauric acid, 12-hydroxystearic acid, oleic acid, montanic acid
   B group: Na, K, Mg, Ca, Zn
(16) The metal soap has a particle size of 10 µm or less.
(17) The water-soluble or water-dispersible polymer constituting the binder resin is a polymer composed of one or more monomers selected from the following (1) to (4), and the copolymer is a copolymer composed of two or more monomers selected from the following (1) to (4).
   (1) Monomers including acrylates, methacrylates and individual derivatives of acrylates and methacrylates, as main components
   (2) Monomers including acrylates and methacrylates, and individual derivatives of acrylates and methacrylates, and alkyl esters, vinyl esters, styrene esters, carboxylic acid esters, and individual derivatives of these esters
   (3) Monomers grafted with respect to the above-described (1) and (2)
   (4) One or both monomers of a vinyl compound and a urethane compound
(18) The solid lubrication coating film has a film thickness of 1 µm or more and 100 µm or less and a soft film hardness of H or lower in pencil hardness.
(19) There is provided a threaded joint for oil country tubular goods, the threaded joint connecting a box having a female thread and a pin having a male thread, and
   at least one of the box and the pin as oil country tubular goods is formed of the oil country tubular goods of this disclosure.
(20) There is provided a threaded joint for oil country tubular goods, the threaded joint connecting a box having a female thread and a pin having a male thread,
   one of the box and the pin as oil country tubular goods is formed of the oil country tubular goods of this disclosure, and
   a coating film having a hardness higher than a hardness of the solid lubrication coating film is formed on a thread portion of the other oil country tubular goods.

Here, the entire contents of Japanese Patent Application No. 2022-134375 (filed on August 25, 2022), the priority of which is claimed by the present application, are incorporated herein by reference. Here, the description has been provided with reference to a limited number of embodiments, but the scope of rights is not limited thereto, and modifications of each embodiment based on the above-described disclosure are obvious to those skilled in the art.

### Reference Signs List

- 1: pin
- 1a: thread portion
- 2: box
- 2a: thread portion

## Claims

1. A chemical agent for forming a solid lubrication coating film on a metal surface, the chemical agent comprising: as main components,
a solid lubricant; a binder resin; and a solvent,
wherein the solvent contains water as a main component and a lower alcohol having three or fewer carbon atoms which is added as an additive to the water, and the additive has a volume of 0.5 or more and 45 or less in terms of 100 set as a volume of the water-containing solvent,
wherein 95% or more of a volume of the solvent is composed of the water and the additive,
wherein, as the solid lubricant, a soap component containing at least a metal soap from metal soap and alkaline soap components is contained, and the metal soap component accounts for 95% or more of a sum of total weights of the metal soap and alkaline soap components,
wherein a condition that a particle size of the metal soap does not exceed a film thickness of the solid lubrication coating film is set, and
wherein the binder resin is composed of a water-soluble or water-dispersible polymer and a copolymer, and a polymer having an acrylate or methacrylate structure and the copolymer account for 90% or more of a total weight of the binder resin.

2. The chemical agent for forming a solid lubrication coating film according to claim 1,
wherein, as the additive, at least one of ammonia water and a primary amine is further contained.

3. The chemical agent for forming a solid lubrication coating film according to claim 1 or 2,
wherein the lower alcohol is composed of one or two or more lower alcohols selected from methanol, ethanol, isopropyl alcohol, normal propyl alcohol, and industrial ethanol, and a volume of the lower alcohol is 0.5 or more in terms of 100 set as the volume of the water-containing solvent.

4. The chemical agent for forming a solid lubrication coating film according to any one of claims 1 to 3,
wherein the metal soap and alkaline soap components constituting the solid lubricant include one or two or more kinds of soaps which are compounds composed of a fatty acid selected from the following A group and a metal element selected from the following B group,
wherein the weight of the metal soap is 95% or more of the total weight of the metal soaps and the alkaline soaps,
and wherein:
- A group: stearic acid, behenic acid, lauric acid, 12-hydroxystearic acid, oleic acid, montanic acid;
- B group: Na, K, Mg, Ca, Zn.

5. The chemical agent for forming a solid lubrication coating film according to any one of claims 1 to 4,
wherein the metal soap has a particle size of 10 µm or less.

6. The chemical agent for forming a solid lubrication coating film according to any one of claims 1 to 5,
wherein the water-soluble or water-dispersible polymer constituting the binder resin is a polymer composed of one or more monomers selected from the following (1) to (4), and the copolymer is a copolymer composed of two or more monomers selected from the following (1) to (4),
and wherein:
- (1) Monomers including acrylates, methacrylates and individual derivatives of acrylates and methacrylates, as main components;
- (2) Monomers including acrylates and methacrylates, and individual derivatives of acrylates and methacrylates, and alkyl esters, vinyl esters, styrene esters, carboxylic acid esters, and individual derivatives of these esters;
- (3) Monomers grafted with respect to the monomers of (1) and (2);
- (4) One or both monomers of a vinyl compound and a urethane compound.

7. The chemical agent for forming a solid lubrication coating film according to any one of claims 1 to 6,
wherein the chemical agent has a flash point of above 60°C or is flame-retardant.

8. The chemical agent for forming a solid lubrication coating film according to any one of claims 1 to 7,
wherein, when a volume of the solvent is converted into a weight, with a specific gravity of the solvent of 1,
the solvent has a weight of 0.7 times or more and 100 times or less a total weight of the solid lubricant and the binder resin, and
the solid lubricant has a weight of 0.1 times or more and 1.0 times or less a weight of the binder resin.

9. The chemical agent for forming a solid lubrication coating film according to any one of claims 1 to 8, wherein the chemical agent has a viscosity of 1,000 mPa·sec or lower.

10. The chemical agent for forming a solid lubrication coating film according to any one of claims 1 to 9, wherein, when the chemical agent is applied to a metal surface in an application amount of 0.1 g/mm² or less and is left and dried at an ambient temperature in a windless atmospheric environment, the chemical agent has an early drying property enabling drying to be performed within 30 minutes.

11. The chemical agent for forming a solid lubrication coating film according to any one of claims 1 to 10, wherein, when the chemical agent is applied to a metal surface in an application amount of 0.1 g/mm² or less and is dried by blowing air at 1 m/sec or more at an ambient temperature in an atmospheric environment, the chemical agent has an early drying property enabling drying to be performed within five minutes.

12. A method for manufacturing the chemical agent for forming a solid lubrication coating film according to any one of claims 1 to 11, the method comprising:
formulating the metal soap by dispersing and opacifying the metal soap in the lower alcohol and then adding the metal soap into the water-containing the solvent.

13. A method for applying the chemical agent for forming a solid lubrication coating film according to any one of claims 1 to 11 to a surface of a tubular part, the method comprising:
applying the chemical agent while the tubular part is rotated around an axis.

14. Oil country tubular goods comprising:
a lubrication coating film having a solid lubrication coating film formed on a thread portion,
wherein the solid lubrication coating film is formed by dispersing a solid lubricant in a binder resin,
wherein, as the solid lubricant, a soap component containing at least a metal soap from metal soap and alkaline soap components is contained, and a metal soap component accounts for 95% or more of a sum of total weights of the metal soap and alkaline soap components,
wherein a condition that a particle size of the metal soap does not exceed a film thickness of the solid lubrication coating film is set, and
wherein the binder resin is composed of a water-soluble or water-dispersible polymer and a copolymer, and a polymer having an acrylate or methacrylate structure and the copolymer account for 90% or more of a total weight of the binder resin.

15. The oil country tubular goods according to claim 14,
wherein the metal soap and alkaline soap components constituting the solid lubricant include one or two or more kinds of soaps which are compounds composed of a fatty acid selected from the following A group and a metal element selected from the following B group, and
wherein the weight of the metal soap is 95% or more of the total weight of the metal soaps and the alkaline soaps,
and wherein:
- A group: stearic acid, behenic acid, lauric acid, 12-hydroxystearic acid, oleic acid, montanic acid;
- B group: Na, K, Mg, Ca, Zn.

16. The oil country tubular goods according to claim 14 or 15,
wherein the metal soap has a particle size of 10 µm or less.

17. The oil country tubular goods according to any one of claims 14 or 16,
wherein the water-soluble or water-dispersible polymer constituting the binder resin is a polymer composed of one or more monomers selected from the following (1) to (4), and the copolymer is a copolymer composed of two or more monomers selected from the following (1) to (4),
and wherein:
- (1) Monomers including acrylates, methacrylates and individual derivatives of acrylates and methacrylates, as main components;
- (2) Monomers including acrylates and methacrylates, and individual derivatives of acrylates and methacrylates, and alkyl esters, vinyl esters, styrene esters, carboxylic acid esters, and individual derivatives of these esters;
- (3) Monomers grafted with respect to the monomers of (1) and (2);
- (4) One or both monomers of a vinyl compound and a urethane compound.

18. The oil country tubular goods according to any one of claims 14 to 17,
wherein the solid lubrication coating film has a film thickness of 1 µm or more and 100 µm or less and a soft film hardness of H or lower in pencil hardness.

19. A threaded joint for oil country tubular goods, the threaded joint connecting a box having a female thread and a pin having a male thread,
wherein at least one of the box and the pin as oil country tubular goods is formed of the oil country tubular goods according to any one of claims 14 to 18.

20. A threaded joint for oil country tubular goods, the threaded joint connecting a box having a female thread and a pin having a male thread,
wherein one of the box and the pin as oil country tubular goods is formed of the oil country tubular goods according to any one of claims 14 to 18, and
wherein a coating film having a hardness higher than a hardness of the solid lubrication coating film is formed on a thread portion of the other oil country tubular goods.
